# EUROPEAN PATENT SPECIFICATION

(11) **EP 2 068 525 B1**
(45) Date of publication and mention of the grant of the patent: **09.04.2014**
(21) Application number: 08253435.5
(22) Date of filing: 22.10.2008
(51) Int. Cl.: H04L 29/06, H04W 12/12

(54) **Method and system for providing wireless vulnerability management for local area computer networks**
Verfahren und System zur Bereitstellung der Drahtlosverletzbarkeitsverwaltung für lokale Bereichsnetzwerke
Procédé et système pour la fourniture de gestion de vulnérabilité sans fil pour réseaux informatiques locaux

(30) Priority: 06.11.2007 US 985652 P; 11.12.2007 US 954007; 14.12.2007 US 956357; 07.04.2008 US 42790 P; 08.04.2008 US 43147 P
(43) Date of publication of application: 10.06.2009
(73) Proprietor: Airtight Networks, Inc., Mountain View, CA 94043 (US)
(72) Inventor: Palnitkar, Samir, Ashburn, CA 20148 (US); Bhagwat, Vivek, Aundh, 411007 Pune (IN); King, David C., Menlo Park, CA 94025 (US)
(74) Representative: Clark, Jane Anne

(56) References cited:
- US-A1- 2004 008 652
- "A Distributed Vulnerability Detection System for WLANs", WIRELESS INTERNET, 2005. PROCEEDINGS. FIRST INTERNATIONAL CONFERENCE O N BUDAPEST, HUNGARY 10-15 JULY 2005, PISCATAWAY, NJ, USA,IEEE, 10 July 2005 (2005-07-10), pages 86-93, XP010836743, ISBN: 978-0-7695-2382-8

## Description

### BACKGROUND OF THE INVENTION

The present invention relates generally to wireless computer networking techniques. More particularly, the invention provides a method and a system for providing wireless vulnerability management for local area computer networks according to a specific embodiment. Merely by way of example, the invention has been applied to a computer networking environment based upon the IEEE 802.11 family of standards, commonly called "WiFi." But it would be recognized that the invention has a much broader range of applicability. For example, the invention can be applied to Ultra Wide Band ("UWB"), IEEE 802.16 commonly known as "WiMAX", Bluetooth, and others.

Computer systems proliferated from academic and specialized science applications to day to day business, commerce, information distribution, and home applications. Such systems include personal computers, which are often called "PCs" for short, to large mainframe and server class computers. Powerful mainframe and server class computers run specialized applications for banks, small and large companies, e-commerce vendors, and governments. Smaller personal computers can be found in many if not all offices, homes, and even local coffee shops. These computers interconnect with each other through computer communication networks based on packet switching technology such as the Internet protocol (IP). The computer systems located within a specific local geographic region such as office, home, retail outlet, or other indoor and outdoor premises interconnect using a Local Area Network, commonly called, LAN. Ethernet is by far the most popular networking technology for LANs. The LANs interconnect with each other using a Wide Area Network called "WAN" such as the famous Internet. The LANs are typically coupled to the Internet through firewalls. The LANs are typically considered as private networks, while the Internet is considered as a public network. Although much progress occurred with computers and networking, we now face a variety of security threats on many computing environments from the hackers connecting to the computer network in an unauthorized fashion. The application of wireless communication to computer networking further accentuates these threats.

As merely an example, the conventional LAN is usually deployed using an Ethernet based infrastructure comprising cables, hubs switches, and other elements. A number of connection ports (e.g., Ethernet ports) are used to couple various computer systems to the LAN. A user can connect to the LAN by physically attaching a computing device such as laptop, desktop or handheld computer to one of the connection ports using physical wires or cables. Other computer systems such as database computers, server computers, routers and Internet gateways also connect to the LAN to provide specific functionalities and services. Once physically connected to the LAN, the user often accesses a variety of services such as file transfer, remote login, email, word wide web, database access, and voice over IP. Security of the LAN often occurs by controlling access to the physical space where the LAN connection ports are located.

Although conventional wired networks using Ethernet technology proliferated, wireless communication technologies are increasing in popularity. That is, wireless communication technologies wirelessly connect users to the computer communication networks. A typical application of these technologies provides wireless access to the local area network in the office, home, public hot-spots, and other geographical locations. As merely an example, the IEEE 802.11 family of standards, commonly called WiFi, is the common standard for such wireless application. Among WiFi, the 802.11 b standard-based WiFi often operates at 2.4 GHz unlicensed radio frequency spectrum and can offer wireless connectivity at speeds up to 11 Mbps. The 802.11 g compliant WiFi can offer even faster connectivity up to 54 Mbps and can operate at 2.4 GHz unlicensed radio frequency spectrum. The 802.11a can provide speeds up to 54 Mbps operating in the 5 GHz unlicensed radio frequency spectrum. The 802.11 n can provide speeds up to 600 Mbps using techniques such as channel bonding and MIMO (multiple input multiple output). The WiFi enables a quick and effective way of providing wireless extension to the conventional wired LAN.

In order to provide wireless extension of the LAN using WiFi, one or more WiFi access points (APs) connect to the LAN connection ports either directly or through intermediate equipment such as WiFi switch. A user now wirelessly connects to the LAN using a device equipped with WiFi radio, commonly called wireless station, wireless client, or simply station or client, which communicates with the AP. The connection is free from cable and other physical encumbrances and allows the user to "Surf the Web", check e-mail or use enterprise computer applications in an easy and efficient manner. Unfortunately, certain limitations still exist with WiFi. That is, the radio waves often cannot be contained in the physical space bounded by physical structures such as the walls of a building. Hence, wireless signals often spill outside the area of interest. Unauthorized users can wirelessly connect to the AP and hence gain access to the LAN from the spillage areas such as the street, parking lot, and neighbor's premises. Consequently, the conventional security measure of controlling access to the physical space where the LAN connection ports are located is now inadequate.

In order to prevent unauthorized access to the LAN over WiFi, the AP can employ certain techniques. For example, the user is required to carry out authentication handshake with the AP (or a WiFi switch that resides between the AP and the LAN) before being able to connect to the LAN. Examples of such handshake are Wireless Equivalent Privacy (WEP) based shared key authentication, 802.1x based port access control, 802.11i based authentication etc. The AP can provide additional security measures such as encryption, firewall, and station MAC address based access control. Other techniques also exist to enhance security of the LAN over WiFi.

Despite these measures, many limitations still exist with WiFi. Hackers are increasingly exploiting these limitations as a way to attack the LANs of the organizations. As merely an example, as recently reported in the Wall Street Journal (see "Breaking The Code: How Credit-Card Data Went Out Wireless Door", The Wall Street Journal, May 4th, 2007), wireless communications were used to steal 45.7 million credit and debit card numbers from the LAN of the TJX Cos. of Framingham, MA. It is also reported that the TJX's breach-related bill could surpass $1 billion over five years. As another example, the organizations often fail security audits on grounds of wireless vulnerabilities. Many of these organizations are also required to be compliant with regulatory standards such as PCI-DSS (Payment Card Industry Data Security Standard), HIPAA (Healthcare Insurance Portability and Accountability Act) etc. Failure of security audits can attract monetary and statutory penalties.

Appropriate security mechanisms are thus needed to protect the LAN resources from wireless intruders. Accordingly, techniques for improving security for local area network environments are highly desirable.

US 2004/0008652 describes a wireless network sensor which includes a system data store capable of storing a variety of data associated with a wireless computer network and communication(s) transmitted thereon, a communication interface supporting at least reception of wireless communication(s) over the wireless computer network and a system processor. Data is extracted into one or more logical units or frames according to the protocol of the wireless network from signal received by the communication interface. This extracted data is inspected and stored. In some embodiments, the stored data is aggregated with information subsequently derived from further received signals. The stored data can be locally or remotely analyzed to generate a security rating which can be forwarded to either a user or a further data processing system.

The present invention is set out in the appended claims.

Described herein are wireless computer networking techniques. More particularly, described herein are a method and a system for providing wireless vulnerability management for local area computer networks. Merely by way of example, the invention has been applied to a computer networking environment based upon the IEEE 802.11 family of standards, commonly called "WiFi." But it would be recognized that the invention has a much broader range of applicability. For example, the invention can be applied to Ultra Wide Band ("UWB"), IEEE 802.16 commonly known as "WiMAX", Bluetooth, and others.

Described herein is the provision wireless vulnerability management as Software-as-a-Service (SaaS). Wireless vulnerability management for local area computer networks is provided as a hosted service. Customer entities subscribing for wireless vulnerability management service are provided with a service provider entity. The service provider entity can host and operate a wireless vulnerability management server. The customer entities deploy sniffers supplied by the service provider entity on their premises. The sniffers monitor wireless activity and report the associated information to the server. Each of the customer entities can customize the processing of the information reported by its sniffers. The customers can pay for the wireless vulnerability management based upon their usage of various wireless vulnerability management features.

According to a specific embodiment, a Software as a Service (SaaS) based method is provided for providing wireless vulnerability management for local area computer networks. The method includes providing a security server. The security server can be hosted by a service provider entity. Moreover, the security server is coupled to the Internet and is adapted to provide analysis of data associated with wireless vulnerability management for a plurality of local area computer networks of a plurality of customer entities, respectively. For example, the customer entity can be retail organization, hospital, financial institution, educational institution, defense organization, federal institution, or any other organization which uses a local area network to conduct its business and desires to protect its local area network from wireless vulnerabilities. The local area network (e.g., private network) of the customer entity is coupled to the Internet through a customer side firewall. In an embodiment, the service provider entity can be a business entity separate from the customer entity. Examples of the service provider entity include among others managed service provider (MSP), application service provider (ASP), remote network management provider, auditor, penetration tester and like. The security server can be coupled to a local area network of the service provider entity. The local area network of the service provider entity can be coupled to the Internet through a service provider side firewall. In an embodiment, the security server can comprise one or more interconnected computers.

The method also includes creating a workspace for wireless vulnerability management for a customer entity on the security server. In an embodiment, the creating the workspace is responsive to a request from the customer entity to subscribe to wireless vulnerability management service. The method includes receiving configuration information associated with the workspace for the customer entity at the security server.

Moreover, the method includes supplying one or more sniffers to the customer entity. In an embodiment, at least one of the one or more sniffers is a sniffer device and the supplying the one or more sniffers includes shipping the sniffer device to the customer entity. In an alternative embodiment, at least one of the one or more sniffers is a software adapted to perform sniffer functionality. In this embodiment, the supplying the one or more sniffers includes making the sniffer software available to the customer entity for downloading (e.g., downloading over the Internet).

The method includes deploying the one or more sniffers at premises of the customer entity, and subsequently receiving connection requests at the security server over the Internet from the one or more sniffers. The method also includes associating identities of the one or more sniffers with the workspace for the customer entity at the security server. The one or more sniffers scan radio channels and collect information associated with wireless activity observed on those radio channels. The method includes receiving at the security server information associated with wireless activity monitored by the one or more sniffers at the premises of the customer entity. The information is received from the one or more sniffers over the Internet. Moreover, the method includes processing the received information associated with the wireless activity within the workspace for the customer entity using the security server and metering usage of the workspace for wireless vulnerability management for the customer entity. In an embodiment, a level of subscription (e.g., trial, paid, partially paid) etc. may be associated with the workspace. In an embodiment, the metering can include tracking or accounting the usage of the workspace. In an alternative embodiment, the metering can include charging the customer entity for the usage of the workspace. Yet alternatively, the metering can include charging the customer entity for the usage of the workspace based at least upon the tracked or accounted usage of the workspace.

In an embodiment of the present invention, wireless vulnerability management is provided for the plurality of local area computer networks of the plurality of customer entities, respectively, in a substantially concurrent manner.

According to an alternative specific embodiment, a server system comprising one or more interconnected computers is provided. The one or more interconnected computers are adapted to provide wireless vulnerability management based upon Software as a Service (SaaS) for a plurality of private computer networks of a plurality of customer entities, respectively. These computers are programmed to execute the step of receiving information associated with wireless activity from a plurality of sets of sniffers over the Internet. These plurality of sets of sniffers are positioned within premises of the plurality of customer entities, respectively, in a preferred embodiment. The computers are also programmed to execute the step of maintaining a plurality of workspaces for wireless vulnerability management for the plurality of customer entities, respectively. They are programmed to execute the step of identifying a plurality of portions of the received information that are associated with the plurality of customer entities, respectively. The computers are programmed to execute the step of processing the plurality of portions within the plurality of workspaces, respectively. They are also programmed to execute the steps of metering usages of the plurality of workspaces and generating billing data for the plurality of customer entities based at least upon the metering.

According to yet an alternative specific embodiment, a Software-as-a-Service (SaaS) based method is provided for availing wireless vulnerability management for local area computer network. The method includes generating a request for wireless vulnerability management for a local area network of a customer entity and receiving login information associated with a workspace for the customer entity. In this embodiment, the workspace is created on a security server to provide wireless vulnerability management for the local area network of the customer entity. Moreover, the security server can be hosted by a service provider entity. The security server is coupled to the Internet and is adapted to provide analysis of data associated with wireless vulnerability management for a plurality of local area computer networks of a plurality of customer entities, respectively.

The method includes providing configuration information associated with the workspace for the customer entity to the security server. The method also includes receiving one or more sniffers at premises of the first customer entity and connecting the one or more sniffers to the local area network of the first customer entity. Moreover, the method includes generating connection requests to the security server over the Internet from the one or more sniffers, respectively, subsequent to the one or more sniffers being connected to the local area network of the first customer entity. The method includes transferring identity information from the one or more sniffers to the security server. This identity information can be used to associate the one or more sniffers with the workspace for the first customer entity.

The method also includes sending to the security server information associated with wireless activity monitored by the one or more sniffers at the premises of the first customer entity. The information is sent from the one or more sniffers to the security server over the Internet. The method includes receiving results from processing of the sent information associated with the wireless activity. The processing is performed using the security server and is performed within the workspace for the customer entity. Depending upon embodiment, the results can include alerts (alarms), reports, displayed information etc. The method includes generating payment authorization based at least upon usage of the workspace for the customer entity.

According to a further alternative specific embodiment, a server computer adapted to provide wireless vulnerability management as Software-as-a-Service (SaaS) for a plurality of private computer networks of a plurality of customer entities, respectively, is provided. The server computer comprises a memory unit storing computer executable instructions and a processor unit for executing the computer executable instructions. Moreover, the server computer comprises a communication interface for coupling the server computer to a computer network. The computer executable instructions are adapted to perform the step of receiving information associated with wireless activity using the communication interface from a plurality of sets of sniffers over the Internet, the plurality of sets of sniffers being positioned within premises of the plurality of customer entities, respectively. The computer executable instructions are also adapted to perform the step of maintaining a plurality of workspaces for wireless vulnerability management within the memory unit for the plurality of customer entities, respectively. The instructions are adapted to perform the steps of identifying a plurality of portions of the received information that are associated with the plurality of customer entities, respectively, and processing the plurality of portions using the processor unit in accordance with the plurality of workspaces, respectively. The server computer is also provided with a power adapter for coupling the server computer to a source of power. Preferably, the processor unit, the memory unit, the communication interface, and the power adapter are provided within a single enclosure.

Various advantages and/or benefits may be achieved from various embodiments of the present invention. The present invention advantageously provides for the security server to be hosted by a service provider entity, which is separate from a customer entity which owns/operates/uses the LAN for which wireless vulnerability management is desirable. The security server can be often geographically remote to the customer premises. Advantageously, the present invention provides for the expensive security server resources to be shared across a plurality of customer entities. The method and system according to the present invention can reduce overhead of deployment and operation of the wireless vulnerability management system for the customer entities. By providing for subscription based model for wireless vulnerability management, entry cost is reduced for the customer entities. The techniques according to present invention can also facilitate for the customer entities starting small with wireless vulnerability management and then grow as the budgets become available. An embodiment of the present invention also facilitates the customer entities to customize their workspace per their security needs, compliance requirements, budgets etc. These features make wireless vulnerability management affordable and feasible for customer entities. This in turn can reduce occurrences of security breaches and audit failures for the customer entities. For example, the technique can prevent theft of credit card data, social security number data etc. from the LANs of the customer entities. In an embodiment, the system and the method according to the present invention can be implemented using "Web 2.0" framework, and thus provide benefits associated with the Web 2.0 framework.

The present invention can provide additional benefits and advantages of trending and benchmarking of wireless vulnerabilities for local area computer networks. The security server can process wireless activity information received from customer entities to arrive at a variety of trending and benchmarking parameters, including but not limited to, wireless vulnerability trends across customer entities, wireless vulnerability trends for selected industry verticals, comparison of wireless vulnerability score or posture of a customer entity with other customer entities, comparison of wireless vulnerability score or posture of a customer entity with wireless vulnerability trend or benchmark in a selected industry vertical, comparison of wireless vulnerability score or posture of a customer entity with wireless vulnerability benchmark mandated by industry/regulatory standards, and correlation between wireless vulnerability trends and security breaches.

These and various other objects, features and advantages of the present invention can be more fully appreciated with reference to the detailed description and accompanying drawings that follow.

### BRIEF DESCRIPTION OF THE DRAWINGS

Embodiments of the invention are illustrated in the figures of the accompanying drawings. These figures are merely examples which should not unduly limit the scope of the invention herein. Persons of ordinary skill in the art can contemplate many alternatives, variations and modifications within the scope of the invention herein.
Figure 1A illustrates an exemplary conventional WIDS/WIPS system configuration for wireless security for local area computer networks.
Figure 1 B illustrates an exemplary SaaS (Software-as-a-Service) system configuration for wireless vulnerability management for local area computer networks according to an embodiment of the present invention.
Figure 2 illustrates an exemplary logical flow of steps in a method for wireless vulnerability management for local area computer networks according to an embodiment of the present invention.
Figure 3A illustrates an exemplary computer screenshot to facilitate inputting information associated with authorized wireless network according to an embodiment of the present invention.
Figure 3B illustrates another exemplary computer screenshot to facilitate inputting information associated with authorized wireless network according to an embodiment of the present invention.
Figure 4A illustrates an exemplary computer screenshot to facilitate inputting information associated with intrusion prevention configuration according to an embodiment of the present invention.
Figure 4B illustrates an exemplary computer screenshot to facilitate inputting information associated with notification preferences according to an embodiment of the present invention.
Figure 4C illustrates an exemplary computer screenshot to facilitate inputting information associated with wireless vulnerability reports to be generated according to an embodiment of the present invention.
Figure 4D illustrates another exemplary computer screenshot to facilitate inputting information associated with wireless vulnerability reports to be generated according to an embodiment of the present invention.
Figure 4E illustrates an exemplary computer screenshot to facilitate inputting physical location information associated with customer site according to an embodiment of the present invention.
Figure 5 illustrates an exemplary computer screenshot to display wireless activity information according to an embodiment of the present invention.
Figure 6 illustrates an exemplary schematic diagram of sniffer device according to an embodiment of the present invention.
Figure 7 illustrates an exemplary schematic diagram of security server system according to an embodiment of the present invention.
Figure 8 illustrates an exemplary logical flow of steps in a method for certain wireless intrusion detection and prevention according to an embodiment of the present invention.
Figure 9 illustrates an exemplary logical flow of steps in a certain method for maintaining list of active access points according to an embodiment of the present invention.
Figure 10 illustrates an exemplary logical flow of steps in a certain method for protecting WEP communications according to an embodiment of the present invention.
Figure 11 illustrates an exemplary logical flow of steps in a certain method for detecting MAC address spoofing according to an embodiment of the present invention.
Figure 12 illustrates an exemplary logical flow of steps in a method for detecting certain denial of service attack according to an embodiment of the present invention.
Figure 13A illustrates an exemplary logical flow of steps in a method for RF visualization for sniffer coverage according to an embodiment of the present invention.
Figure 13B illustrates an exemplary computer screenshot displaying sniffer coverage according to an embodiment of the present invention.
Figure 14A illustrates an exemplary trending and benchmarking report according to an embodiment of the present invention.
Figure 14B illustrates an exemplary trending and benchmarking report according to another embodiment of the present invention.
Figure 15 illustrates an exemplary schematic of data processing for trending and benchmarking report.
Figure 16 shows schematic of an exemplary wireless client system including client software module for wireless security monitoring according to an embodiment of the present invention.
Figure 17 shows schematic of wireless vulnerability management system including client software modules installed on wireless clients and hosted security server according to an embodiment of the present invention.
Figure 18 shows an exemplary computer screenshot for specifying wireless security policy in a client security management module according to an embodiment of the present invention.
Figures 19, 20, 21, 22A, 22B, 23A, 22B, 24A, 24B, 24C show exemplary computer screenshots in a client security management module according to embodiments on the present invention.

### DESCRIPTION OF THE SPECIFIC EMBODIMENTS

Wireless devices have become ubiquitous and easily available. As merely an example, these include wireless devices using IEEE 802.11 family of standards (commonly referred to as "WiFi"). The WiFi devices can include WiFi Access Points (APs) as well as client devices such as laptops with wireless connectivity, wireless handheld scanners, mobile phones etc. These devices have become all too commonplace - in and around homes, coffee shops, public and municipal areas, and business premises of typical organizations which often include private networks (e.g., local area networks (LANs)) of those organizations.

Hackers are increasingly using wireless communication as a way to attack the LANs of the organizations. As merely an example, as recently reported in the Wall Street Journal, wireless communications were used to steal 45.7 million credit and debit card numbers from the LAN of the TJX Cos. of Framingham, MA. It is also reported that the TJX's breach-related bill could surpass $1 billion over five years.

Proliferation of wireless communication creates a variety of vulnerabilities for the LAN. Examples of these vulnerabilities include, but not limited to:

Unmanaged APs: Unmanaged AP can be an AP that is installed on the LAN of the organization by unassuming or malicious employee without the knowledge of the owner/administrator of the network. Such an AP may not employ the right security controls and can provide a way for hackers to access the LAN in an unauthorized manner.

Outdated Security Controls: Wireless devices that use outdated or weak security controls provide avenues for hackers to get into the LAN in an unauthorized manner. They can also enable hackers to eavesdrop on the wireless communication in the LAN. As merely an example, a wireless encryption technique called WEP (Wired Equivalent Privacy) is a weak form of encryption and it can be evaded by hackers using software tools that are openly available. Examples include aircrack, aircrack-ptw etc. Use of WEP for wireless communication in the LAN can provide a way for hackers to access the LAN in an unauthorized manner. For example, the hacker can recover the secret key used in WEP encryption using these and other hacking tools and use it to obtain access to the LAN. The hacker can also eavesdrop on wireless communication in the LAN using this key.

Unauthorized Wireless Connections: Stations with built-in wireless communications capability (e.g., laptops using Centrino technology from Intel Corporation of Santa Clara, CA) can engage in unauthorized wireless connections, either accidentally or maliciously. For example, the WiFi radios in the stations are often configured to connect to the AP with strongest signal strength. In a typical downtown environment for example, wireless signals from a fairly large number of APs in the vicinity (e.g., in neighbor's LANs, in municipal WiFi, in coffee shops etc.) can be detected by the station with built-in WiFi radio. It is likely that the signal strength from the neighboring AP is stronger than the signal strength from the authorized AP in the organization' LAN (e.g., if the station is near the boundary of the organization premises). The station can thus connect to these neighboring external APs. This creates security vulnerability.

Man-in-the-Middle Attacks: Certain connection behavior of WiFi stations can be exploited to lure them away from legitimate connections and into making connections with malicious APs. As merely an example, a honeypot AP can lure WiFi stations into connecting to it and then exploit the station via variety of attacks including Man-in-the-Middle attack. Hacking tools such as KARMA, delegated, Airsnarf are available to execute honeypot attack. The attacker AP can also use a MAC spoofing process to lure stations into connecting to it.

Ad-hoc Connections: The WiFi provides certain mode of communication in which stations can form wireless connections among themselves, e.g., without having to go through an AP. Such connections are undesirable as typically security controls on legitimate wireless communications are exercised by the AP. The ad-hoc connections can bypass these security controls exposing the stations and data therein to exploitation by hackers.

DOS (denial of service) Attacks: Attackers can disrupt operation of wireless network by transmitting certain wireless signals from vicinity of the wireless network. Moreover, attackers can use techniques such as high gain antennas and directional antennas to increase the range and/or potency of the transmitted attack signals. In certain DOS attacks, the attacker transmits certain specially crafted 802.11 frames (e.g., spoofed deauthentication frames, spoofed disassociation frames, frames with large values for NAV (network allocation vector) fields in them etc.) to disrupt the legitimate WiFi communication. The disruption of wireless network is undesirable, in particular, when the wireless network supports mission critical applications such as voice, telemetry, patient monitoring etc. Certain details about DOS attacks can be found in a paper by Bellardo and Savage, entitled "802.11 Denial of Service Attacks: Real Vulnerabilities and Practical Solutions", 12th USENIX Security Symposium, August 2003; which is hereby incorporated by reference herein.

The vulnerabilities described herein are for illustrative purposes only and do not limit the scope of the present invention. These and other vulnerabilities put the LANs at risk from attackers who use wireless communications as a way to get into the LAN and/or legitimate wireless devices associated with the LAN. As merely an example, a retailer organization's LAN can comprise of computers that store credit card information. Attacks launched using wireless communications can put the retailer at risk of credit card information theft. Moreover, the retailer may be required to comply with data security guidelines of the PCI-DSS and the wireless vulnerabilities may make the retailer's LAN non-compliant with the PCI-DSS.

As another example, a hospital LAN can comprise of computers that store patient health and insurance data. Attacks launched using wireless networks can put the hospital at risk of theft of private information about patients. The wireless vulnerabilities may in addition put the hospital at risk of violating HIPAA and thus attracting legal penalties.

As a further example, a bank's or financial institution's LAN can comprise of computers that store customers' financial information. Attacks launched using wireless networks can put the bank at risk of theft of private information of customers, modification of bank records, and can even put the bank at risk of security audit failure and legal penalties associated with it. Certain organizations are required to comply with regulatory requirements such as GLB (Gramm Leach Bliley) Act and SOX (Sarbanes Oxley) Act and wireless vulnerabilities can make them non-compliant with these regulatory requirements.

Thus there is a need for techniques that can address the issues described above and throughout the present specification arising out of wireless communications related vulnerabilities.

Conventionally, certain techniques are available for vulnerability scanning of LANs. In one technique, vulnerability scanning vendors can scan the LAN from the Internet to detect vulnerabilities in the LAN. For example, the organization's LAN is connected to the Internet using a gateway and/or a firewall. The gateway and/or the firewall typically has an IP address (e.g., public IP address) using which it connects to the Internet. For performing the vulnerability scanning, the IP address of the gateway is provided to the scanning vendor. The scanning vendor maintains an inventory of vulnerability scanning tools which are then launched targeted to the IP address provided above. That is, this technique can scan the public Internet facing interface of the LAN. Examples of the scanning tools in the inventory can include Nessus, GFI LANguard, Retina Network Security scanner, SAINT, nmap etc. Subsequent to the vulnerability scanning, a report containing results (e.g., any open ports detected, any private device in the LAN detected as accessible from the Internet, any misconfigurations on the firewall detected etc.) is provided to the customer (e.g., owner/operator of the LAN of the organization).

In certain another conventional technique for vulnerability scanning of LANs, the scanning vendors can install certain devices on the LAN. These devices can take form of a network appliance that can be plugged into the customer's LAN (e.g., using Ethernet connection). The network appliance can be configured to scan the LAN for operating system vulnerabilities (e.g., missing security patches), misconfigurations etc. on the PCs and servers connected to the LAN. The vulnerabilities detected can be presented in the form of report. The report may contain pointers to URLs on the Internet which provide further details about the detected vulnerabilities and remedies such as software upgrade.

In yet another conventional technique, radio channels are scanned in vicinity of the LAN using certain handheld tools. The handheld tool can take the form of a software running on a laptop or a PDA equipped with WiFi radio. The software can capture wireless traffic (e.g., 802.11 frames transmitted on various radio channels). It can present information about the captured traffic on a display screen, can store it in a file, and/or print it. The displayed information can include visible wireless devices (APs, clients etc.), their operating channels and security settings, radio signal strengths received from the wireless devices, connections among the wireless devices etc. Certain reports can be generated based on the information collected and/or displayed. This technique is also called as walk-around survey. For example, Laptop Analyzer and Handheld Analyzer provided by AirMagnet Inc. of Sunnyvale, CA can be used as handheld tools for walk-around surveys.

In another conventional technique, wireless sensor devices are provided spatially dispersed over a geographic region of operation of the LAN. The sensor devices are also coupled to the LAN (e.g., using Ethernet connections). The wireless sensor devices scan radio channels and gather information about wireless traffic detected on those channels. The gathered information is communicated to a server device that is also coupled to the LAN. The server can store and process the gathered information. A console can be provided for reviewing the results of the processing of the gathered information and for the user to interact with the system. The system of wireless sensors, the server, and the console is often called as Wireless Intrusion Detection System (WIDS) or a Wireless Intrusion Prevention System (WIPS). This system can detect wireless vulnerabilities, and optionally block wireless communication associated with the detected vulnerabilities. Example of WIDS/WIPS include SpectraGuard Enterprise provided by AirTight Networks of Mountain View, CA.

Several limitations exist with the conventional techniques. For example, the vulnerability scanning of the public Internet facing interface of the LAN is insufficient to detect wireless vulnerabilities described above and throughout the present specification. The walk-around survey with the handheld scanner fails to monitor wireless vulnerabilities on a continuous basis. Moreover, with walk-around survey, it is extremely difficult to correlate information from different sites, store consolidated site-wide information at a central location etc. The WIDS or WIPS installed on a customer site and often managed by the customer turns out to be an expensive proposition from capital and operational expenses and deployment standpoint. Moreover skilled personnel are required to deploy and manage the WIDS/WIPS as well as monitor, analyze, and interpret information provided by the WIDS/WIPS about the LAN's wireless environment. Such personnel are hardly available with many customers. These limitations often leave LANs exposed to wireless vulnerabilities which often go undetected and can result in information security breaches over a period of time. The present invention provides techniques to overcome these and other limitations and to facilitate wireless vulnerability management for LANs.

The present invention provides a method and a system for wireless vulnerability management for local area computer networks. In an embodiment, the present invention provides for wireless scanning devices (hereinafter referred as "sniffers") to be deployed at customer premises. Advantageously, in one specific embodiment, the sniffers can be pre-configured for operation in the customer premises so that deployment overhead is reduced. The sniffers can scan radio channels and gather information about wireless traffic on those radio channels in a vicinity of the LAN. In this embodiment, the sniffers communicate information about the detected wireless traffic to the wireless vulnerability management server (hereinafter referred to as a "security server"). The security server can store and process the detected wireless traffic for vulnerability assessment. It can store results of the assessment, e.g., over a period of time. The security server can communicate the results to the user via alerts, reports and other types of output.

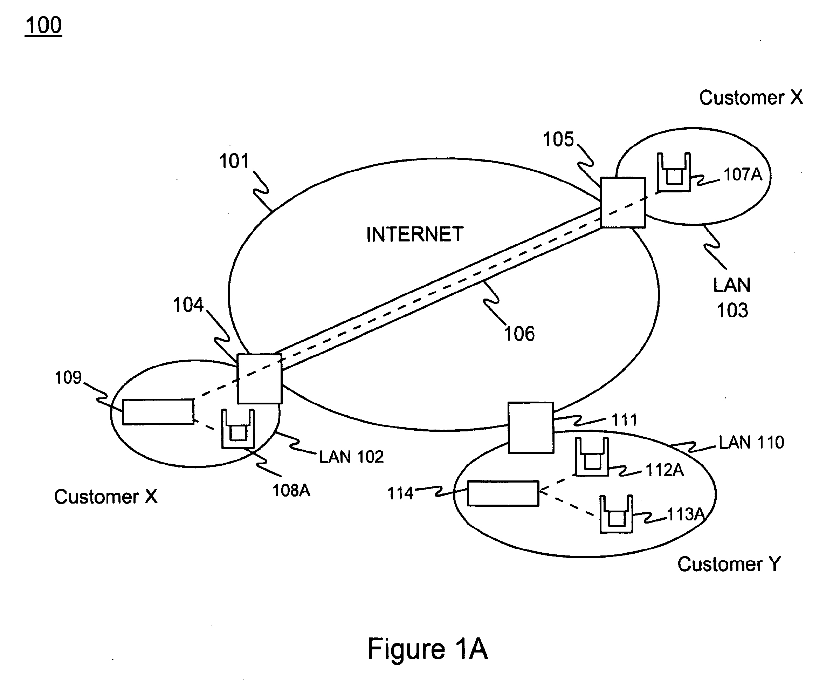

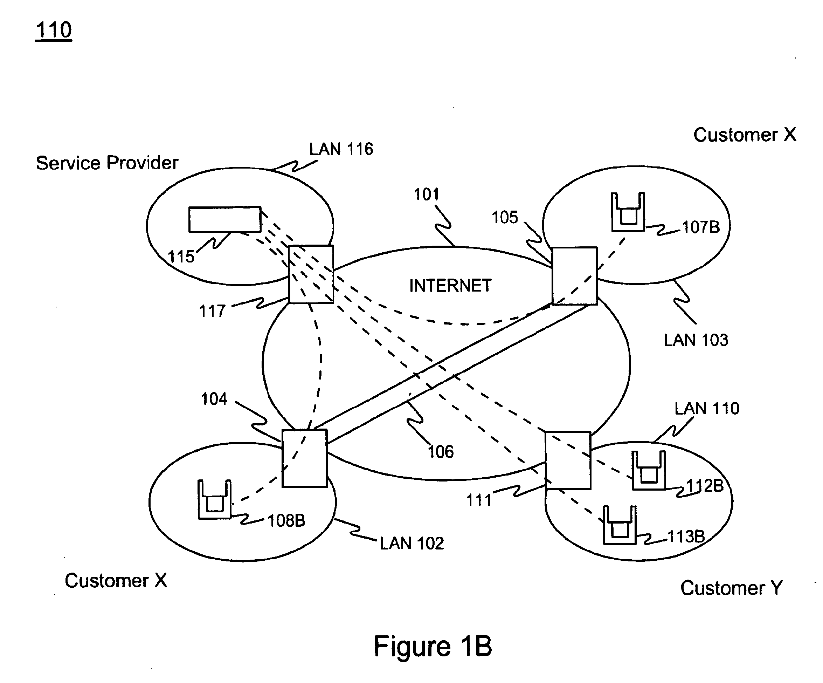

An exemplary conventional WIDS/WIPS system configuration 100 for providing wireless security for local area computer networks is illustrated in Figure 1A, while an exemplary system configuration 110 for providing wireless vulnerability management as Software as a Service (SaaS) according to an embodiment of the present invention is illustrated in Figure 1B. As shown in Figure 1A, customer entity X has two LANs 102 and 103 at two geographic locations (e.g., offices in two cities) respectively. The LANs 102 and 103 are coupled to the Internet 101 through firewalls 104 and 105, respectively. The LANs 102 and 103 are interconnected using a VPN (Virtual Private Network) tunnel 106 over the Internet. The LANs 102 and 103 and the VPN tunnel 106 thus form a private network of the customer X. Also shown are wireless sensors 107A and 108A deployed within the premises of customer X to monitor wireless activity therein. The sensors send information associated with their monitored wireless activity to a server 109 of customer X for processing, storage etc. That is, the server 109 is connected to the private network of customer X. The transfer of information from the sensors to the server is illustrated via dashed lines in Figure 1A. Similarly customer Y has LAN 110 that is coupled to the Internet through the firewall 111. The sensors 112A and 113A of the customer Y send information associated with their monitored wireless activity to the server 114 for processing, storage etc. That is, the server 114 is coupled to the private network of the customer Y.

As shown in the SaaS configuration of Figure 1 B, the security server 115 is provided in the service provider LAN 116. The security server is operated and maintained by the service provider. The operating/maintaining the security sever can include upgrading the security server (e.g., software on the server) to facilitate newer wireless vulnerability management techniques, performing database backups and so on. The service provider LAN 116 is coupled to the Internet 101 through the firewall 117. The sniffers 107B and 108B at customer X premises and the sniffers 112B and 113B at customer Y premises send information about monitored wireless activity to the security server 115 over the Internet. The transfer of information from the sniffers to the server is illustrated via dashed lines in Figure 1B. The security server 115 processes and stores data reported by sniffers at customer premises X separate from that reported by sniffers at customer premises Y. For example, X and Y can have separate configurations for wireless vulnerability management operation, can represent diverse types of organizations (e.g., X can be a retailer and Y can be a Hospital, X can be a high school and Y can be a financial institution etc.) and thus have diverse security requirements, budgets, could have subscribed to different sets of modules for wireless vulnerability assessment and so on.

In various embodiments of the present invention, the sniffers 107B, 108B, 112B, and 113B etc. can use variety of protocols to send information about monitored wireless activity to the security server over the Internet. In an embodiment, at least a portion of the information can be sent using TCP (Transmission Control Protocol). In an alternative embodiment, at least a portion of the information can be sent using UDP (User Datagram Protocol). In yet an alternative embodiment, the information sent over the Internet can be encrypted and/or authenticated. As merely an example, protocols such as IPSec (IP Security), HTTPS (Hyper Text Transfer Protocol Secure) etc. can be used to encrypt the information sent over the Internet. In another embodiment, one or more VPN tunnels can be formed over the Internet between the LANs of the customers and the service provider LAN. At least a portion of the information can be sent through the VPN tunnels. In yet another embodiment, the sniffers positioned at the customer premises send at least a portion of the information about monitored wireless activity to one or more computers in the customer network (e.g., customer's LAN, customer's private network etc.) and these one or more computers can in turn send the information to the security server over the Internet. These embodiments are exemplary only and various other alternatives will be apparent to persons with ordinary skill in the art based upon the present specification.

The present invention advantageously provides for the security server to be hosted by a service provider entity, which is separate from a customer entity which owns/operates/uses the LAN, and often geographically remote to the customer premises. Advantageously, the present invention provides for the expensive security server resources to be shared across a plurality of customer entities.

Moreover, the present invention provides a workspace for the customer on the security server and facilitates the customer to select and/or configure the wireless vulnerability management workspace as per needs and budget. In an embodiment, the customer can also optionally avail services from skilled professionals at the service provider entity to configure and operate the wireless vulnerability management workspace on the customer's behalf. By reducing the overhead of deployment, the entry cost, and the expenses and the required skills for operation, the present invention provides for affordable wireless vulnerability management.

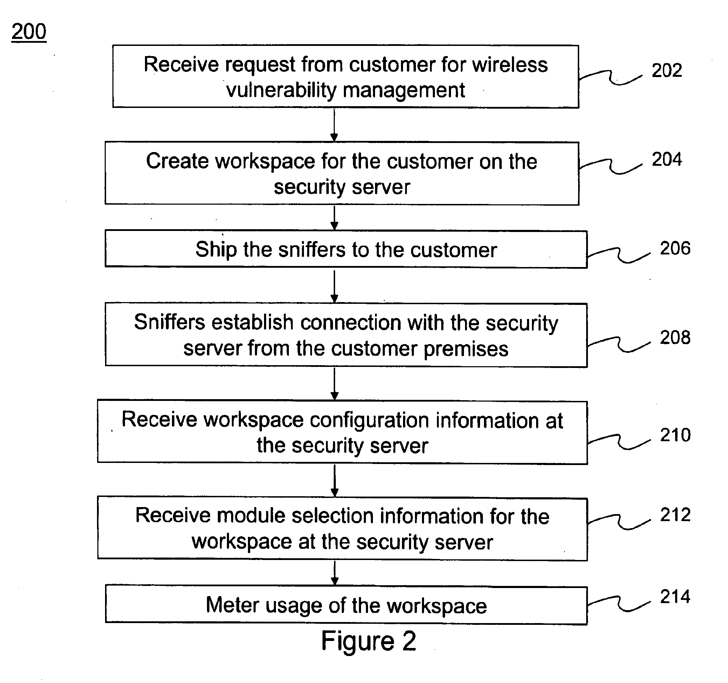

In an embodiment, the present invention provides a method for wireless vulnerability management. As merely an example, the system illustrated in Figure 1 B can provide an environment within which the method can be practiced. An exemplary logical flow of steps in the method 200 for wireless vulnerability management for local area computer networks according to an embodiment of the present invention is illustrated in Figure 2 and described in more detail below. This diagram is merely an example and should not unduly limit the scope of the invention herein. One of ordinary skill in the art would recognize many variations, modifications, and alternatives based on the teachings of the present specification. In various embodiments, one or more steps can be omitted, one or more steps can be added, one or more steps can be modified, one or more steps can be split into sub-steps, one or more steps can be combined into lesser number of steps and like.

As shown in Figure 2, at step 202 the method includes receiving a request for wireless vulnerability management from a customer entity. For example, the customer entity (e.g., owner/operator/user of a LAN) can request wireless vulnerability management for his or her LAN. As merely an example, the customer can log into a website adapted to receive requests for wireless vulnerability management from customers. Alternatively, other means of receiving requests such as email, phone call etc. can be used to receive the request for wireless vulnerability management. The request can include information such as customer's contact details. Moreover the request can include information such as total area of customer premises for which wireless vulnerability management is required, how the total area is distributed (e.g., among different geographic regions, floors etc.), and other type spatial layout information. Other types of information such as nature of business (e.g., retail, hospital, financial etc.) of customer and requirement for compliance with any security standard (e.g., PCI-DSS, HIPAA etc.) can also be included in the request. The request may indicate if the customer LAN includes or plans to includes an authorized wireless network of its own and if so information regarding device vendors, protocols (e.g., 802.11 b/g, 802.11 a), authentication and encryption schemes (e.g., WEP, WPA, 802.11i etc.) etc. associated with the authorized wireless network. In an embodiment, the request can also indicate that the customer does not have authorized wireless network of its own. Additional information such as volume of wireless traffic that is typically present in a vicinity of the customer premises, any previous security breaches the customer has experienced, requirement for abiding with various industry standards (e.g., Plenum rated sniffers, NEMA enclosures for outdoor deployment) etc. can also be included in the request. In an alternative embodiment, upon receiving request from the customer for wireless vulnerability management, a customer service associate can establish contact with the customer for receiving various types of information such as examples given before and like.

Step 204 includes creating a workspace for the customer on the security server. Advantageously in this embodiment, the security server can be hosted at a datacenter outside of the customer premises, at the service provider premises and like. Moreover, the security server can be shared across a plurality of customers. The customer can access the workspace over the Internet. In an embodiment, a customer account, e.g., having associated with it a username and a password, is associated with the workspace. Moreover, associated with the customer account can be identification of personnel and/or computer entities at the customer premises that are allowed to access the account and associated privileges. Examples of privileges can include among others privilege to view one or more screens (e.g., screens comprising information about visible devices, events, alarms, reports, configuration details etc. that pertain to the customer account), privilege to modify one or more operational configuration parameters, privilege to select/deselect one or more modules associated with wireless vulnerability management, privilege to initiate one or more remediation processes etc. Privilege can also depend upon the location where the wireless activity is detected. For example, certain operator may be allowed to view one or more screens associated with wireless activity information pertaining to one location that is under the purview of the operator, but not pertaining to another location which is not under the purview of the operator.

Step 206 can then prepare/configure the sniffers for the customer account and ship them to the customer entity via US postal services or courier services such as Fedex. In an embodiment, the sniffers are configured so that when they are deployed on the customer premises (as in step 208), they are able to discover (e.g., automatically) the security server and connect to it over the Internet. In an embodiment, a URL (Uniform Resource Locator) of the security server is configured in the sniffers. When the sniffers are connected to the LAN at the customer premises, they seek connection to the security server identified by the URL.

Alternatively or in addition, in this embodiment, the sniffers are configured so that when the customer deploys them on the premises (step 208) and when they connect to the security server from the customer premises (e.g., over the Internet) they appear within the customer's workspace created in step 204. In an embodiment, sniffer identities are associated with the customer account prior to shipping the sniffers to the customer. This enables associating the sniffers to the correct customer workspace when they connect to the security server from the customer premises. In an alternative embodiment, distinct authentication credentials (e.g., certificate, password etc.) are generated for sniffer groups belonging to distinct customer entities. The sniffers are required to present these authentication credentials for connecting to and/or interacting with the security server over the Internet. The use of the right credentials facilitate associating the sniffers to their correct customer workspaces in this embodiment.

In an alternative embodiment, step 206 can instead or in addition include making sniffer software available to the customer for download. The sniffer software is adapted to execute on one or more computers including radio communication facility at customer premises (e.g., laptops using Microsoft Windows family of operating system and Intel Centrino WiFI radio, PCs using Linux operating system and PCMCIA radio card, handheld devices such as PDAs, iPhone with built in or attachable WiFi radio card etc.). The software can include configuration information such as URL so that it can communicate with the security server after it is installed and run at the customer premises. Alternatively, it can prompt the user to input the security server identity information such as URL, IP address and like.

At step 208 in the method 200, the sniffers are deployed at the customer premises. In an embodiment, sniffers are spatially distributed over the customer premises to monitor wireless communications. The sniffers are also connected to the LAN using their wired or wireless network interfaces. The sniffers can access the Internet and communicate to the security server over the Internet. Preferably, the firewall that monitors traffic flowing across the LAN-Internet boundary should be configured to permit communication between the sniffers and the security server. As described in step 206, in an embodiment, when the sniffers connect to the security server, they are shown as active within the customer workspace on the security server.

At step 210, the customer can log into the customer workspace and provide information associated with his authorized wireless network. For example, the customer can log into the security server from a computer over the Internet. As merely an example, the customer can use a web browser such as Internet Explorer (provided by Microsoft Corporation of Redmond, WA), Netscape, Firefox provided by Mozilla Corporation of Mountain View, CA etc. to access the security server. The security server can be identified via a URL, an IP address etc. The security server may prompt the user for username and password. After successful login, the security server may send information across the Internet which is adapted to display certain screens in the web browser or various other types of user interfaces. These screens can be used by the customer to provide the authorized wireless network information.

The information associated with the authorized wireless network provided by the customer can advantageously facilitate detecting authorized and unauthorized wireless activity. It can also help detect certain wireless vulnerabilities. As merely an example, certain network name called as SSID (Service Set Identifier) is used to identify a WiFi wireless network. In an embodiment, the information associated with the authorized wireless network can include a list of SSIDs that are used in the authorized wireless network. In this embodiment, when the sniffer detects an AP that is using SSID outside this list, it can identify the AP to be unauthorized AP. Depending upon the embodiment, the information about the authorized wireless network can include identities of authorized access points (e.g., their wireless MAC addresses), security controls to be used for authorized wireless communication (e.g., WEP, WPA2, IEEE 802.11i, IEEE 802.11w etc.), identities of authorized wireless stations, identities of network segments (e.g., subnetworks, VLANs etc.) to which the APs are connected for traffic forwarding between wired and wireless media and like.

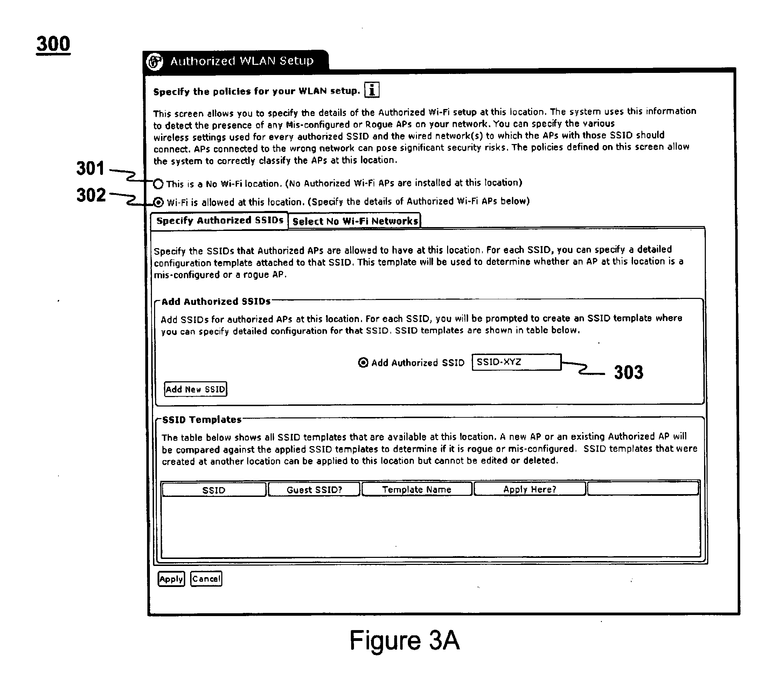

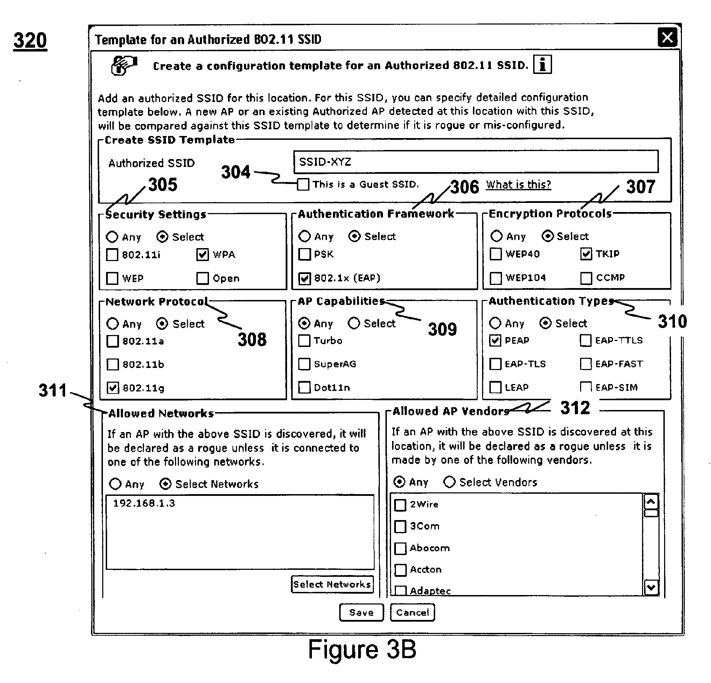

Exemplary computer screenshots 300 and 320 that can facilitate the customer to input information associated with authorized wireless network are illustrated in Figures 3A and 3B, respectively. These diagrams are merely examples and should not unduly limit the scope of the invention herein. The information inputted by the customer can be received by the security server over the Internet (e.g., using protocols such as TCP, HTTP, HTTPS and like). As shown in Figure 3A, the screen 300 can provide for selecting whether or not authorized WiFi network is present at a particular location in customer premises (301 and 302). If the authorized WiFi is present, the screen can provide for inputting SSID of the authorized WiFi network (303). One or more SSIDs can be inputted. In this embodiment, the screen 320 provides for inputting information associated with settings of APs associated with the authorized SSID, such as for example whether the SSID is for guest connectivity (304) which can then be treated differently from other SSIDs which are for authorized access for users within the organization, wireless security settings protocol (305), wireless authentication framework (306), wireless encryption protocol (307), 802.11 physical layer protocol (308), additional AP capabilities (309), authentication types (310), the networks to which the AP is allowed to connect wireless traffic to (311), vendor information (312) etc.

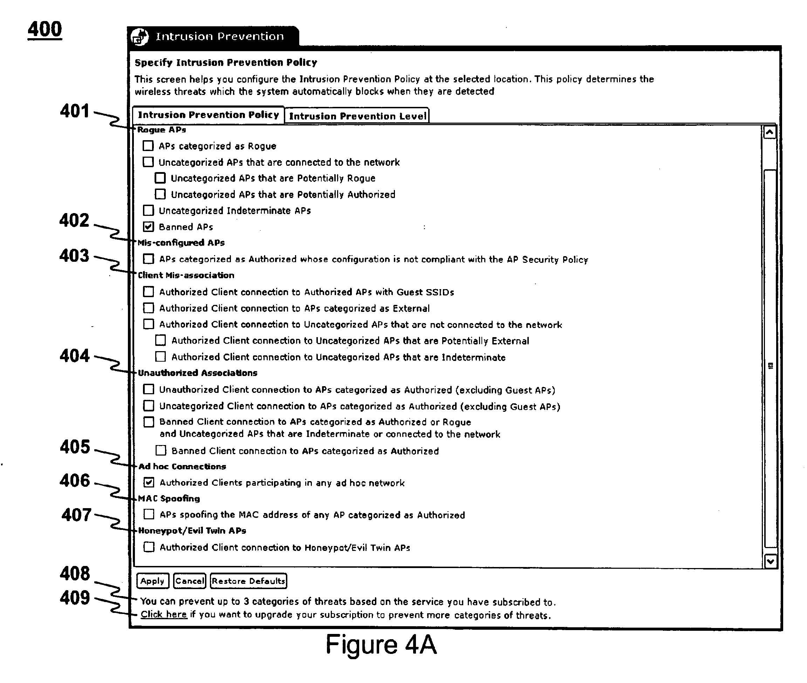

In an embodiment, step 210 can also include receiving information associated with certain operational configuration parameters. As merely an example, the operational configuration parameters can include configuration of certain actions to be performed responsive to certain unauthorized wireless activity (referred herein as "intrusion prevention"). An exemplary computer screenshot 400 that can facilitate inputting the intrusion prevention configuration is illustrated in Figure 4A. This diagram is merely an example and should not unduly limit the scope of the invention. Persons of ordinary skill in the art can identify various modifications and alternative based on the present disclosure. The information inputted using the screen 400 can be received by the security server. As shown, the screen 400 can provide for selecting prevention (e.g., automatic prevention subsequent to detection) of various categories of wireless vulnerabilities (as shown by selections 401 to 407). In an embodiment, the screen also indicates the limit on the categories that can be selected (408). For example, this limit can be based upon the level of vulnerability management service (for example, subscription package) that the customer has subscribed to and agreed to pay for. The screen also provides for upgrading the service level to be able to select more categories (409).

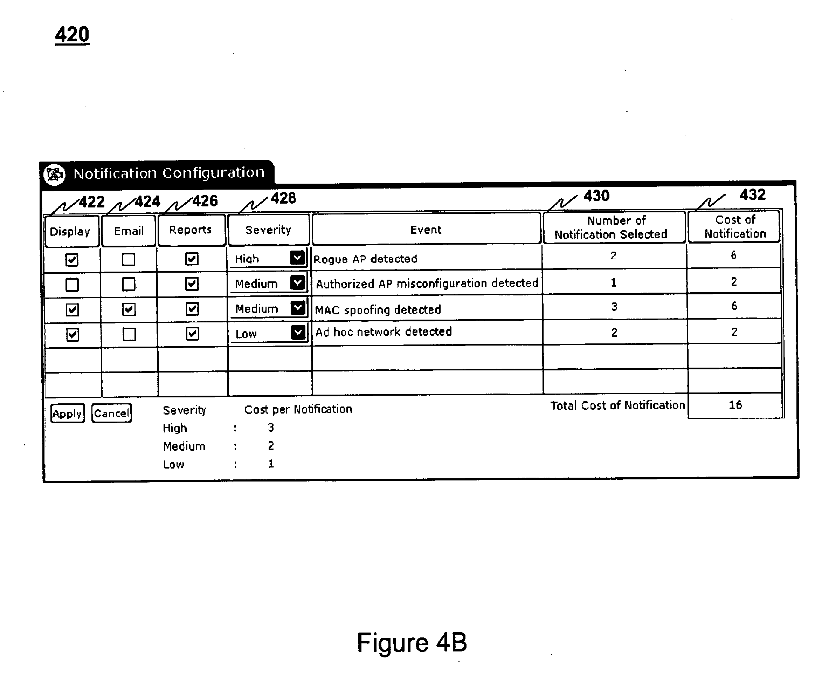

In an alternative embodiment, the configuration information can include information associated with notification preferences, for example, manner of receiving notifications upon detection of a selected vulnerability. An exemplary computer screenshot 420 for inputting information associated with notification preferences is illustrated in Figure 4B. This diagram is merely an example and should not unduly limit the scope of the invention. Persons of ordinary skill in the art can identify various modifications and alternative based on the present disclosure. As shown in Figure 4B, the screen 420 can show a listing of vulnerabilities. For one or more of the listed vulnerabilities, a selection can be inputted/modified as to whether the notification is to be displayed (422), e.g., when the customer logs into the workspace and chooses to view the notifications, to be emailed (424), documented in report (426) etc. Severity level can also be assigned (or modified from default value) for the listed vulnerability (428). As shown at 432, the screen can provide information associated with cost of notification. In an embodiment, customer can be charged based upon the number of subscribed notifications (430). In an alternative embodiment, the customer can be charged based upon the number of notified vulnerabilities. In an embodiment, the cost of notification can also depend upon the severity level selected, the nature of vulnerability and so on.

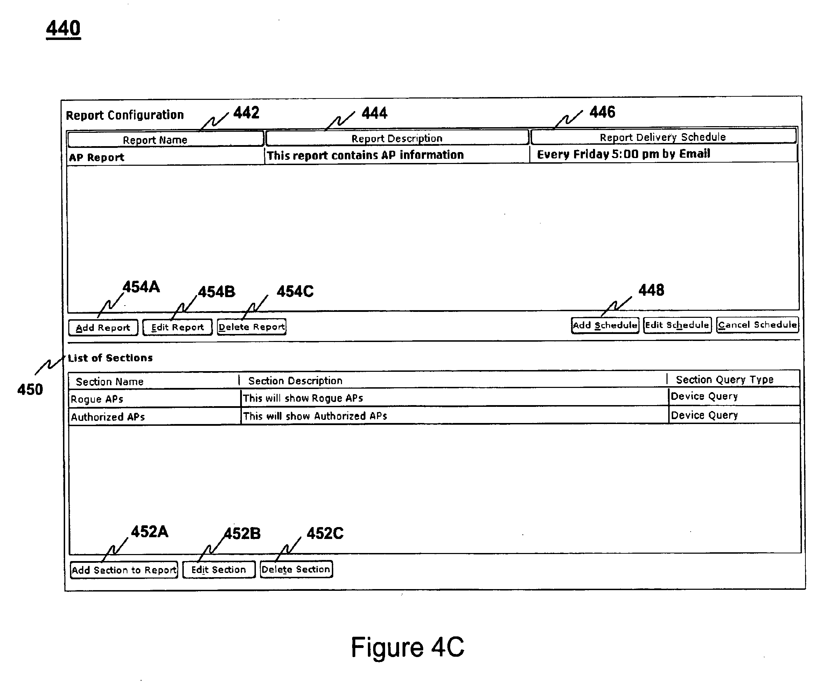

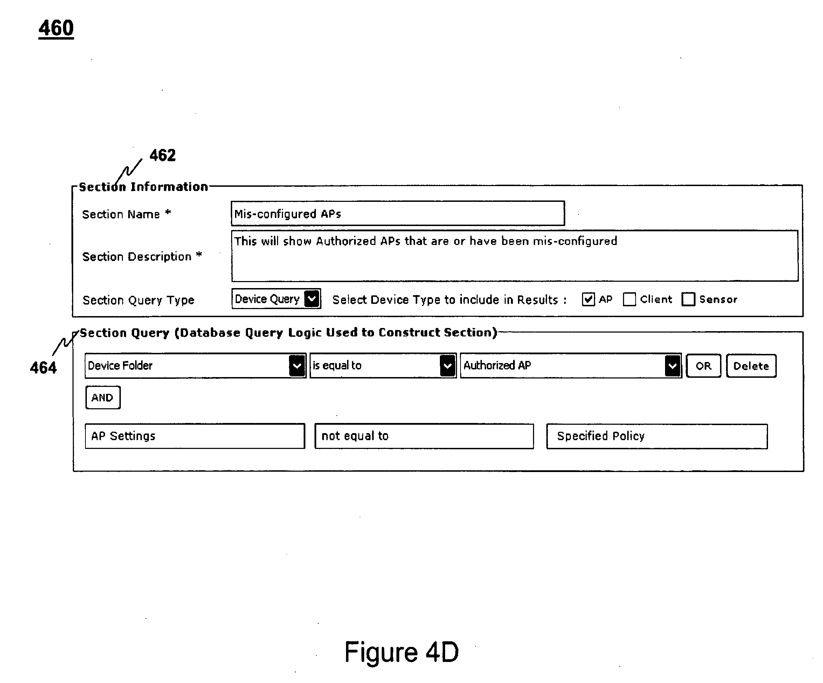

In yet an alternative embodiment, the configuration information can include information associated with reports to be generated based upon the processing of the wireless activity information. Some exemplary computer screenshots 440 and 460 for inputting information associated with reports to be generated upon processing the wireless activity information are illustrated in Figures 4C and 4D, respectively. These diagrams are merely examples and should not unduly limit the scope of the invention herein. Persons of ordinary skill in the art would identify various modifications and alternative based on the present disclosure. As shown in Figure 4C, the screen 440 can facilitate report configuration. For example, name of report (442), description of report (444) etc. can be configured (inputted). A delivery schedule (446) can also be configured (created) (448). Moreover, new reports can be configured (454A), existing reports can be reconfigured (454B), existing reports can be deleted (454C) etc. In this embodiment, one or more sections to be contained in the report (450) can also be configured using the various options such as adding (452A), editing (452B), and deleting (452C) sections. As shown in Figure 4D, the nature of information to be filled into various sections can also be configured. As shown in screen 460, the logic (464) for filling information into a selected section (462) can be configured.

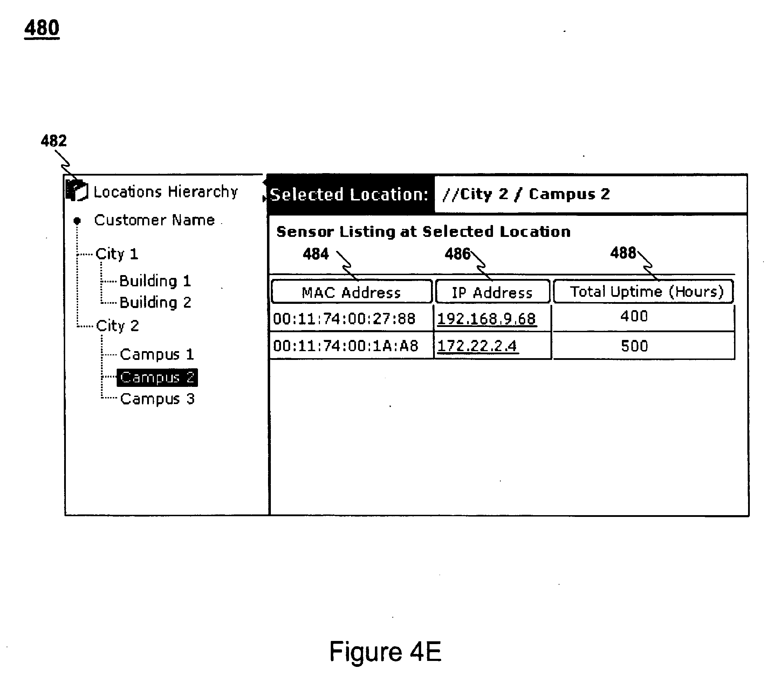

In yet a further alternative embodiment, the configuration information can include information associated with physical locations, e.g., hierarchy of physical locations at customer premises. The information can also include information about association between sniffers and the physical locations, for example, identifying for each sniffer a physical location where it is placed. This facilitates organization and processing of wireless activity information with regard to location where it is detected. An exemplary computer screenshot 480 for information associated with physical location hierarchy is illustrated in Figure 4E. This diagram is merely an example and should not unduly limit the scope of the invention. Persons of ordinary skill in the art can identify various modifications and alternative based on the present disclosure. As shown in Figure 4E, the screen 480 can indicate location hierarchy 482. In an embodiment, the customer entity can create the location hierarchy by inputting appropriate configuration information related to how the customer premises are laid out. In an embodiment, the sniffer identities can be associated with locations. As shown in the screen 480, the identities of sniffers (MAC addresses 484, IP addresses 486 etc.) associated with a selected location can be displayed. Preferably, the sniffers are positioned in customer premises at the associated locations. In an embodiment, the customer can associate sniffer identities to specific locations based upon how the sniffers are positioned in the customer premises. The uptime of sniffers can also be indicated (488). In an embodiment, the uptime information can be used to charge for sniffer usage (e.g., meter the sniffer usage for wireless activity monitoring). In various embodiments, certain other configuration and module selection information can also be specific to selected locations.

While certain exemplary configuration parameters have been described within the specific embodiments, they are not limiting and there are many others which persons of ordinary skill in the art can contemplate based on the present teachings.

At step 212, the customer can select from a plurality of modules for wireless vulnerability management. By way of examples, the plurality of modules include:

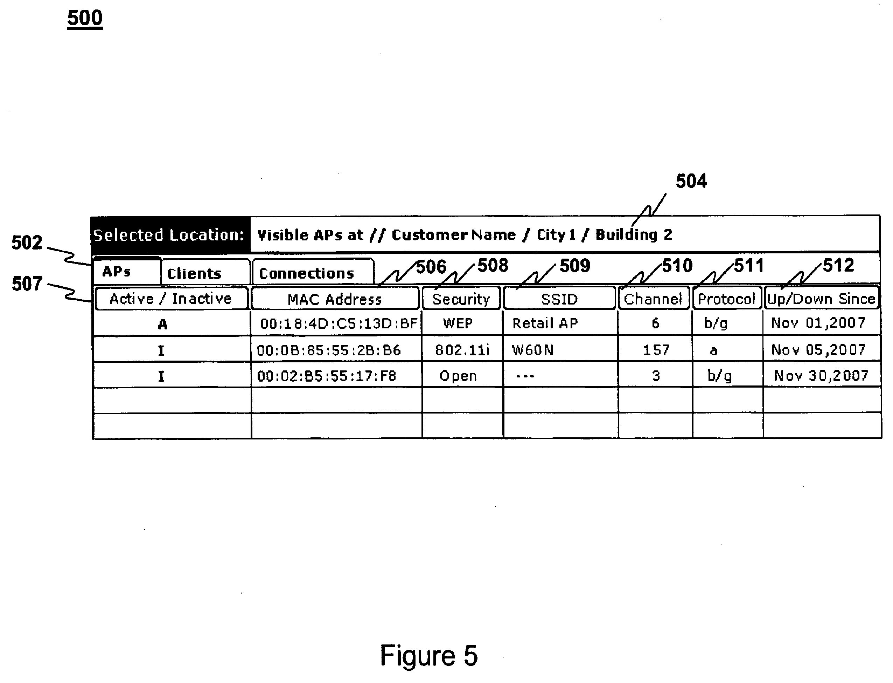

Scanning Module: In an embodiment, when the scanning module is selected (e.g., activated) the sniffers scan radio channels and report certain information about observed wireless activity to the security server. The security server can then display this information (e.g., when the customer logs into the security server over the Internet using a web browser or other means and chooses to review the information), send a report on the collected information (e.g., as a file download, via email) etc. An exemplary screenshot 500 for display of the wireless activity information gathered from the scanning is illustrated in Figure 5. This diagram is merely an example and should not unduly limit the scope of the invention. Persons of ordinary skill in the art would recognize many alternatives and modifications based upon the present disclosure. As shown in Figure 5, the screen 500 can provide for selecting whether the customer wants to view APs, clients, or connections (e.g., wireless connections among APs and clients) associated with the wireless activity (502). The location that is relevant for the wireless activity being displayed can also be indicated in the screen 500 (504). The screenshot 500 in Figure 5 shows selection being made to view AP information. The identities of APs can then be displayed (506) along with various other detected information such as whether the AP is currently active (507), security settings on the AP (508), SSID (509), channel of operation (510), protocol (511), time since AP is up (512) and like. The screenshot 500 is exemplary only and should not limit the scope of the invention.

Various alternatives and modifications for displaying wireless activity information are possible and will be apparent to persons with ordinary skill in the art from the present disclosure. For example, in an embodiment, the display of wireless activity information can include signal strength information associated with the wireless activity. In an alternative embodiment, the display can include listing of packets (e.g., 802.11 MAC frames) detected by sniffers on the radio channels. Various constituent fields/parameters associated with one or more of the listed packets can also be displayed in an embodiment. In other alternative embodiments, the wireless activity information can include various statistics about packet transmissions, retransmissions, packet errors, transmission speeds, traffic on various radio channels, data/management/control traffic mix, unicast/broadcast traffic mix, voice/data traffic mix, channel noise, channel interference, device mobility patterns, traffic from/to various devices and so on.

Threat Assessment Module: In an embodiment, selecting the threat assessment module facilitates performing a variety of analyses on the wireless activity information collected by the sniffers. The results of these analyses can be provided to the customer (e.g., displayed, reported via email etc.). Threat assessment module can analyze the wireless activity information to detect variety of security threats. These include among others: unmanaged APs connected to the LAN, MAC spoofing, DOS attacks, WEP cracking, undesirable wireless connections, misconfigurations of authorized wireless network etc. Depending upon embodiments, one or more of these and other vulnerabilities/threats can be analyzed/detected. In an embodiment, a list of vulnerabilities/threats that can be analyzed/detected is presented to the customer and the customer can select (e.g., subscribe to) a subset or all of them.

Remediation Module: In an embodiment, when the remediation module is selected, it can take certain actions against the vulnerability/security breach detected. As merely an example, the remediation action can include blocking/disrupting communication over undesirable wireless connections. For example, suppose an unauthorized AP is detected to be connected to the LAN, the security server can take action to disable wireless communication associated with the unauthorized AP to prevent security breaches using such communication. In an embodiment, the security server can instruct the sniffer (e.g., one in a vicinity of the unauthorized AP) to disrupt any wireless communication associated with the unauthorized AP via a "deauthentication" procedure. In certain deauthentication procedure, the sniffer can send spoofed deauthentication messages to the AP and/or one or more clients connected to the AP instructing to disconnect the wireless link. Other types of remediation processes are possible.

In an embodiment, the prevention process is automatically initiated upon detection of security vulnerability. Alternatively, the prevention process for the detected vulnerability can be manually initiated when requested by the operator who attends to the detected vulnerability. The selection with regards to automatic or manual initiation of prevention processes for the one or more detected vulnerabilities can be provided as operation configuration parameters (e.g., as in step 210).

Location Tracking Module: In an embodiment, selecting the location tracking module facilitates determining (e.g., estimating) physical location of a source of threat posing wireless activity. This module can be useful for deployments which are spread over large geographic areas (e.g., millions of square feet). In an embodiment, location tracking is performed by triangulating the location of source of wireless activity based upon the receive signal strength measurements performed by the sniffers in a vicinity of the source. Depending upon embodiments, various types of location tracking can be provided such as coarse location tracking (e.g., site level, building level etc.), granular location tracking (e.g., cube level, room level etc.), on demand location tracking (e.g., when customer requests the location to be tracked), continuation location tracking (e.g., to trace the path of wireless device over a period of time and at certain intervals during that period) etc.

Reporting Module: In an embodiment, information related to the detected vulnerabilities/threats can be reported to the customer using reporting means such as email, SMS etc. Alternatively, the information can be reported using formats such as SNMP traps. In an embodiment, the detected vulnerabilities/threats are documented in a report and the report is made available to the customer at predetermined intervals (e.g., intervals selected by the customer) via means such as email, file download and like. In an embodiment, the reports can be pre-configured (e.g., PCI-DSS compliance assessment report, HIPAA compliance assessment report etc.). Alternatively or in addition, the customer can customize his own reports to document information required by customer's policy.

RF Visualization Module: The RF visualization module facilitates determining and providing visual displays of radio coverage of wireless network components (APs, sniffers etc.) based upon their placement information and information associated with spatial layout of the premises where they are/are to be positioned. Moreover, information about factors such as transmit power, receive sensitivity, antenna characteristics etc. can also be used in determining radio coverage. Determining and visualizing radio coverage can provide for various what-if analyses. As merely an example, visualizing the radio coverage of the sniffers can further facilitate determining threat detection coverage, remediation coverage, location tracking coverage and like. For example, for the sniffer to be able to detect certain wireless activity, it is necessary that the sniffer receives the wireless activity with certain minimum signal strength or with certain minimum packet error probability. As another example, for the sniffer to be able to remediate (e.g., prevent) undesirable wireless activity associated with a target device, it is necessary that the radio signals transmitted by the sniffer reach the target device with certain different minimum signal strength. As yet another example, to be able to perform location tracking for a device within a selected region via triangulation, it may be necessary that the signal transmissions from the selected region are detected by at least a certain minimum number (e.g., 3) of sniffers. As yet a further example, redundant coverage of more than one sniffers may be required for a selected region for fault tolerance. Depending upon the embodiments, one or more of these objectives are desirable. The RF visualization module can facilitate determining the sniffer placement to achieve the desirable objectives.

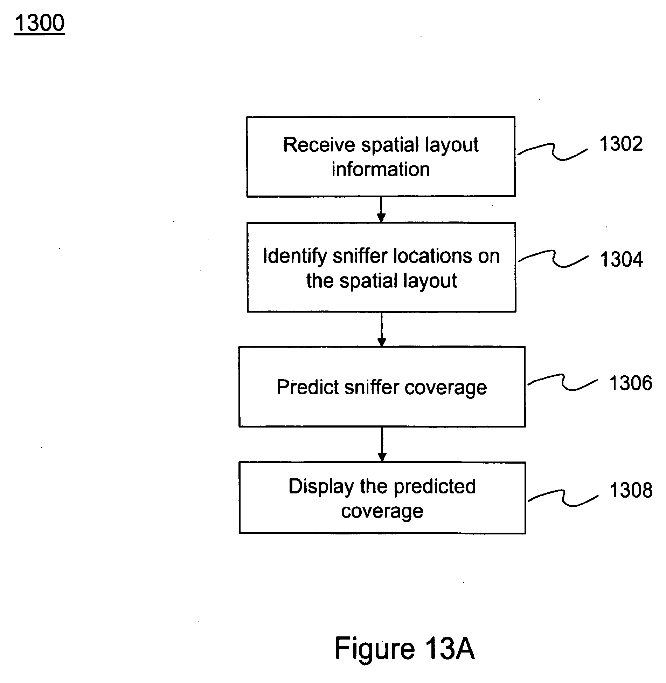

A logical flow of steps in a method 1300 for using RF visualization module according to an embodiment of the present invention is illustrated in Figure 13A. This diagram is merely an example which should not limit the scope of the invention herein. One of ordinary skill in the art can contemplate many alternatives, variations and modifications to the method based upon the teachings of the present specification.

As shown in Figure 13A, step 1302 can receive information associated with spatial layout of the customer premises where sniffers are or will be deployed. This information is used to generate a computer model of the premises. The computer model can include information associated with the layout components (e.g., physical dimensions, material type, location etc.) of the premises. The layout components can include, but not limited to, rooms, walls, partitions, doors, windows, corridors, furniture, elevator shaft, patio, floor, parking lot and foliage. In a specific embodiment, the information associated with the spatial layout can be received in the form of a layout drawing file prepared by CAD (computer aided design) software such as for example AutoCAD provided by Autodesk, Inc. of San Rafael, CA. In an alternative embodiment, an image file of the layout of the premises is imported as a *.gif, *.jpg or any other format file to generate the computer model. In a specific embodiment, the image file depicts (encodes) a floor plan or a map of the premises. In an alternative specific embodiment, the image file can be a photograph or a scanning of the architectural drawing of the floor plan. In an embodiment, the image file can be annotated with details such as physical dimensions and material types of layout components.

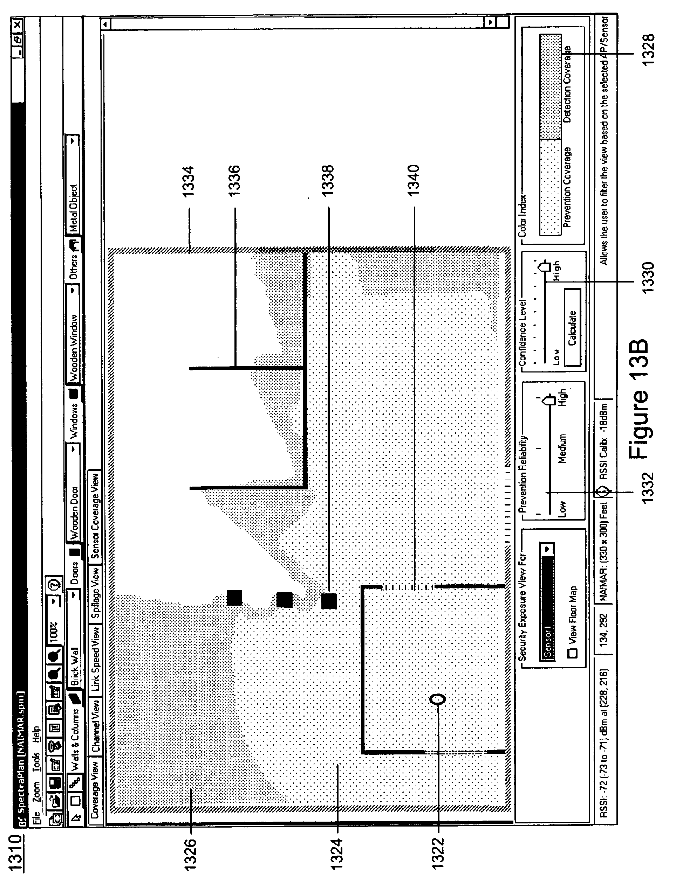

Step 1304 of the method 1300 can facilitate positioning sniffer icons in the spatial layout of the premises. For example, the spatial layout map can be displayed on the computer screen and sniffer icons can be positioned on the displayed layout map. At step 1306, the method can predict the radio coverage of the sniffers and determine coverage for detection, remediation, location tracking, redundancy etc. based upon the computer model of the premises, the information associated with the sniffer placement and one or more radio signal propagation models. Step 1308 can display the predicated coverage areas in relation to the layout of the premises as exemplified by a computer screenshot 1310 of Figure 13B. This diagram is merely an example which should not unduly limit the scope of the invention herein. One of ordinary skill in the can contemplate various alternatives and modifications based upon the teachings of the present specification.

Referring to Figure 13B, a sniffer icon is shown at location 1322. A layout is seen to comprise of exterior walls 1334, interior walls 1336, columns 1338, entrance 1340 etc. The detection region of coverage 1326 and the prevention region of coverage 1324 are shown simultaneously in relation to the display of the layout. In the present example, the detection region is seen to be larger than the prevention region. In a preferred embodiment, the regions 1324 and 1326 are shown by different colors, the legend 1328 for colors being provided. In an alternative embodiment, the regions 1324 and 1326 can be shown in separate views, each in relation to the display of the layout. In other alternative embodiments, the regions can be shown via different fill patterns, contours, gradations of one or more colors and like. The "Prevention Reliability" index 1332 is used to select the degree of disruption to be inflicted on the intruder device by the prevention process. In one specific embodiment, the degree of disruption corresponds to the packet loss rate to be inflicted on the intruder device. In this embodiment, an indication of statistical confidence in the coverage prediction is also indicated via the "Confidence Level" indicator 1330. In a further alternative embodiment, the coverage regions of a plurality of sniffers are shown in relation to the layout of the premises, e.g., via superposition of their coverage regions. Depending upon embodiments, the customer can be allowed to view, print, and/or electronically save the coverage views. Different fees can be charged for the various options. In various embodiments, fees can be charged for the use of RF module based upon the size of premises for which coverage prediction is to be performed (e.g., 10,000 square feet, number of floors etc.), number of sniffers, and types of coverage regions to be predicted (e.g., detection, prevention, location, redundancy etc.).

Certain additional details of RF visualization for sniffers can be found in commonly assigned patent application publication No. 20060058062, entitled "Method for wireless network security exposure visualization and scenario analysis", published on March 16, 2006, which is hereby incorporated by reference herein. In an embodiment, one or more reports can be generated based upon the predicted coverage of APs and/or sniffers. The reports can indicate information such as percentage of areas covered by various signal strengths/link speeds, co-channel/adjacent channel interference etc. In an alternative embodiment, the customer is provided with a measurement tool (e.g., software running on a wireless enabled laptop, PDA etc.) using which signal strength measurements and other measurements can be taken on customer site. These measurements can be reported (e.g., uploaded) to the customer workspace on the security server. The security server can use the measurements by themselves or along with predictions to provide various RF visualization displays and reports. As merely an example, the measurements can be used to adjust the prediction parameters for improved accuracy.

Trending and Benchmarking Module: This module can facilitate processing of wireless activity information received from customer entities to arrive at a variety of trending and benchmarking parameters, including but not limited to, wireless vulnerability trends across customer entities, wireless vulnerability trends for selected industry verticals, comparison of wireless vulnerability score or posture of a customer entity with other customer entities, comparison of wireless vulnerability score or posture of a customer entity with wireless vulnerability trend or benchmark in a selected industry vertical, comparison of wireless vulnerability score or posture of a customer entity with wireless vulnerability benchmark mandated by industry/regulatory standards, and correlation between wireless vulnerability trends and security breaches.

In an embodiment, a customer entity can subscribe to one or more trending/benchmarking parameters. Related notifications and reports can be provided via methods such as emails and/or provided on demand via methods such as web download. These notifications and reports can also be stored in the workspace for the customer entity.

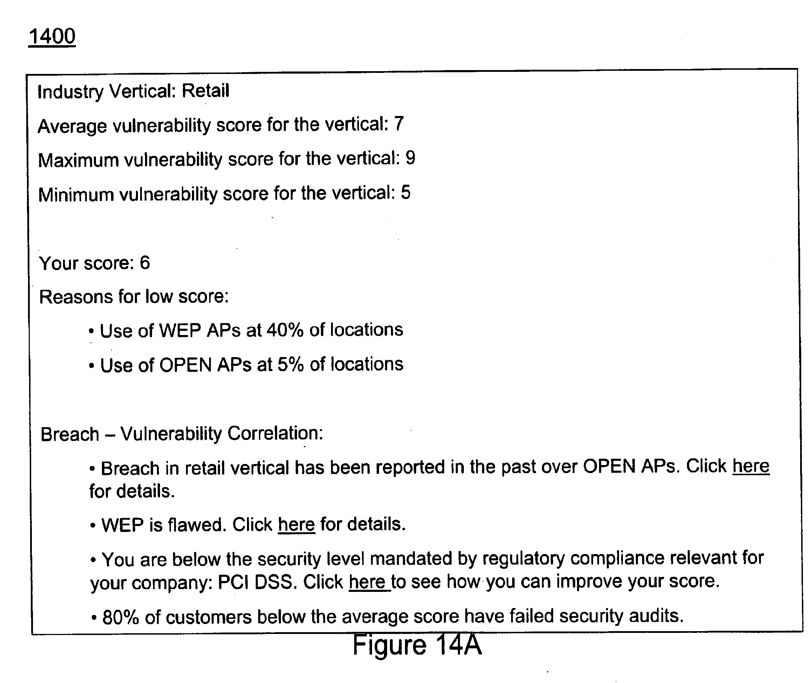

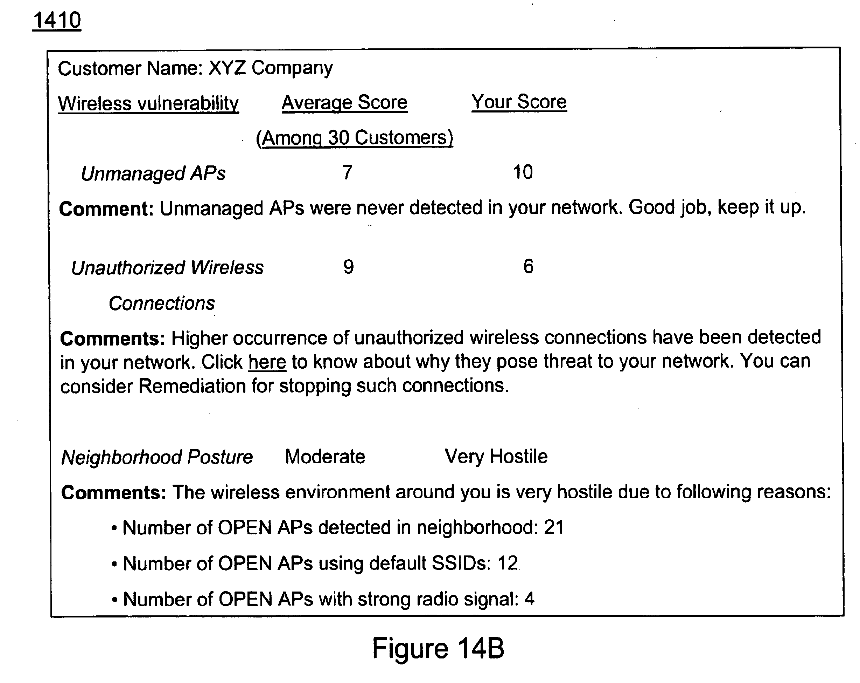

Certain exemplary trending and benchmarking reports 1400 and 1410 are illustrated in Figure 14A and 14B, respectively. Other alternatives and modifications of providing trending and benchmarking data such histograms, pie charts, color codes, tables etc. will be apparent to persons of ordinary skill in the art.

According to a specific embodiment, scores can be associated with various vulnerabilities. The score can be based upon factors such as but not limited to severity of vulnerability, occurrences of past breaches using the vulnerability, regulatory compliance implications of the vulnerability, relation of the vulnerability to other vulnerabilities, implication of the vulnerability for the business segment/vertical and like. The vulnerability score can be computed based upon, for example, weighted sum of the vulnerabilities detected. For example, weighting can be done based upon factors such as number of occurrences of vulnerability that have been detected, time period since the vulnerability is detected (e.g., several months ago versus several days ago), whether the vulnerability is detected in critical part of the network and like. In an embodiment, the score associated with the vulnerability can depend on other vulnerabilities. For example, a high score can be associated with unauthorized client connection vulnerability if large number of open APs is detected in the neighborhood of the network as these open APs have potential to attract legitimate clients towards them unwittingly or maliciously. In some embodiments, the customer entity can associate scores for various vulnerabilities. In alternative embodiments, the scores can be associated based upon the analysis of security experts, skilled professionals, regulatory compliance agencies, security audit agencies and like.

Client Security Management Module: This module can facilitate enforcing wireless communication policies natively on wireless clients (e.g., laptops, PDAs etc.) belonging to a customer entity, e.g., via client software modules installable on the wireless clients. It can also facilitate collecting reports from these wireless clients on their wireless communication activity, and consolidating and integrating these reports into other elements of the customer workspace.

In an embodiment, one or more client software modules are provided (e.g., via file download, on compact disc, via email etc.) for installation on wireless clients belonging to the customer entity. For example, when the customer entity subscribes to the client security management module, the client software module including certain number of use licenses can be provided for download. Options for operating system for wireless clients can also be provided so that appropriate client software modules can be provided.

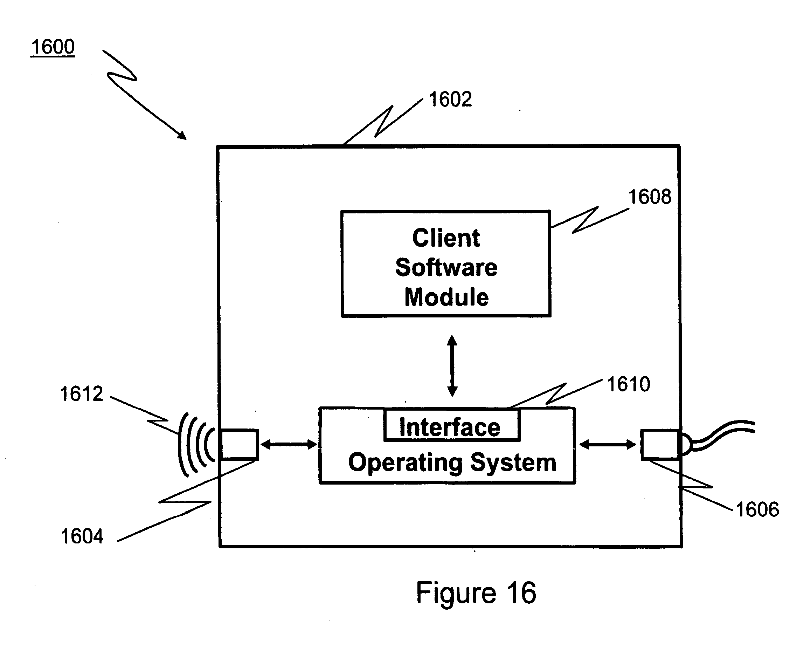

Figure 16 shows schematic of an exemplary wireless client system including client software module for wireless security monitoring according to an embodiment of the present invention. As shown, the wireless client system 1600 can comprise of device 1602 which can be a laptop computer, a desktop computer, a personal digital assistant, a wireless phone and like. The device 1602 includes one or more wireless communication devices (wireless interfaces) 1604. The devices 1604 are operable within wireless networks. Examples of wireless networks include IEEE 802.11a wireless local area network (WLAN), IEEE 802.11b WLAN, IEEE 802.11g WLAN, IEEE 802.11n WLAN, IEEE 802.16 wireless network (WiMax), Bluetooth network and others. In an embodiment, the wireless communication device 1604 can be wireless device that is built into the computer system device 1602. For example, the wireless communication device can be a device such as Intel Centrino wireless device that is built into a laptop such as one provided by IBM or Dell. As another example, the wireless communication device 1604 can be a PCMCIA radio card, a PCI radio card or a USB radio device (e.g., provided by vendors such as Dlink, Netgear, Cisco systems and others) that can be coupled to the computer system device 1602 for wireless communication capability. In an embodiment, the wireless communication device is identified using its wireless MAC (Medium Access control) address. For example, in the IEEE 802.11a, b, g or n network, the MAC address is 6-byte string of binary numbers 0 or 1. In this embodiment, the MAC address of the wireless communication device is included in wireless activity 1612 (e.g., packets or frames sent or received over wireless link) associated with the communication device.

One or more wired communication devices (e.g., wired Ethernet interface) 1606 can also be coupled to the device 1602. In an embodiment, the wired communication device 1606 is identified using its wired MAC address. For example, for the Ethernet interface, the MAC address is 6-byte string of binary numbers 0 or 1. In an alternative embodiment, the wired communication device can be USB communication device.

The client software module 1608 for wireless security monitoring can be installed (e.g., from a CD or download over the Internet or through a central server such as, but not limited to, Systems Management Server (SMS) from Microsoft etc.) on the computer system device 1602. The module 1608 can interact with the wireless and wired communication devices 1604 and 1606 using interface 1610. As merely an example, the interface 1610 can be provided according to Network Driver Interface Specification (NDIS). For example, the NDIS interface is available in computer systems using Microsoft Corporation's Windows operating system. Other interfaces can also be used instead of or in addition to NDIS.

In an embodiment the client software module can be provided on a computer as an executable file or a dynamically loadable library to be used by another executable file. The client software module can be made available as a file or and executable installer on a magnetic media, electronic storage medium, a download from the Internet or be installed using servers like (but not limited to) Systems Management Server (SMS) from Microsoft. The client software module can be written in a programming language like VisualBasic or C and compiled into the executable file or dynamically loadable library and/or bundled into an executable installer. The client software module would interact with network layer interface like NDIS to gather information regarding the network devices and activity on the computer, analyze this information and display the results on a user interface (e.g., graphical user interface). The users can configure the operation of the client software module using similar graphical user interface. The client software module can be stored in the computer's non-volatile memory to be executed on specific events like computer startup or invoking by double clicking on an icon representing the client software module. The client software module can monitor wireless communication activity of a wireless client at work, at home, on road and any other place the wireless client is operated.

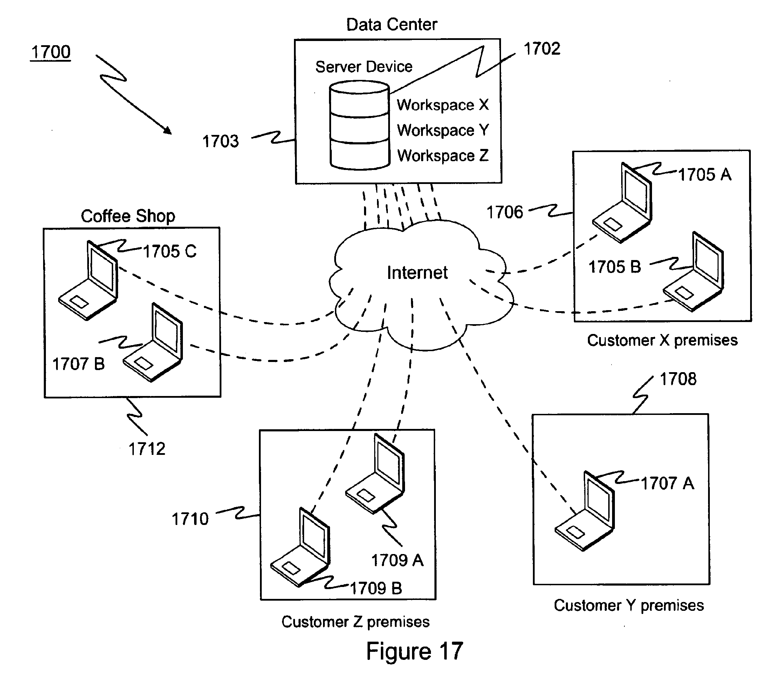

The client software module can interact with the security server as illustrated by exemplary schematic of system 1700 in Figure 17. As shown in Figure 17, a server device 1702 is provided in a data center 1703. The server device contains a server software module. The server device is connected to the Internet. A plurality of workspaces can be created within the server software module for a plurality of customer entities, respectively. For example, the workspaces X, Y, and Z can be created for the customers X, Y, and Z, respectively. It should be appreciated that workspaces can indicate physical and/or logical separation of resources on the server device.

Wireless devices 1705A, 1705B (which are shown in office premises 1706) and 1705C (which is shown away from office premises, in coffee shop 1712) of customer X can include client software modules. In an embodiment, client software modules are provided for downloading and installation on the wireless devices. In an embodiment, client software modules are pre-configured. The pre-configured information can include server device identity, server software module identity, shared key for the customer entity, identifiers used to associate the client software module with the customer entity etc. The client software modules which are provided for downloading can be customized for wireless device platforms of the customer entity, for example, based on operating systems and other software and hardware parameters. Alternatively, the client software modules can be provided via means such as floppy disc, compact disc etc.

As also shown in Figure 17, the client software modules in wireless devices 1705A, 1705B, and 1705C communicate with the server software module over the Internet. Processing of information associated with the wireless devices 1705A, 1705B, and 1705C is performed within the workspace X for the customer X that is created in the server software module. For example, shared key of customer X is used to identify the wireless devices associated with the workspace X. Usage of the workspace can be metered (e.g., based upon number of wireless devices of customer X which include client software module, number of vulnerabilities detected, number of times policy changes are performed, nature and number of reported generated etc.). The customer can pay for the service on subscription and/or usage basis. This embodiment can provide advantages and benefits of Software as a Service (SaaS) technology.

Similarly, wireless devices 1707A (on premises 1708) and 1707B (in coffee shop 1712) are associated with customer entity Y and they communicate with the server software module over the Internet. Policy and wireless activity information associated with the wireless devices of the customer Y can be processed within the server software module within workspace Y for the customer Y. Also shown are wireless devices 1709A and 1709B (on premises 1710) of customer Z.

In an embodiment, the service provider entity can provide services of professionals skilled in wireless vulnerability management. These professionals can assist the customer in selecting appropriate modules/submodules, in configuring various parameters and like. The professionals can also assist in acting on vulnerabilities and security breaches detected. In some embodiments, a service level agreement (SLA) can be executed between the service provider and the customer for professional services offering. Examples of SLAs can include analysis and notification of threats within a specified time limit, periodic reporting, periodic system configuration review, consultation for threat remediation and like.

The method 200 at step 214 includes metering usage of the workspace for wireless vulnerability management for the customer entity. Various embodiments of the present invention include various models for charging the customer entity for vulnerability management service, based upon the metered usage of the workspace. In an embodiment, the service provider entity can track usage parameters of the sniffers for wireless vulnerability management for a customer entity. Examples of the usage parameters of the sniffers include among others the number of sniffers, the duration for which each of the sniffers is active (e.g., connected to the security server and sending wireless activity information from customer site), the amount of wireless activity information received from the sniffers, number of channels scanned etc. The customer can be charged (e.g., periodically) subscription charges based upon the metered sniffer usage.

In alternative embodiment, the metering the usage of the workspace can include tracking number of vulnerabilities detected. Moreover, it can include tracking types and severities of the vulnerabilities detected. It can also include keeping track of actions taken in response to detected vulnerabilities, e.g., email sent, recorded in report, remediation triggered etc. The customer can be charged based upon these metered usage parameters. In an embodiment, the number of vulnerabilities detected during the selected period can comprise real vulnerabilities and false alarms. In this embodiment, credit can be given to the customer entity for at least a subset of the false alarms.

In yet an alternative embodiment, the metering can include tracking the selection of modules and/or submodules as in step 212 and/or tracking usage parameters associated with the modules/submodules and charging the customer based upon these parameters. In yet a further alternative embodiment, metering can be based upon parameters such as number of reports subscribed to, generation of reports, notification of reports, contents of reports etc. The charging can include pre-charging, deducting from deposit accounts, periodic billing, extending credit etc. In an embodiment, customer entity can be charged flat rate for wireless vulnerability management service for a selected period. In various embodiments, the flat rate can depend upon the modules/submodules subscribed to, notification preferences, usage of sniffers, reports and like. The various metering embodiments described herein are exemplary only and there are many others including modifications and combinations of those described herein which will be apparent to persons of ordinary skill in the art based upon the present disclosure.

While several exemplary modules have been described (for example, at step 212 of the method 200), there are others which will be apparent to one of ordinary skill in the art based on the teachings of the present specification. In an embodiment according to the present invention, the customer can select one or more of the modules. The customer can pay for the wireless vulnerability management based upon the modules selected and/or duration for which they are used. In an embodiment, the customer can select certain modules when threat perception is high and deselect them when it is relatively lower. For example, the retailer can select to use and pay for the remediation module during the Christmas season when the threat perception is higher due to peak shopping season and turn it off during other low shopping activity seasons. As another example, the financial organization can increase the level of wireless security in response to the reports of spreading Internet worm. The modularization of wireless vulnerability management advantageously provides for efficient, affordable and flexible wireless vulnerability management. Moreover, the modules can comprise submodules. The submodules can also be selected (e.g., activated) and deselected (e.g., deactivated) in an embodiment. The metering can also be based upon the selected submodules.

In various embodiments of the present invention, the sniffer can monitor wireless activity in its vicinity. Wireless activity can include any transmission of control, management, or data packets between an AP and one or more wireless clients, or among one or more wireless clients. In general, the sniffer can listen to a radio channel and capture transmissions on that channel. In an embodiment, the sniffer can cycle through multiple radio channels on which wireless communication could take place. On each radio channel, the sniffer can wait and listen for any ongoing transmission. In an alternative embodiment, sniffer can operate on multiple radio channels simultaneously.

Whenever a transmission is detected, sniffer can collect and record the relevant information about that transmission. This information can include all or a subset of information from various fields in a captured packet. In an embodiment, a receive signal strength indicator (RSSI) associated with the captured packet can also be recorded. Other information such as the day and the time the transmission was detected can also be recorded.

The sniffer can perform processing on the information it gathers about wireless transmissions. For example, the sniffer can filter/summarize the information for sending it to the security server. The sniffer can perform certain threat assessment processing on the gathered information. Moreover, the sniffer can send information about results of the threat assessment processing to the security server.

Depending upon the embodiment, the sniffer can transmit packets over the wireless medium. These packet transmissions can facilitate blocking/disrupting wireless communication over undesirable wireless connections according to an aspect of the present invention. The packet transmissions can also facilitate certain threat assessment procedures.

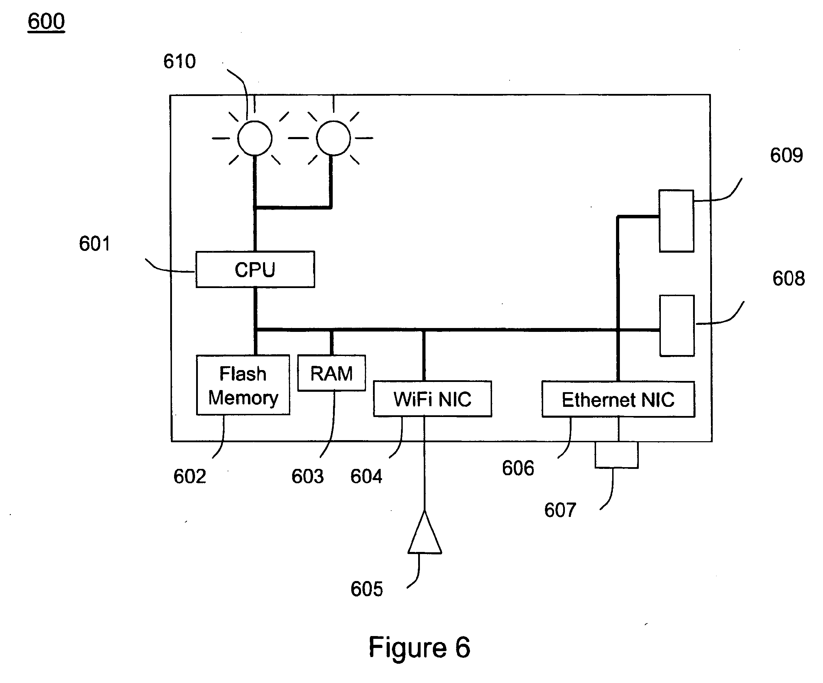

An exemplary hardware diagram of the sniffer 600 is shown in Figure 6. This diagram is merely an example, which should not unduly limit the scope of the invention herein. One of ordinary skill in the art would recognize many variations, alternatives, and modifications. As shown, sniffer can have a central processing unit (CPU) 601, a flash memory 602 where the software code for sniffer functionality can reside, and a RAM 603 which can serve as volatile memory during program execution. The sniffer can have one or more 802.11 wireless network interface cards (NICs) 604 which perform radio and wireless MAC layer functionality and one or more of dual-band (i.e., for transmission detection in both the 2.4 GHz and 5 GHz radio frequency spectrums) antennas 605 coupled to the wireless NICs. Each of the wireless NICs 604 can operate in 802.11a, 802.11b, 802.11g, 802.11b/g or 802.11a/b/g mode. In an embodiment, alternatively or in addition, at least one of the NICs can operate in 802.11 n mode. Moreover, the sniffer can have an Ethernet NIC 606 which performs Ethernet physical and MAC layer functions, an Ethernet jack 607 such as RJ-45 socket coupled to the Ethernet NIC for connecting the sniffer device to wired LAN with optional power over Ethernet or POE, and a serial port 608 which can be used to flash/configure/troubleshoot the sniffer device. A power input 609 is also provided. One or more light emitting diodes (LEDs) 610 can be provided on the sniffer device to convey visual indications (such as device working properly, error condition, undesirable wireless activity alert, and so on).

In an embodiment, the sniffer can be built using a hardware platform similar to that used to build an AP, although having different functionality and software. In an alternative embodiment, both the sniffer and the AP functionality can be provided in the same hardware platform.

In yet an alternative embodiment, the sniffer functionality is provided via a software that can be executed using general purpose computers such as for example laptops or desktops using microprosessor supplied by Intel Corporation of Santa Clara, CA, an operating system supplied by Microsoft Corporation of Redmond, WA (e.g., Windows XP, Windows Vista etc.), and having either a built in (e.g., Centrino technology) or external (e.g., PCMCIA based) radio cards. Alternatively, the software can be executed on a wireless communications capable handheld devices such as iPhone (e.g., provided by Apple Computers of Cupertino, CA), PDAs, mobile phones etc. In this embodiment, the customer can download the software from the security server. The customer can specify the computer platform for which the software is desired. The software can have a license associated with it such as for example license to use the software. The license can indicate as to on how many computers the customer is allowed to install the software.

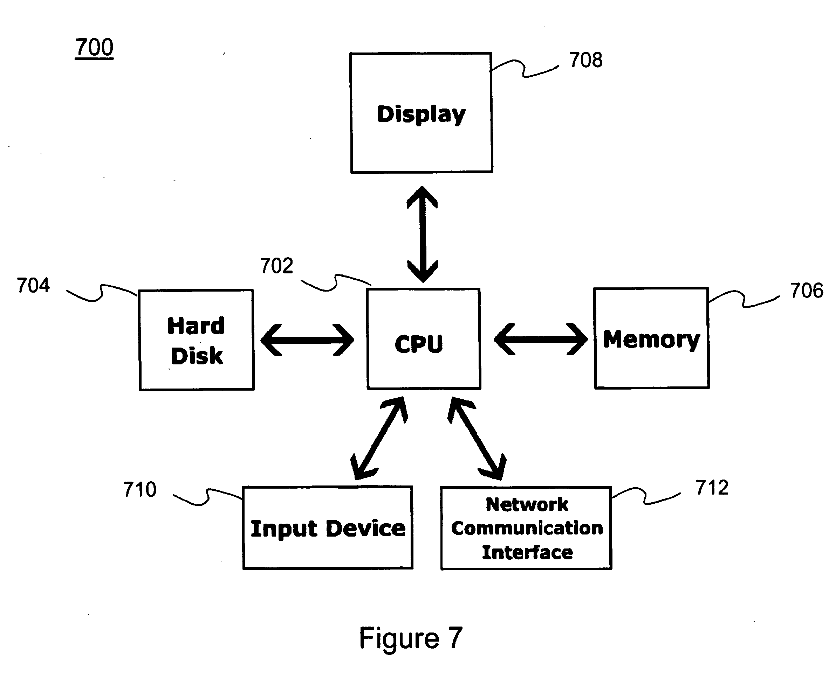

The security server according to an embodiment of the present invention can include a network appliance such as one provided by Intel Corporation of Santa Clara, CA or any other suitable computing platform. As merely an example, the computing platform can run enterprise grade server operating systems such as Windows Server 2003 provided by Microsoft Corporation of Redmond, WA, Red Hat Enterprise Linux provided by Red Hat, Inc. of Raleigh, NC etc. A schematic diagram of the security sever system 700 according to an embodiment of the present invention is illustrated in Figure 7. This diagram is merely an example, which should not unduly limit the scope of the invention. One of ordinary skill in the art would recognize many variations, alternatives, and modifications. As shown in Figure 7, the security server can comprise a processing unit (CPU) 702, a hard disk 704, a memory device 706 which can comprise a read only memory (RAM), a display device 708, an input device 710 which can include a keyboard, a mouse etc., and a network communication interface 712 such as Ethernet interface, optical interface etc. In an embodiment the security server can comprise of a plurality of interconnected computers. The plurality of computers can use techniques such as clustering, parallel processing etc. to increase the processing and/or storage capacity of the security server.

One or more sniffers (e.g., such as the sniffer illustrated in Figure 6) and one or more security servers (e.g., such as the security server illustrated in Figure 7) can be used to implement the method for wireless vulnerability management (e.g., method 200 illustrated in Figure 2). For example, the sniffers can monitor wireless transmissions within their vicinity. They report information associated with the monitored wireless transmissions to the security server over the Internet. The sniffers and/or the security server can perform processing on the information associated with the monitored wireless transmissions for threat assessment, location tracking and like. The sniffers can transmit wireless signals for certain remediation, threat assessment etc. The security server can store the information associated with the monitored wireless transmissions for reporting, forensics etc. Several more exemplary embodiments for wireless vulnerability management according to the present invention are described below.

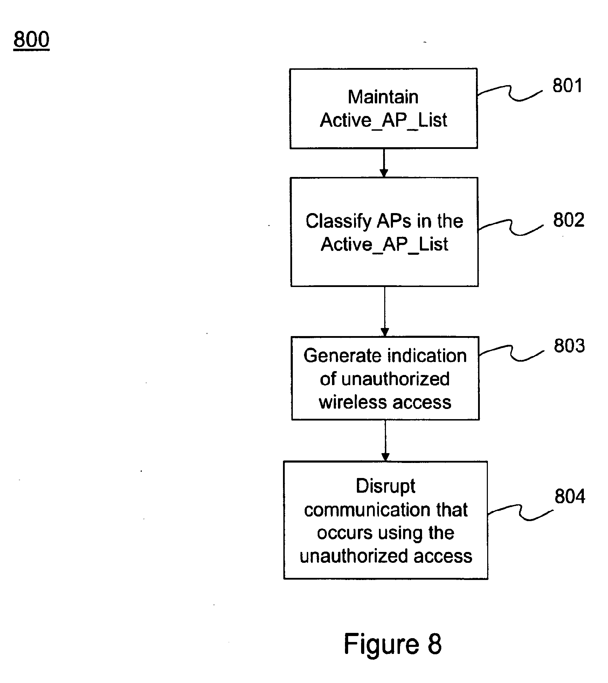

An exemplary logical flow of steps in certain wireless intrusion detection and prevention method 800 (e.g., for detecting unauthorized wireless access) according to an embodiment of the present invention is shown in Figure 8. This diagram is merely an example, which should not unduly limit the scope of the invention. One of ordinary skill in the art would recognize other variations, modifications, and alternatives based on the teachings of the present specification.

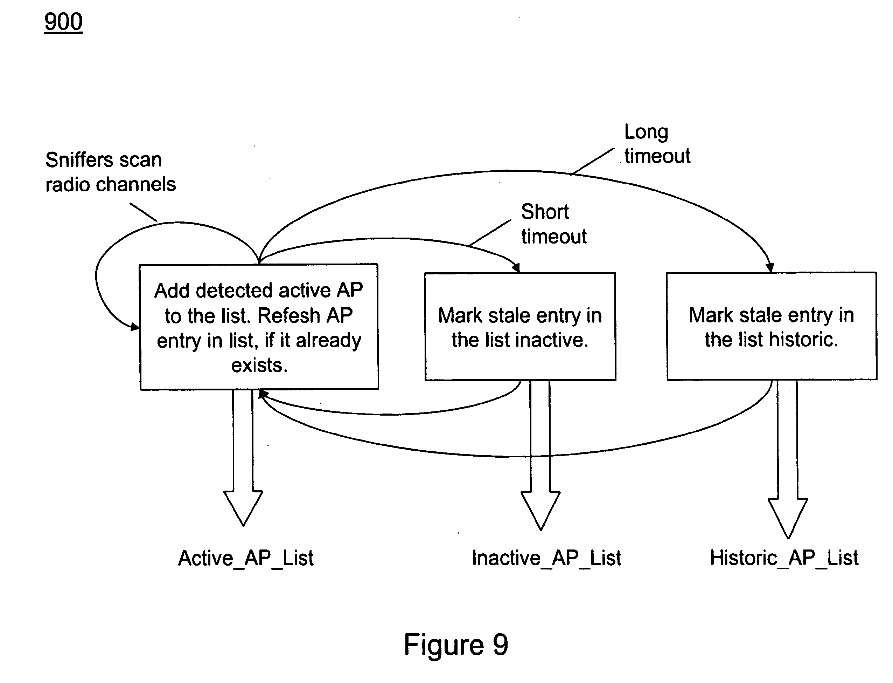

As shown, the first step 801 includes maintaining a list of active APs called the Active_AP_List. An active AP can be the AP that was recently involved in the wireless transmission as the sender or the receiver. An active AP can be detected by analyzing the wireless transmission on the radio channel captured by the sniffer. For example, every AP in the WiFi network periodically transmits a beacon packet for the client wireless stations to be able to connect to it. The beacon packet contains information such as clock synchronization data, AP's wireless MAC address (Basic Service Set Identifier (BSSID)), supported data rates, service set identifiers (SSIDs), parameters for the contention and contention-free access to the wireless medium, capabilities as regards QoS, security policy etc. In an embodiment, detection of beacon packet transmission from an AP is used to identify said AP to be an active AP. Beacon packet can be recognized from the type and subtype fields in the 802.11 MAC header of the beacon packet. In alternative embodiments, active AP can also be detected when any other wireless transmission (data, control or management packet) directed to or generating from it is observed by the sniffer. In yet a further alternative embodiment, identify of the active AP is received from other network systems. Whenever an active AP is detected (i.e., wirelessly active AP), it is added to the Active_AP_List. If the Active_AP_List already contains entry for said AP, the corresponding entry is refreshed. Associated with each entry in the Active_AP_List are a short timeout and a long timeout values. After a short timeout, the corresponding entry is marked "inactive" and after a long timeout it is marked "historic". An exemplary logical state diagram 900 for maintaining the Active_AP_List is shown in Figure 9. This diagram is merely an example, which should not unduly limit the scope of the invention herein. One of ordinary skill in the art would recognize other variations, modifications, and alternatives.

The second step 802 in the method 800 is to classify the APs in Active_AP_List into: a) Authorized APs, b) Unauthorized APs, and c) External APs. In this embodiment, the Authorized APs are the APs which are allowed to be connected to the LAN by the network administrator. The Unauthorized APs are the APs that are not allowed to be connected to the LAN, but are still connected to the LAN. The Unauthorized APs pose a security threat as they can provide a way for intruders to wirelessly access the LAN resources. The External APs are the APs whose presence can be detected by the sniffers but they are not connected to the LAN. For example, these can be neighbor's APs whose radio coverage spills into the region of operation of the LAN. The External APs may not pose a security threat as they do not provide a way for intruders to access the LAN.

The third step 803 can generate an indication of unauthorized wireless access (e.g., intrusion alert) if an Unauthorized AP is identified in step 802. Once the intrusion alert is generated, the method sends an indication of the Unauthorized AP and/or intruding wireless station to a prevention process. Further details of the prevention process can be found throughout the present specification and more particularly below.

At step 804 certain action can be performed to disable or disrupt any communication between the Unauthorized AP and the intruding wireless station. One embodiment of this step works by preventing or breaking the "association" between the Unauthorized AP and the intruding wireless station. Association is certain procedure according to the IEEE 802.11 MAC protocol wherein the wireless station and the AP establish a wireless connection between them. Techniques for preventing or breaking the association between the Unauthorized AP and the intruding wireless client include among others sending one or more spoofed "deauthentication" packets from one or more sniffers with the Unauthorized AP's wireless MAC address as source address with a reason code "Authentication Expired" to the intruding wireless station's MAC address or to a broadcast address, sending one or more spoofed deuthentication packets from one or more sniffers to the Unauthorized AP with the intruding wireless station's wireless MAC address as source address with reason code "Auth Leave", sending one or more spoofed "disassociation" packets from one or more sniffers with the Unauthorized AP's wireless MAC address as source address to the intruding wireless station's MAC address or to a broadcast address, and sending one or more spoofed disassociation packets from one or more sniffers to the Unauthorized AP with the wireless client's wireless MAC address as source address.

Certain additional details about the prevention process can be found in the following patent applications/patent application publications, which are commonly assigned, and each of which is hereby incorporated by reference herein: U.S. Patent Application Publication No. 20060165073, entitled "Method and a system for regulating, disrupting and preventing access to the wireless medium", published on July 27, 2006; U.S. Patent Application No. 11/026,473, entitled "Method and system for scheduling of sensor functions for monitoring of wireless communication activity", filed on December 29, 2004; and U.S. Patent Application No. 11/330,948, entitled "Method and system for disrupting undesirable wireless communication of devices in computer networks", filed on January 11, 2006.

In the preferred embodiment of the method of invention, step 802 can distinguish the APs that are connected to the LAN from those that are not connected to the LAN. This advantageously facilitates distinguishing between the Unauthorized APs and the External APs. The distinguishing between the Unauthorized APs and the External APs according to the present invention offers several benefits and/or advantages. For example, the distinguishing between the Unauthorized APs and the External APs can facilitate initiating intrusion prevention of step 804 in an automated fashion as the distinguishing as above can provide for avoiding disrupting neighbor's wireless network via intrusion prevention. As another example, the distinguishing between the Unauthorized APs and the External APs can provide for avoiding false alarms on intrusion. In a typical office environment, the sniffer can typically detect wireless communication associated with several APs other than the Authorized APs. Among these several APs other than the Authorized APs, some APs can be the External APs (e.g., APs in neighbor's wireless network, municipal WiFi APs etc.) and the others can be the Unauthorized APs (e.g., AP connected by unassuming or malicious employee to the LAN for providing unauthorized access to the LAN). With the ability to distinguish between the External APs and the Unauthorized APs, the security system can avoid raising intrusion alarms for External APs. This takes nuisance factor out of system operation as well as saves resources that would otherwise be wasted in chasing false intrusion alarms. Various embodiments to distinguish the APs that are connected to the LAN from those that are not connected to the LAN can employ correlation analysis between traffic detected over wired portion of the LAN and traffic detected over wireless medium.

Certain additional details about classifying the active APs can be found in the following patent applications/patent application publications/patents, commonly assigned, and each of which is hereby incorporated by reference herein: U.S. Patent Application Publication No. 20050195753, entitled "Method and system for detecting wireless access devices operably coupled to computer local area networks and related methods", published on September 8, 2005; U.S. Patent Application No. 10/931,926, entitled "Automated method and system for monitoring local area computer networks for unauthorized wireless access", filed on August 31, 2004; U.S. Patent Application Publication No. 20060193300, entitled "Method and apparatus for monitoring multiple network segments in local area networks for compliance with wireless security policy", published on August 31, 2006; and U.S. Patent No. 7,002,943, entitled "Method and system for monitoring a selected region of an airspace associated with local area networks of computing devices", issued on February 21, 2006.

In an alternative exemplary embodiment, the system comprising sniffers and security server can provide certain protection to LANs including wireless networks which use outdated security controls such as WEP encryption. Certain organizations such as for example some retailers have already invested in equipment (e.g., handheld scanners) using WEP for wireless communication encryption. WEP encryption has been shown to be vulnerable to various attacks. Nonetheless, these organizations are forced to use WEP for wireless communication encryption as many of the handheld scanners do not support upgrading to the more robust encryption protocols.

Certain attack on WEP encrypted communication can crack the encryption key upon observing a certain number of encrypted packets. In a typical attack on WEP encryption, the attacker first collects a certain number of wireless packets (802.11 frames) that have been encrypted with an encryption key (which is unknown to the attacker to start with). The attacker can passively sniff such packets from wireless communication between the AP and its connected client. Alternatively, in order to expedite the collection of packets, the attacker can employ certain active injection techniques such as packet replays. The packet injection techniques prompt the AP and/or the client to send encrypted packets at a faster rate than what would be observed during their normal communication. Once a certain number of packets are collected, the WEP cracking algorithms such as one described by Fluhrer et al. in a paper titled "Weaknesses in the Key Scheduling Algorithm of RC4", which is also called as FMS attack (named after its discoverers Fluhrer, Mantin, and Shamir), can be run on the collected packets to infer the encryption key. Once encryption key is inferred, the attacker can eavesdrop and decrypt the wireless communication and can even get connected to the wireless network. The attacker can impersonate (e.g., spoof) the MAC address of an authorized client to remain undetected and/or get connected through APs which use MAC address based access control.

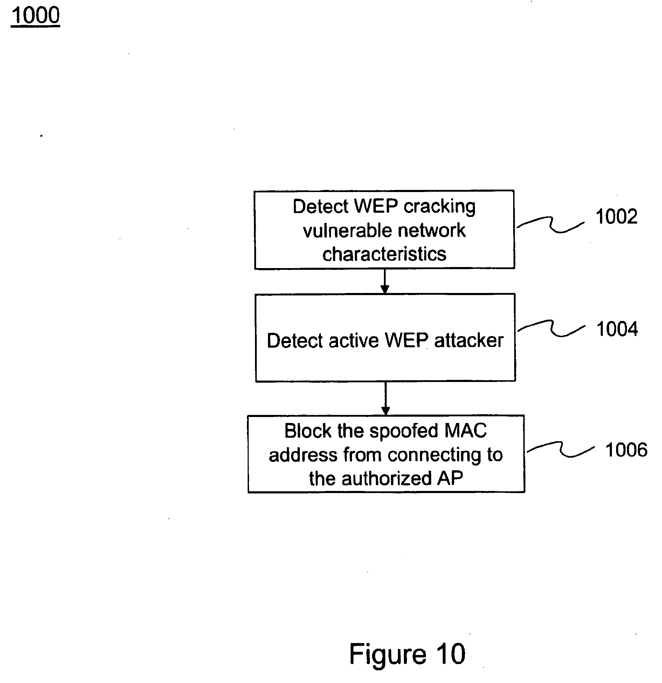

In an embodiment, the present invention provides certain protection for WEP encrypted communications. An exemplary method 1000 for providing certain protection for WEP encrypted communications according to an embodiment of the present invention is illustrated in Figure 10. This diagram is merely an example, which should not unduly limit the scope of the invention. One of ordinary skill in the art would recognize other variations, modifications, and alternatives based on the teachings of the present specification. As shown, the method can detect characteristics of the wireless network which simplify the WEP key cracking for the attacker (step 1002). For example, the FMS and certain other key cracking algorithms use certain values in the WEP encrypted packets called "weak IVs" (Initialization Vectors) for the key cracking. The system of present invention can generate alerts when weak IVs are detected in packets transmitted from devices in the authorized wireless networks. As yet another example, having certain setting for parameter called PSPF (Publicly Secure Packet Forwarding) on the authorized APs simplifies the active injection based attacks. The method and system of the present invention can generate notifications if such PSPF setting is detected on authorized AP.

As shown in Figure 10, the method can detect the WEP attacker using active injection (step 1004). The presence of active injection attacker can be detected via detection of abnormally high volume of ARP request packets with the same value of IV in them being transmitted over the wireless channel of the AP. In this embodiment, the attacker captures a legitimate ARP request transmitted from the station, and replays it multiple times to extract ARP responses from the AP. Alternatively or in addition, occurrence of impersonation for the station's MAC address, often called as MAC address spoofing, can also be detected to infer the presence of active WEP attacker. According to certain technique to detect MAC address spoofing, packets including the MAC address as the source/transmitter of the packets are analyzed. More particularly, the sequence numbers included within the packets are analyzed. In the absence of MAC address spoofing, the sequence numbers typically increase with time in a regular fashion, i.e., until wraparound occurs. In the presence of station MAC spoofing, anomaly can be detected among sequence numbers. As merely an example, the sequence numbers can be seen to go forward and backward with time. Certain additional details about detecting MAC address spoofing can be found in the commonly assigned Patent Application No. 11/770,760, entitled "Method and system for detecting address rotation and related events in communication networks", filed on June 29, 2007, which is hereby incorporated by reference herein.

The method 1000 can detect an attacker connecting to the authorized wireless network using the cracked key via detection of frames including spoofed client MAC address. The sniffers can block the client's MAC address from connecting to the AP (e.g., using deauthentication based prevention technique) (step 1006). This can foil the active injection based WEP attack and/or foil the attacker from connecting to the network using the cracked WEP encryption key. In an alternative embodiment, step 1006 can be performed even if active injection WEP cracking is not detected as in step 1004. This is to protect from passive WEP cracking attacker.

In yet an alternative exemplary embodiment, the system comprising sniffers and security servers can detect certain Man-in-the-Middle attacks, for example, which can be launched via a MAC spoofing process. In the MAC spoofing process, an attacker can operate an AP in a vicinity of the authorized wireless network which masquerades as an AP in the authorized wireless network, for example, by advertising the same identity information (e.g., wireless MAC address, SSID etc.) as that of the authorized AP. Moreover, the attacker AP can deploy techniques such as high gain antennas to increase its signal strength. Such an AP can lure stations in the authorized wireless network with or without their knowledge into connecting to it and then exploit the stations by acting as Man-in-the-Middle in the stations' wireless communication.

The method according an embodiment of the invention to detect MAC spoofing works by capturing beacon (or probe response) packets transmitted from an AP with a given MAC address, and recording values contained in the TSF (Time Stamp Field) of the beacon packets. The TSF is a 64-bit field in the IEEE 802.11 beacon packets that contains AP's timestamp. The TSF value represents value in microseconds and increments as the time progresses (for examples, by one count every microsecond interval). The TSF counter starts from zero every time the AP device is reset/(re)started. The method of present invention exploits this fact by computing an approximation to the reset/(re)start time of the AP device with a given MAC address from the TSF value contained in the captured beacon packet (e.g. reset/(re)start time = time instant the beacon packet from a given MAC address is captured - the TSF value), and detecting if reset/(re)start times computed for a given MAC address are apart from each other beyond reasonable margin of error (e.g. 1 second). If so, MAC spoofing (i.e., presence of attacker AP masquerading as authorized AP) is inferred.

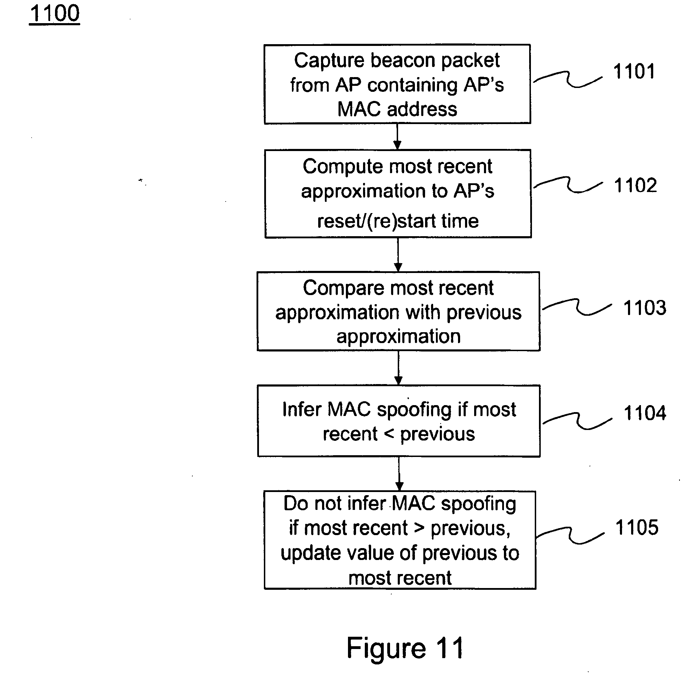

A method 1100 to detect MAC spoofing according to a specific embodiment is illustrated in Figure 11. This diagram is merely an example, which should not unduly limit the scope of the invention herein. One of ordinary skill in the art would recognize many variations, modifications, and alternatives. The method advantageously eliminates false positives resulting from an authorized AP indeed undergoing a reset/(re)start operation. In step 1101, a beacon packet transmitted from an AP with a given MAC address is captured by the sniffer. In step 1102, a most recent approximation to reset/(re)start time of the AP with the given MAC address is computed as the capture time of the beacon packet minus the TSF value in the beacon packet. In step 1103, the most recent value of approximation is compared with the approximation value computed (and stored) from a beacon packet from the given MAC address captured by the sniffer in the past. Preferably, the comparison is done considering a reasonable margin of error, for example 1 second or 10 seconds. As shown in step 1104, if the most recent approximation value is found smaller than the past computed value, MAC spoofing is inferred. As shown in step 1105, if the most recent approximation value is found greater than the past computed value, MAC spoofing is not inferred so as to avoid false alarms due to reset/(re)start of an authorized AP.

Many alternative embodiments of the method to detect MAC spoofing are possible. In an embodiment, the hardware/software directed to execute the steps of the method are provided within a single sniffer. In an alternative embodiment, the foregoing method to detect MAC spoofing is performed in a distributed fashion. That is, information associated with or derived from TSF values in beacon packets from a given MAC address captured by plurality of sniffers is received by the security server and processed as described to detect MAC spoofing. The information associated with local reference times at different sniffers is used during the processing. The distributed operation advantageously detects MAC spoofing wherein the authorized AP and the attacker AP are within the radio coverage range of different sniffers, but none of these different sniffers is able to capture beacon packets from both of these APs. In an embodiment, when a spoofing is detected for a MAC address, the indication of the MAC address is passed to a prevention process.

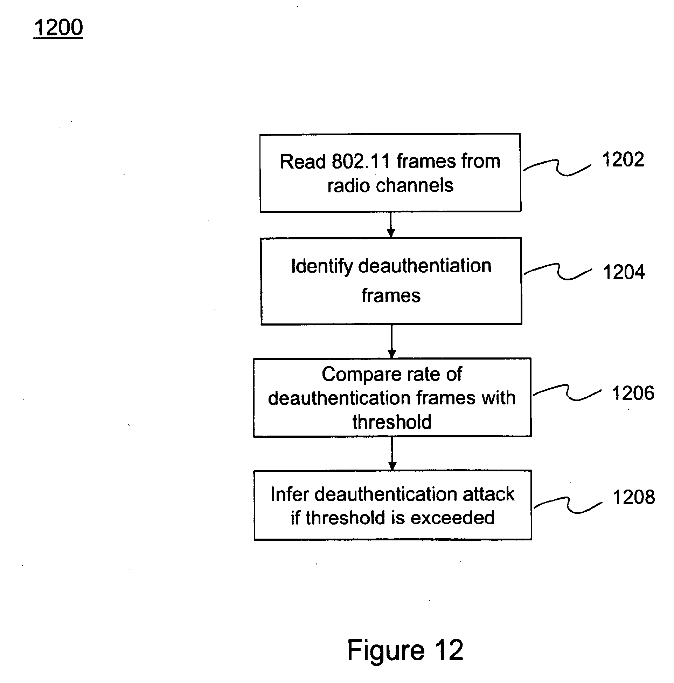

In yet a further alternative exemplary embodiment, the system comprising sniffers and security servers can detect certain DOS attacks. A logical flow of steps in a method 1200 for detecting certain deauthentication attack according to an embodiment of the present invention is illustrated in Figure 12. This diagram is merely an example, which should not unduly limit the scope of the invention herein. One of ordinary skill in the art would recognize many variations, modifications, and alternatives.

As shown in Figure 12, at step 1202, the sniffers scan radio channels and collect information about frames (an IEEE 802.11 format packet is often referred to as a frame) observed on those channels. At step 1204, a subset of frames among the observed frames that are of type "deauthentication" and include as source address a wireless MAC address of an authorized AP are identified. At step 1206, a number of such frames detected over a certain period of time is computed and compared against a predetermined threshold value. If a threshold is exceeded, at step 1208 an indication of deauthentication attack is generated. Certain additional details about detecting DOS attacks in wireless networks can be found in the U.S. Patent Application No. 11/770,760, entitled "Method and system for detecting address rotation and related events in communication networks", commonly assigned, which is hereby incorporated by reference herein.

In an embodiment, when a DOS attack is detected, the indication is passed to a prevention process. The prevention process can suppress the wireless transmissions of the DOS attacker to certain extent and facilitate legitimate communication to continue a certain extent. Certain additional details about the prevention process for DOS attacks can be found in the U.S. Patent Application Publication No. 20060165078, entitled "Method and system for allowing and preventing wireless devices to transmit wireless signals", published on July 27, 2006, commonly assigned, which is hereby incorporated by reference herein.

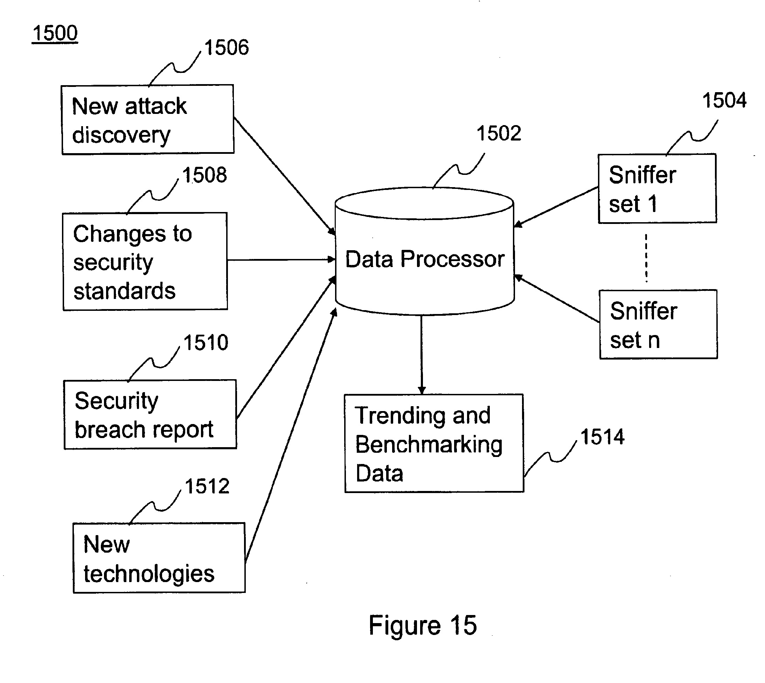

Figure 15 illustrates an exemplary schematic 1500 of data processing for trending and benchmarking report. As shown data processor 1502 can receive wireless activity information monitored by sniffer sets (1504) positioned at premises of customer entities. The processor can receive information such as discovery of attacks (1506), regulatory amendments (1508), information about security breaches (1510), availability of better security technologies (1512) and like. Portions of this information can be processed by the data processor to generate trending and benchmarking data (1514) in an embodiment of the present invention. In an embodiment, the trending and benchmarking report is continuously updated as new information is received. In an embodiment, the wireless vulnerability score of a selected customer entity, e.g. absolute score and/or score relative to other customer entities is continuously updated, e.g., as new information is received about wireless activity from sniffers positioned within premises of the selected customer entity or form sniffers positioned within premises of the other customer entities. In an embodiment, the trending and benchmarking report for the selected customer entity can be delivered on a continuous basis, e.g., using data streaming technology. Alternatively, it can be delivered on demand.

It would be appreciated that, in an embodiment, the present invention provides for trending and benchmarking of wireless vulnerabilities in an automated fashion and on ongoing basis. That is, once the sniffer sets are positioned on premises of the customer entities and once they go online and connect to security server, they start sending wireless activity information to the security server, which in turn automatically processes the received information to generate trending and benchmarking data. A selected customer entity can benchmark itself against other customer entities even if the selected customer entity does not have direct access to wireless activity information of the other customer entities. Benchmarking against the other customer entities also overcomes the difficulty of lack of established security standards in certain embodiments. In an embodiment, the present invention advantageously improves over a manual process wherein a person has to visit several sites to compile wireless activity information and then process it offline to draw certain conclusion. Such manual process is unscalable, can only perform spotty site surveys, cannot be done on a continuous basis, and is generally expensive due to human effort involved therein.

Thus in an embodiment, the present invention provides a Software-as-a-Service (SaaS) based method for providing wireless vulnerability management for local area computer networks, the method comprising: providing a security server, the security server being hosted by a service provider entity, the security server being coupled to the Internet, the security server being adapted to provide analysis of data associated with wireless vulnerability management for a plurality of local area computer networks of a plurality of customer entities, respectively; creating a plurality of workspaces for wireless vulnerability management for the plurality of the customer entities on the security server, respectively, the creating the workspaces being responsive to requests from the customer entities to subscribe to wireless vulnerability management; receiving connection requests at the security server over the Internet from a plurality of sets of sniffers, the plurality of the sets being deployed at premises of the plurality of the customer entities, respectively, a set comprising one or more sniffers; receiving at the security server information associated with wireless activity monitored by the plurality of the sets of the sniffers at the premises of the plurality of the customer entities, respectively, the receiving being receiving over the Internet; processing the received information associated with the wireless activity to generate at least trending data or at least benchmarking data; and providing the at least the trending data or the at least the benchmarking data to a customer entity from the plurality of the customer entities responsive to request from the customer entity.

The trending data and/or the benchmarking data can include wireless vulnerability score of the customer entity relative to one or more other customer entities. The real identities of the one or more other customer entities can be hidden in a preferred embodiment for privacy purposes.

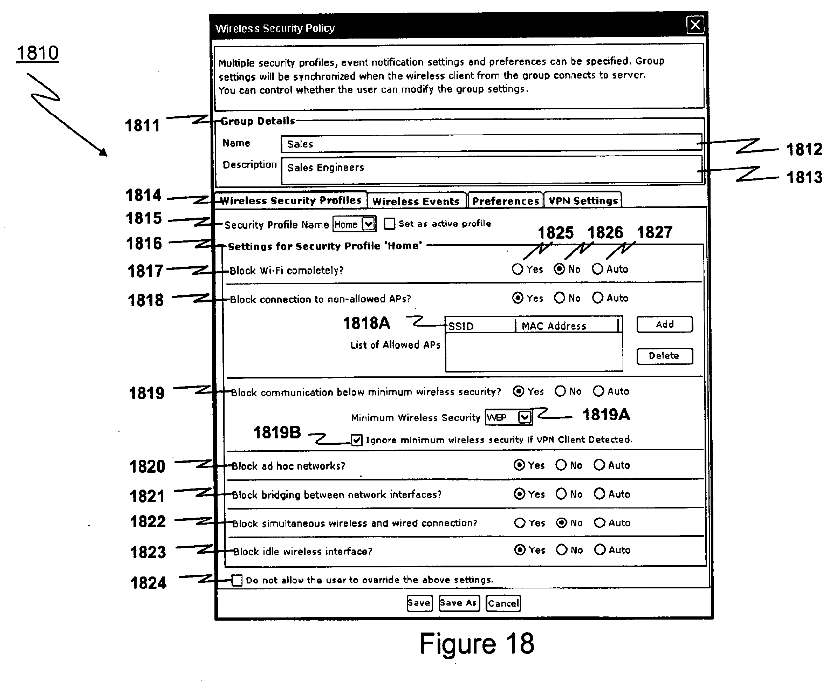

Figures 18, 19, 20, 21, 22A, 22B, 23A, 23B, 24A, 24B, 24C show exemplary computer screenshots of user interface associated with client security management module according to embodiments of the present invention.

Figure 18 illustrates an exemplary computer screenshot for specifying wireless security policy in client security management module. In a specific embodiment, this screen can be displayed to a customer entity user who is logged into the workspace associated with the customer entity on the security server. It can facilitate setting up and managing wireless security policy for a selected wireless client (e.g., a selected laptop of a selected employee). The wireless client preferably includes a client software module (1608). In another embodiment, wireless security policies can be set up for one or more groups of wireless clients. As merely an example, laptops belonging to employees can be classified into different groups (e.g., based on business functions, based on organization hierarchy, based on work location etc.). In this embodiment, identities of the computing devices (e.g., wireless clients such as laptops, desktops etc.) can be provided in various groups. When the wireless security policy setting associated with a group is created/modified, the setting is communicated to the client software module in the wireless client belonging to that group when the client software module connects to the security server. The screen 1810 illustrated in Figure 18 can facilitate setting up (or modifying previously set up) groups and/or setting up (or modifying previously set up) wireless security policies for the groups.

As shown in the screenshot 1810, under Group Details 1811, in the Name window 1812, a group name can be specified. Description of the group can also be specified in the Description window 1813. Moreover, under the Wireless Security Profiles tab 1814, the Security Profile Name 1815 can be selected. Examples of security profile are Home, Work, Away etc. A selected wireless security policy can be associated with a selected wireless security profile. In this embodiment, the wireless security policy associated with the Home profile can be enforced when the wireless client (e.g., employee's laptop) is operating within vicinity of the employee's home (e.g., employee uses the laptop to connect to AP at home). The wireless security policy associated with the Work profile can be enforced when the wireless client is operating within vicinity of the employee's workplace (e.g., office). Moreover, the wireless security policy associated with the Away profile can be applied when the wireless client is operating away from the vicinity of home or workplace (e.g., employee uses the laptop to access hot spot wireless coverage in a coffee shop). In this embodiment, the client software module can use appropriate wireless security profile, for example, based on where the wireless client is operating. In an embodiment, the client software module automatically identifies where the wireless client is operating and selects (or switches) wireless security profile accordingly. In a specific embodiment of the automatic identification of the wireless security profile, the client software module can ascertain one or more parameters (e.g., address of DHCP server, address of DNS server, address of router one or more hops away, any information included in messages such as DHCP service options) associated with the network to which the wireless client is connected using wired and/or wireless interfaces. In an embodiment, these parameters can be mapped (e.g., configured) to the wireless security profiles. For example, DHCP IP address 192.168.1.2 and DHCP service option xyz can be mapped to "Work" profile, while DNS IP address 64.23.2.1 and next hop router IP address 10.10.1.3 can be mapped to the "Home" profile. As merely an example, if non matching parameters to "Home" or "Work" are detected, the current security profile is taken to be "Away". In an alternative specific embodiment, the client software module can identify the appropriate security profile based upon the wireless signals detected, for example, based upon identities of one or more wireless access points that are available in the vicinity. In an alternative embodiment, appropriate wireless security profile is selected (e.g., manually) by the user of the wireless client.

Under the Settings for Security Profile (1816), a wireless security policy associated with the selected wireless security profile can be configured. As shown in screen 1810, one or more items 1817-1824 associated with the wireless security policy can be listed under the heading 1816. For each item, for example, choices can be provided, namely Yes (1825) (e.g., prompt the user of the wireless client before processing an action associated with the item), No (1826) (e.g., do not process an action associated with the item), or Auto (1827) (e.g., process action associated with the item without prompting the user of the wireless client). In an embodiment, the action can comprise disabling the wireless communication device (wireless interface) in the wireless client. In an alternative embodiment, the action can comprise generating an event (e.g., alert or alarm). In yet an alternative embodiment, the action can comprise changing the risk level associated with the client from a current level to a new level (e.g., Low/L to High/H, High/H to Medium/M etc.).

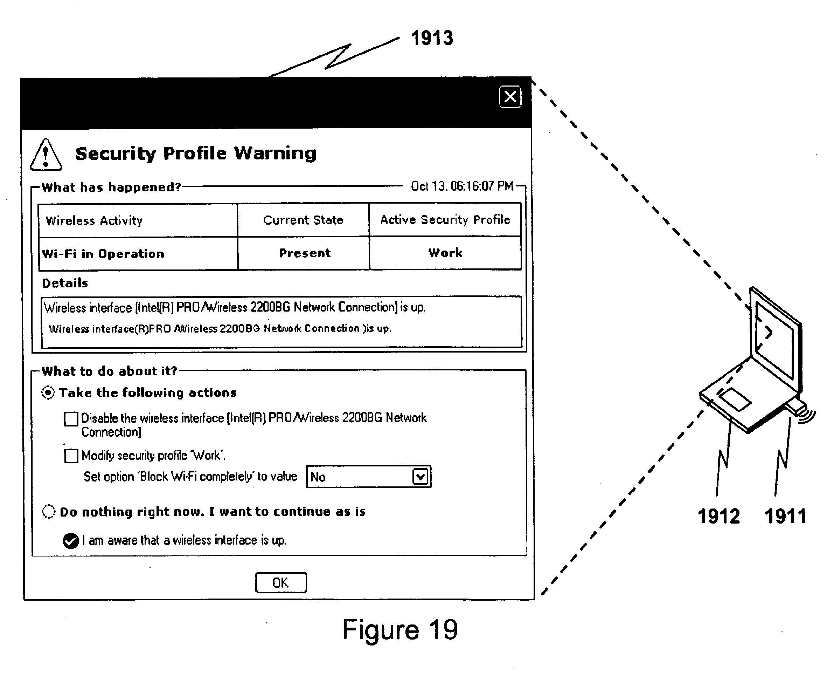

As shown, item 1817 can indicate a wireless security policy comprising completely blocking Wi-Fi (e.g., wireless communication). In an embodiment, this policy can indicate disabling wireless interfaces on the wireless client. In the embodiment where option 1825 is selected, if the client software module detects a wireless interface (e.g., radio communication device) to be active on the wireless client (e.g., laptop), a warning message can be displayed (e.g., on the laptop screen) prompting the user to take certain action. The user can then select an option to block (e.g., disable, turn off etc.) the detected wireless interface. See exemplary warning message illustrated in Figure 19. As shown therein, wireless interface 1911 on laptop 1912 has been turned on, thus a message 1913 is displayed on the screen on the laptop. In the alternative embodiment where option 1827 is selected, the wireless interface is automatically turned off (e.g., disabled) by the client software module if it detects that the interface has become active (e.g., if the user activates the wireless interface knowingly or inadvertently (e.g., using software switch, hardware switch, inserting new card, rebooting the computer etc.)). This preferably prevents the wireless client from engaging in any wireless communication as per the wireless security policy. In these embodiments, the client software module can utilize the interface 1610 or any other interface to disable the wireless interfaces on the wireless client.

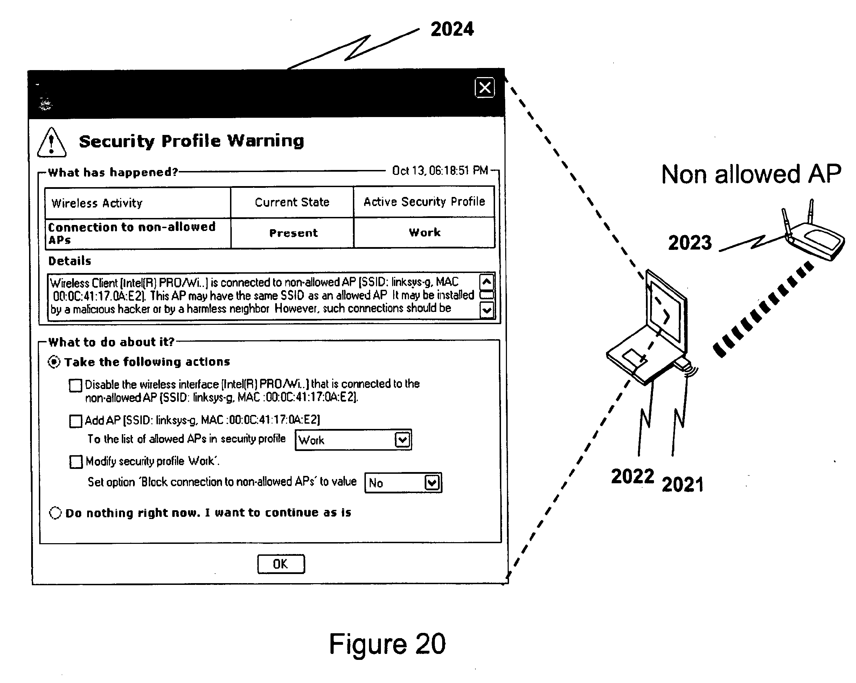

As also shown in Figure 18, item 1818 can indicate a wireless security policy comprising blocking wireless connection to non-allowed APs. For example, a list of allowed APs can be provided in window 1818A. In this embodiment, an allowed AP can be identified using its MAC address (e.g., wireless MAC address also called as BSSID/Basic Service Set Identifier). Alternatively, a group of APs (e.g., having different BSSIDs) can be identified via their common SSID/Service Set Identifier. Yet alternatively, an allowed AP can be identified by specifying both its SSID and its BSSID. According to this embodiment of the wireless security policy, if the client software module detects that the radio communication device (e.g., wireless interface) on the wireless client (e.g., laptop) connects to an AP which is not among the list of specified allowed APs, warning message can be displayed prompting the user to take action (see exemplary warning message illustrated in Figure 20) or the wireless interface can be automatically disabled, depending upon the embodiment. The client software module can use interface 1610 or any other interface to determine identity (e.g., BSSID, SSID, channel etc.) of an AP to which the wireless interface within the wireless client is connected. As shown in Figure 20, the wireless interface 2021 on the wireless client (laptop 2022) is connected to a non-allowed AP 2023. The warning message 2024 is displayed on the screen of the wireless client 2022.

Item 1819 in Figure 18 can indicate a wireless security policy comprising blocking wireless communication that occurs below certain minimum level of security. Various encryption and authentication techniques can be used for wireless communication (e.g., wireless communication between AP and wireless client). As merely examples, these techniques can include WEP (Wired Equivalent Privacy), WPA (WiFi Protected Access), 802.11i i (also called as RSN or Robust Security Network) and others. In this embodiment, the wireless security policy can specify a minimum tolerable level of security (e.g., by choosing appropriate option in the drop down menu 1819A). For example, WEP is commonly used but can be compromised. Hence, WEP can be categorized as a medium risk wireless security mechanism. As another example, Open/None (e.g., unencrypted and/or unauthenticated) wireless communication between computers and APs can be considered high risk. As per this wireless security policy, if the client software module detects (e.g., by querying the NDIS or any other interface) that the wireless client is engaged in wireless communication that uses wireless security technique below the specified minimum tolerable level, warning message can be displayed prompting the user to take action (e.g., change wireless security settings) or the wireless interface can be automatically disabled, depending upon the embodiment. In an embodiment, an option 1819B can be provided to ignore this policy if VPN (virtual private network) client is detected on the wireless client. The VPN clients typically use end-to-end security using, for example, IPSec (IP Security Standard from the Internet Engineering Task Force).

In a similar or any other manner, wireless security policy can be specified comprising blocking ad hoc networks (e.g., if the wireless interface on the wireless client is detected to be using ad hoc connection), blocking bridging or ICS between interfaces (e.g., forwarding packets between wired and wireless interfaces of the wireless client), and blocking simultaneous use of wireless and wired connections, as shown by 1820, 1821 and 1822 in Figure 18, respectively.

As also shown in Figure 18, item 1823 can indicate a wireless security policy comprising disabling (e.g., turning off, blocking, shutting down etc.) wireless interfaces on the wireless client device when they are idle (e.g., not involved in active wireless communication, active and connected to another device but not doing any data transfer over the connection etc.). Such a policy can preferably prevent wireless attacks wherein the attacker lures idle wireless interfaces into connecting to the attacker device. One such attack is called as Blackhat exploit. Notably, the idle wireless interface can be probing (e.g., scanning) for available wireless devices (e.g., APs) in the vicinity (e.g., by passive or active scanning as described in the IEEE 802.11 standard or by other appropriate means). In an embodiment, the client software module can infer that a selected wireless interface on the device is idle, if it is not associated (e.g., connected) to an AP or another client device for a predetermined period of time. Thereafter warning message can be displayed prompting the user to take action or the wireless interface can be automatically disabled, depending upon the embodiment.

Additional security policies such as those related to one or more of Bluetooth network interface, Infrared network interface, EvDO network interface, EvDV network interface, WiMax network interface etc. can also be set up. In an embodiment, a separate security policy can be set up for each network interface.

The wireless security policy can also specify whether or not to allow the user (e.g., employee) of the wireless client (e.g., laptop) to override the settings of the wireless security policy. In this embodiment, if item 1824 is selected, the user cannot change the wireless security policy settings (e.g., while using or operating his/her the laptop). If item 1824 is not selected, the user can change one or more of the wireless security policy settings while operating the laptop.

In an embodiment, the screen such as or similar to 1810 can be displayed from a client utility e.g., software utility installable on a laptop, desktop, PDA etc. The user can perform necessary security policy configuration using the screen and then upload the configuration to the security server. From the security server, the configuration is communicated to appropriate wireless clients when they connect to the security server.

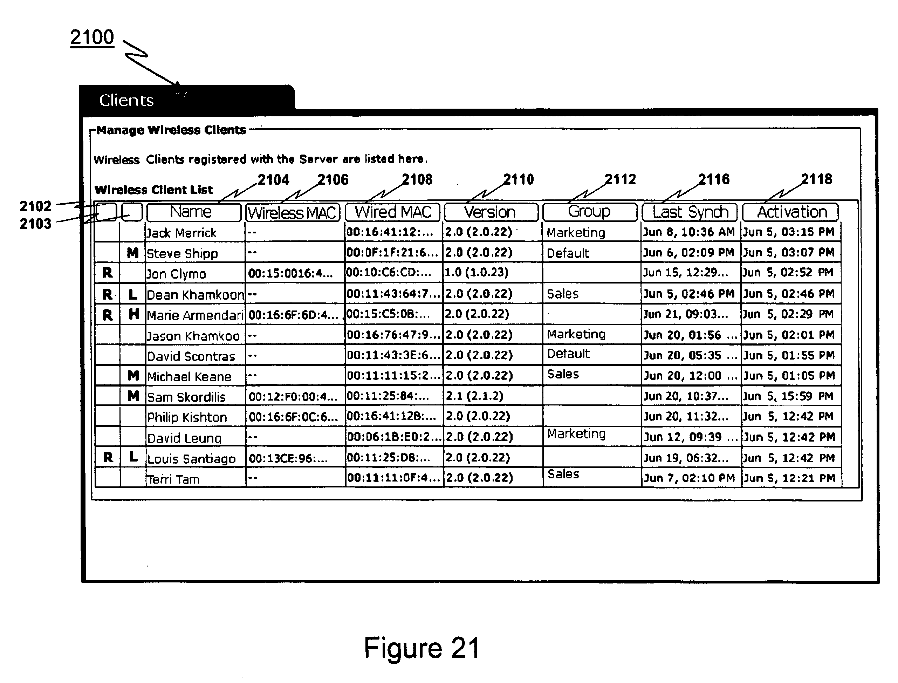

In a preferred embodiment, when the wireless client software module initiates connection to the security server over the Internet, authentication process is preferred, e.g., using shared key, cookie, secret exchanged during previous authentication process, public key cryptography, biometrics, smart cards or any other method. The connection can be using TCP (Transport Control Protocol), UDP (User Datagram Protocol) or other protocols. The choice of wireless security policy settings that are transferred from the security server to a specific client software module can depend upon identity of a group in which the client software module (or the wireless client including the client software module) belongs. In an embodiment, when a client software module (e.g., within the wireless client) connects to the security server and preferably successfully completes the authentication process, the details about the wireless client can be displayed on the user interface associated with a workspace of the corresponding customer entity on the security server. An exemplary computer screenshot 2100 of a user interface of the server software module is illustrated in Figure 21. As shown threin, the screenshot shows a list of wireless clients which have/are connected to the server. The column 2102 indicates the status of client software module in the wireless client (e.g., installed but not running/N, running/R etc.). Risk level (e.g., Low/L, Medium/M, High/H etc.) of the wireless client is indicated in column 2103. The column 2104 can indicate the name (e.g., host name) of the wireless client. Columns 2106 and 2108 can indicate MAC addresses of the wireless and the wired interfaces, respectively, that are coupled to the wireless client. Preferably, these MAC addresses, risk level and/or host name are detected and/or reported by the client software module to the server software module. Column 2110 can indicate the version of the client software module in the wireless client. The group of the wireless client is indicated in column 2112. In an embodiment, a newly detected wireless client or a wireless client detected after a period of inactivity/disconnection can be assigned to a default group. A specific group can be assigned to the wireless client thereafter (e.g., by using pull down menus). Column 2116 indicates the last time of synchronization between the server software module and the client software module (e.g., for the purposes of synchronizing wireless security policy). Optionally, next scheduled synchronization time can also be indicated. Column 2118 can indicate the time when the client software module is activated on the wireless client (e.g., after inputting the license key). Other type of information can also be included in these and/or additional columns, and will be apparent to those with ordinary skill in the art.

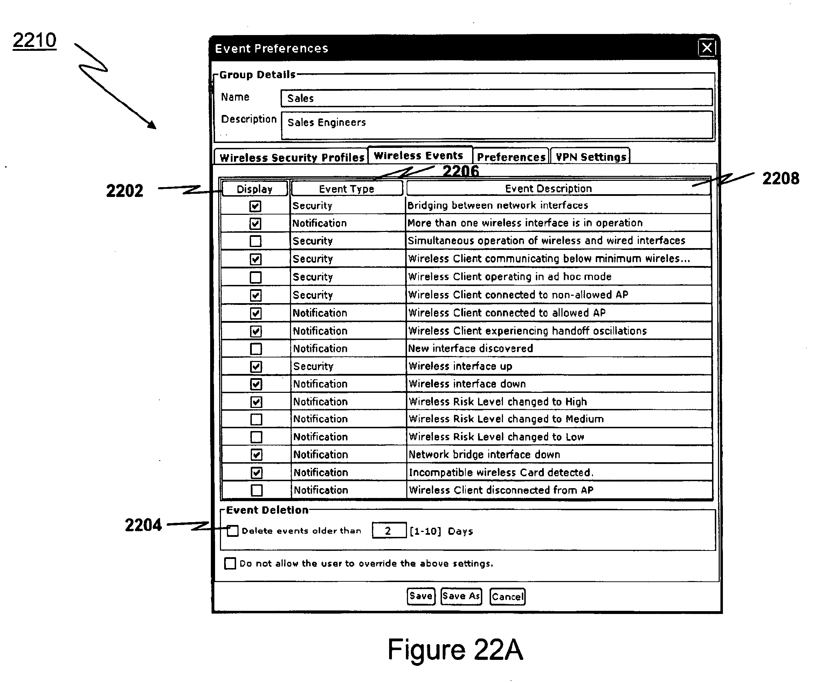

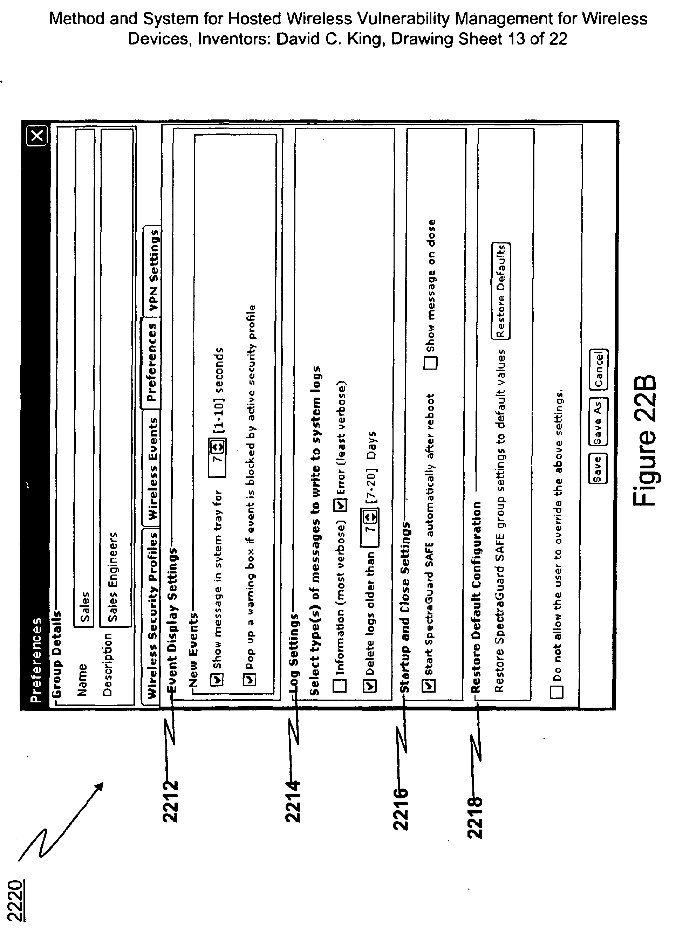

In some embodiments, preferences for generating and/or logging of events by client software modules on the wireless clients within a selected group can be configured in the security server and transferred to the client software modules. Exemplary computer screenshots 2210 and 2220 that facilitate event preferences are shown in Figures 22A and 22B. As shown in Figure 22A, it can be indicated in column 2202 as to whether selected events are to be displayed (and/or generated) on the display device coupled to the wireless client, i.e., in response to detection of corresponding activity by the client software module. The event preferences can include indication of time period (e.g., 1 day, 10 days etc.) after which older events are to be deleted (2204). The type of an event (e.g., security related, notification related etc.) and event description can be indicated as in columns 2206 and 2208 respectively. As shown in Figure 22B, additional event preferences and other preferences can be indicated. For example, under heads 2212, 2214, 2216, and 2218 additional preferences can be specified. An exemplary list of events is as follows but there can be many others.

### Name: Bridging between network interfaces:

Description: Bridging between network interfaces (interface ID1, interface ID2, etc.) is in operation. A bridge allows two separate networks to be connected to each other using the network interfaces on the computer. If the bridging is happening between the wireless and wired interfaces, your computer is considered to be at high risk because an unauthorized user can gain access from one network to another via the bridge.

Recommended Action: Remove the network bridge. System will automatically prompt you if you say YES to block network bridging in the wireless security profile. To disable the bridge manually, go to Interfaces tab. If you are using Windows Operting System, go to Start -> Settings -> Control Panel. Double click on Network Connections. Select the Network Bridge and delete it.

### Name: More than one wireless interface is in operation

Description: Check if another wireless interface has inadvertently started. Disable such a wireless interface. In most common networking applications, only one wireless interface is needed.

Recommended Action: In most common networking applications, only one wireless interface is needed. Check if another wireless interface has inadvertently started. Disable the unwanted wireless interfaces. System will help you disable it from the Interfaces tab. If you want to disable the interface from Windows, go to Start -> Settings -> Control Panel. Double click on Network Connections. Select the unwanted wireless interface and disable it.

### Name: Simultaneous operation of wireless and wired interfaces

Description: Both wireless (interface ID1) and wired (interface ID2) interfaces are simultaneously in operation. This means that you may be connected to the wireless and the wired network. This can become a major security threat if bridging is enabled between the interfaces. It will allow malicious users to access the corporate network through the wireless interface.

Recommended Action: If there is no bridging between the two interfaces, no action needs to be taken. If network bridging is happening, disable the network interface connected to the untrusted network. Typically, it is recommended that you disable the wireless interface when you are already connected through the wired interface. System will automatically prompt you if you say YES to block simultaneous wireless and wired connections in the wireless security profile. To disable the wireless interface manually, go to Interfaces tab. If you want to disable the wireless interface from Windows, go to Start -> Settings -> Control Panel. Double click on Network Connections. Select the wireless interface and disable it.

### Name: Wireless client communicating below minimum wireless security

Description: Wireless interface on client (interface ID) is communicating with [COMMUNICATION_SECURITY_ACTUAL]. This is below the minimum wireless security [COMMUNICATION_SECURITY_SPECIFIED] for the currently active security profile. If you are using a VPN connection, you should ignore this event. Using low wireless communication security may make your computer vulnerable to wireless attacks. A hacker listening with a network analyzer may be able to crack the security and snoop on your data. If you use WEP, your computer is considered to be at medium risk. If you use OPEN security, your computer is considered to be at high risk.

Recommended Action: To set up communication with minimum security in Windows, go to Start -> Settings -> Control Panel. Double click on Network Connections. Select the relevant wireless interface. Right click and select Properties. Select the Wireless Networks tab. Select the preferred network and click Properties. In the Wireless Network Key section, set up the communication security. It is recommended that you use a VPN connection to ensure that data communication is completely secure regardless of the communication security being used.

### Name: Wireless client operating in ad hoc mode

Description: Wireless client is operating in ad hoc mode using interface [INTERFACE_NAME]. This client may from ad hoc wireless networks with other devices. Ad hoc networks pose security threat. Unauthorized wireless clients can connect to the Authorized Clients using an ad hoc network and launch security attacks over such connection.

Recommended Action: System will automatically prompt you to disable the relevant wireless interface if you say YES to block ad hoc networks in the wireless security profile. To disable the ad hoc network manually, go to Interfaces tab and disable the wireless interface involved in the ad hoc network. It is recommended that you configure your computer to avoid ad hoc connections. To configure Windows to avoid ad hoc mode, go to Start -> Settings -> Control Panel. Double click on Network Connections. Select the relevant wireless interface. Right click and select Properties. Select the Wireless Networks tab. Click on Advanced button. Select Access Point (infrastructure) networks only. Click Close followed by OK.

### Name: Wireless client connected to non-allowed AP

Description: Wireless client using interface [INTERFACE_NAME/INTERFACE_ID] is connected to non-allowed AP [SSID: SSID_NAME, MAC: MAC_ADDRESS]. This AP may have the same SSID as an authorized AP. It may be installed by a malicious hacker or by a harmless neighbor. However, such connections should be avoided because they pose a security threat. You may unwittingly provide confidential information (e.g. passwords) to a hacker through such an AP.

Recommended Action: System will automatically prompt you to take action if you say YES to block connection to non-allowed APs in the wireless security profile. To manually disable the wireless interface connecting to a non-allowed AP, go to the Interfaces tab. To add a new AP to the list of allowed APs, go to Admin -> Wireless Security Profiles. To configure Windows to avoid connection to non-allowed APs, go to Start -> Settings -> Control Panel. Double click on Network Connections. Select the relevant wireless interface. Right click and select Properties. Select the Wireless Networks tab. Click on Advanced button. Uncheck automatic connection to non-preferred networks. Click Close followed by OK.

### Name: Wireless client connected to allowed AP

Description: Wireless Client [INTERFACE_NAME] is connected to Allowed AP [SSID: SSID_NAME, MAC: MAC_ADDRESS]. This is an authorized connection.

Recommended Action: No action is normally needed for this event. If you believe that the AP has been wrongly classified as Allowed, delete it from the wireless security profile.

### Name: Wireless client experiencing handoff oscillations

Description: Client typically undergoes connection handoffs between APs when the signal strength from two APs fluctuates rapidly. This happens if a Client is located at the edge of radio coverage of two or more APs. The Client may also undergo excessive handoffs due to fluctuations in radio signal strengths caused by various environmental factors. Excessive handoffs are not desirable and can even prevent the Client from engaging in meaningful data communication.

Recommended Action: Excessive handoff associations on the wireless interface indicate an instability in the wireless network. You should temporarily disable the wireless interface and use a wired network interface. Contact your network administrator to report the wireless handoffs. Enable the wireless interface after the wireless network problem is corrected.

### Name: New interface discovered

Description: New interface [INTERFACE_NAME/DETAILS] has been discovered. Check the Interfaces tab for details on active interfaces.

Recommended Action: If you intend to use this interface, no action needs to be taken. If this interface is wireless and you do not intend to use it, you should disable it. This will avoid accidental associations with non-allowed Aps. To disable the wireless interface manually, go to Interfaces tab. If you want to disable the wireless interface from Windows, go to Start -> Settings -> Control Panel. Double click on Network Connections. Select the wireless interface and disable it.

### Name: Wireless interface up

Description: Wireless interface [INTERFACE_NAME] is up. Check the Interfaces tab for details on active interfaces.

Recommended Action: If you intend to use this interface, no action needs to be taken. If this interface is wireless and you do not intend to use it, you should disable it. This will avoid accidental associations with non-allowed Aps. To disable the wireless interface manually, go to Interfaces tab. If you want to disable the wireless interface from Windows, go to Start -> Settings -> Control Panel. Double click on Network Connections. Select the wireless interface and disable it.

### Name: Wireless interface down

Description: Wireless interface [INTERFACE_ID] is down. Network connectivity might get affected. Check the Interfaces tab for details on active interfaces.

Recommended Action: If you do not intend to use this interface, no action needs to be taken. If the wireless interface is down accidentally, you should enable it. To enable the wireless interface manually, go to Interfaces tab. If you want to disable the wireless interface from Windows, go to Start -> Settings -> Control Panel. Double click on Network Connections. Select the wireless interface and enable it.

### Name: Wireless Risk Level changed to High

Description: Wireless risk level of your computer has changed to High. Your computer is determined to be highly vulnerable to wireless attacks. Wireless risk level is determined based on the state of wireless activities on your computer.

Recommended Action: Go to the dashboard screen to see the new risk level. Click on Tell Me Why button. Click the Fix It link against the various wireless activities that turned the wireless risk level to High.

### Name: Wireless Risk Level changed to Medium

Description: Wireless risk level of your computer has changed to Medium. Your computer is determined to be vulnerable to wireless attacks. Wireless risk level is determined based on the state of wireless activities on your computer.

Recommended Action: Go to the dashboard screen to see the new risk level. Click on Tell Me Why button. Click the Fix It link against the various wireless activities that turned the wireless risk level to Medium. In some cases, you may have to live with a medium risk level if you have access to an environment that only provides WEP communication.

### Name: Network bridge interface down

Description: Network bridge interface [BRIDGE_INTERFACE_NAME/ID/DETAILS ON INTERFACES INCLUDED IN BRIDGE] is down. Network connectivity might get affected. Check the Interfaces tab for details on active interfaces.

Recommended Action: If you do not intend to use the network bridge interface, no action needs to be taken. If the network bridge interface is down accidentally, you should enable it from the Interfaces tab.

### Name: Incompatible wireless Card detected

Description: System has detected an incompatible wireless card [INTERFACE_NAME/ID/DETAILS] on this computer. This may sometimes cause system to function improperly.

Recommended Action: Insert a new wireless card on this computer. System is compatible with most wireless cards.

### Name: Wireless client disconnected from AP

Description: Wireless Client [INTERFACE_NAME] has disconnected from AP [SSID: SSID_NAME, MAC: MAC_ADDRESS].

Recommended Action: This is an informational event. Normally, no action is needed. If your wireless card is frequently disconnecting from the same AP, you may be receiving a very weak signal from that AP or there are too many Clients trying to connect to that AP. Try moving closer to the AP or changing your location. If the problem persists, contact your network administrator. You might need an extra AP for greater signal coverage near you. If your wireless card is frequently connecting and disconnecting from different Aps, your wireless card may be facing oscillations. Try moving closer to one of the Aps to get greater signal strength. If the problem persists, contact your network administrator. The placement of APs might not be planned properly.

According to an embodiment, information associated with communication activity of the wireless communication device can be collected using the client software module. The communication activity can include wireless connection of the wireless communication device to an access point with certain identity (e.g., BSSID, SSID etc.). The communication activity can include bridging or ICS operating between the wireless communication device and another interface (wired or wireless) within the wireless client. As yet another example, the communication activity can include ad hoc wireless connection. The information about communication activity can also include detecting whether the wireless communication device is idle and/or period for which it is idle (e.g., active but not connected to any other wireless device using wireless link). As another example, the information about communication activity can include information regarding whether the wireless communication device is active (enabled) or inactive (disabled). Information about the communication activity can also include information about data encryption (e.g., encryption method used such as WEP, WPA, 802.11 i, None etc.) used over the wireless link by the wireless communication device. Information regarding status (e.g., active, operating, disabled etc.) of VPN software in the wireless client can also be collected. Other types of information may also be collected. In an embodiment, respective event (alert/alarm) can be generated by the client software module. As merely an example, if the bridging or ICS is detected to be activated on the wireless client, "Bridging between network interfaces" event can be generated.

Information so collected can be compared with information associated with the wireless security policy to determine if the communication activity of the wireless communication device complies with the wireless security policy. Depending upon the embodiment, if one or more of the wireless security policy settings are violated, an action can be processed. As merely an example, if the wireless communication device in a wireless client is detected to be in an ad hoc connection, and the wireless security policy to block ad hoc networks has been set to Yes (see Figure 18, 1820), a warning message can be displayed for user to take appropriate action. As another example, if the wireless communication device in a wireless client is detected to be in an ad hoc connection, and the wireless security policy has been set to Auto, the wireless communication device (wireless interface) can be automatically disabled (e.g., without prompting the client to take action). In this embodiment, a message that the interface has been disabled (e.g., by the client software module) can be displayed for information of the user of the wireless client.

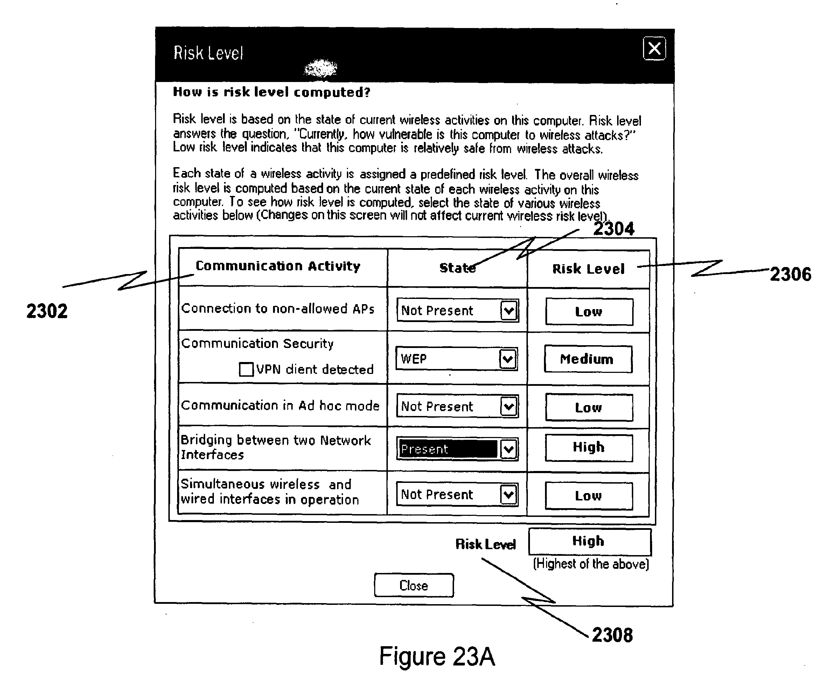

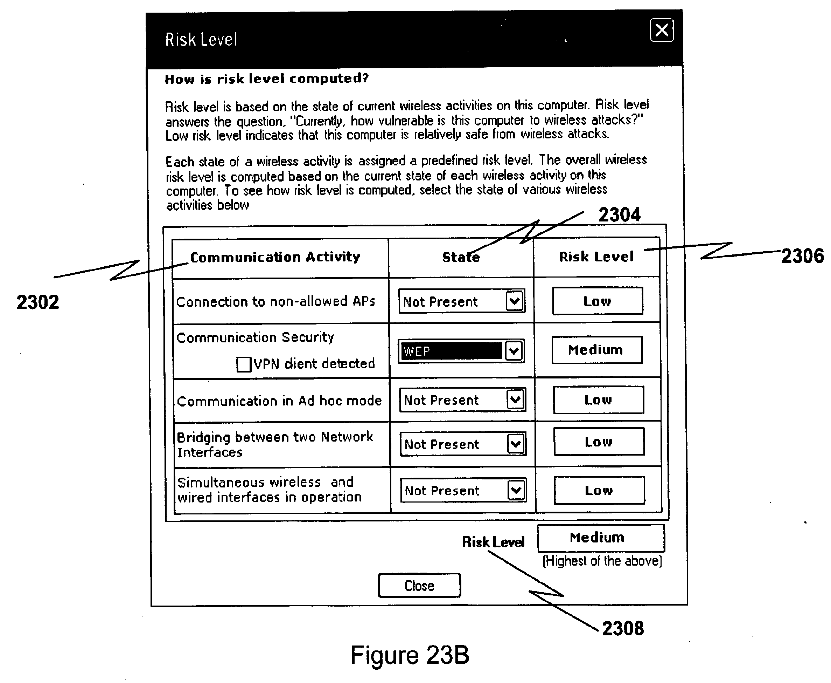

Depending upon the detected communication activity, inference on compliance/non-compliance with the wireless security policy, and/or nature of action processed, the risk level associated with the wireless client can be determined (e.g., L, H, M etc.). An exemplary manner of determining risk level of the wireless client is illustrated in Figures 23A and 23B. These diagrams are merely an example, which should not unduly limit the scope of the invention. As shown in Figure 23A and 23B, a list of various types of communication activities in shown in column 2302. For each item in the list, depending upon the status of respective communication activity such as present, not present, connected, not connected, encryption/authentication method etc. (column 2304), a risk level can be associated as shown in column 2306. In this example, the overall risk level 2308 can then taken to be the highest of the risk levels associated with each of the communication activities.

Information associated with the detected communication activity and/or processed action (e.g., status information) can be stored (e.g., logged) in the client software module, e.g., stored on the hard disk or RAM of the wireless client device 1602 of Figure 16. The logged information can include information about nature of activity such as ad hoc connection, bridging, connection to non-allowed AP etc. The logged information can also include identities of devices associated with the detected activity such as MAC addresses of AP, address of bridging interfaces, MAC address of the wireless communication device etc. Other information such as radio channel over which wireless activity within the detected communication activity occurs, SSID (Service Set Identifier) of an AP, cell identifier (CELLID) of ad hoc connection, encryption and authentication method used for wireless communication within the detected communication activity etc. can also be included. One or more timestamps associated with the detected activity can be stored. Moreover, information associated with the processed action (e.g., event generated, action taken such as disabling the interface, old and new risk levels etc.) can also be logged. Timestamp associated with the action can also be recorded. Other types of information can also be logged.

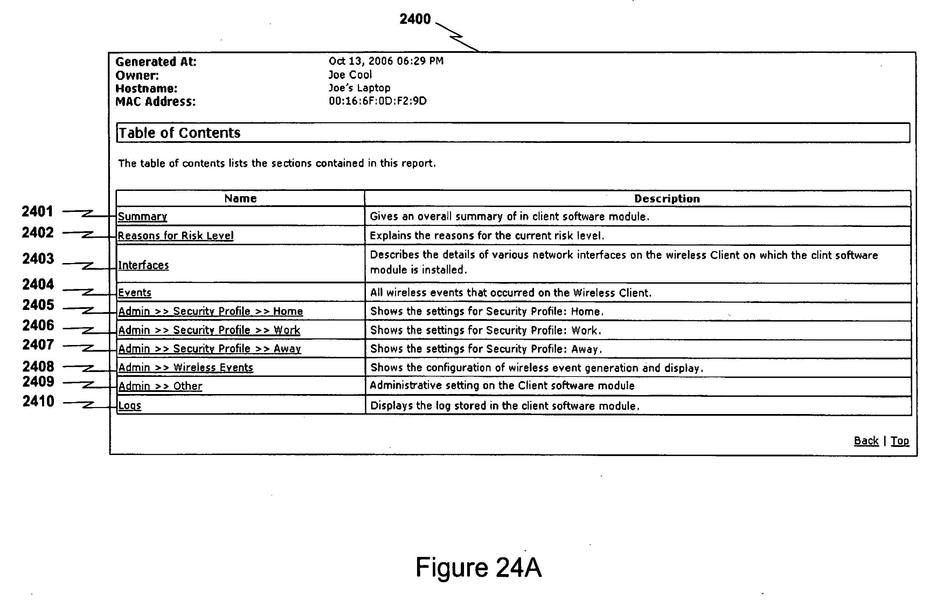

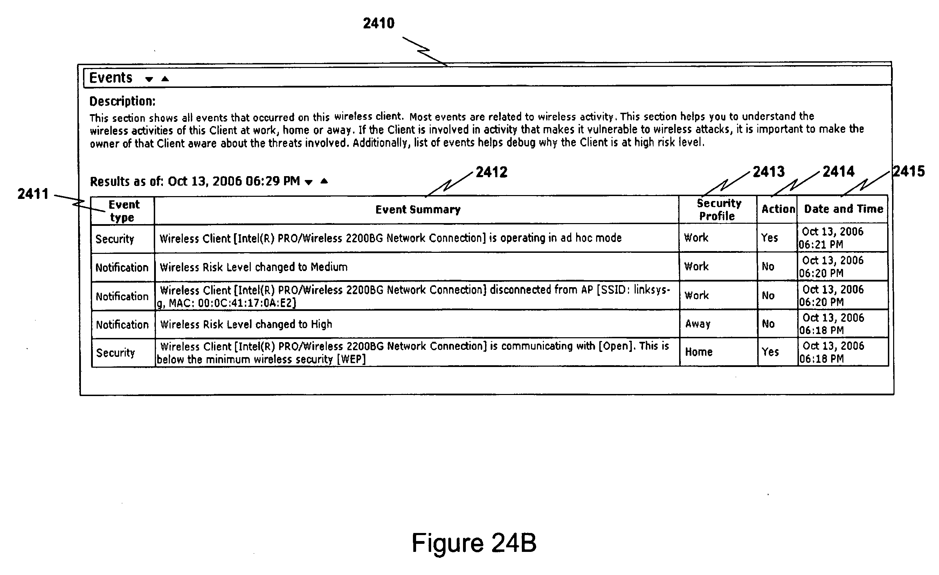

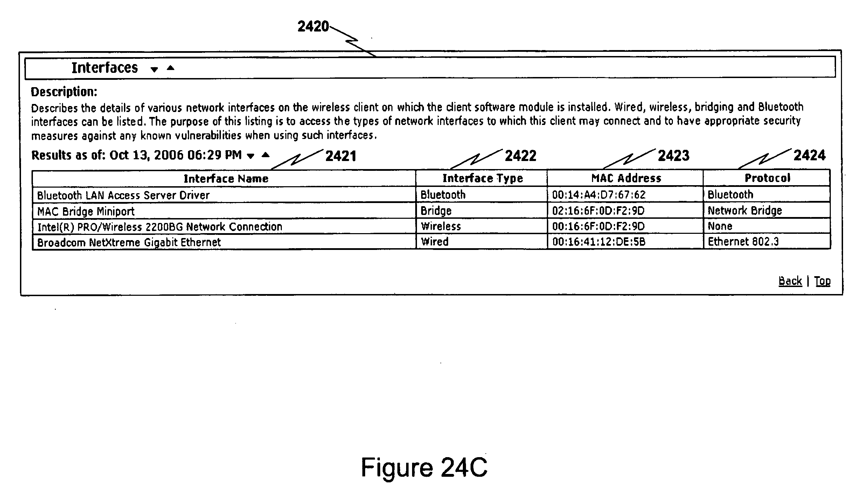

In an embodiment of the present invention, at least a portion of the status information collected as above can be transferred from the client software module to the security server. Some or all of this transferred status information can be provided (e.g., displayed or made available/accessible) on the user interface (e.g., graphical user interface, report interface etc.) of the security server, i.e., within the workspace of the customer entity. For example, the risk level can be displayed as shown in column 2103 in the exemplary computer screenshot 2100 of Figure 21. In an embodiment, status information can be provided in the form of wireless client reports. For example, the report can be created (e.g., on demand when user for example clicks on the wireless client entry displayed on the user interface of the server software module or periodically at predetermined interval) to provide all or part of the status information received from client software module and/or additional status information fetched from the client software module. An exemplary organization of a wireless client report 2400 is shown in Figure 24A. In this embodiment, the various items 2401-2410 in the report 2400 can be provided as hyperlinks. Upon clicking the hyperlinks, detailed information can be provided for specific items as exemplified by reports 2410 and 2420, in Figures 24B and 24C, for the hyperlinks "Events" (2404) and "Interfaces" (2405), respectively. As shown in Figure 24B, information regarding event type, event summary, profile under which event was generated, whether action (e.g., recommended action) was taken, and timestamp associated with event generation is provided in columns 2411 to 2415, respectively. As shown in Figure 24C, information regarding interface details such as interface name, interface type, address of interface and protocol used is provided in columns 2421 to 2424, respectively. Other types of report organization, including and not limited to XML, PDF, are also possible and will be apparent to those with ordinary skill in the art.

The security server can use whole or part of the transferred information from the client software module to make certain decisions about the client device running the client software module. As an example this decision could be sending a "deactivate wireless network interface card" message to the client software module running on the wireless client. As merely as example this decision could be based on the unavailability of log messages from the client device. While a decision based on lack of certain information has been described there can be other decisions based on availability and/or non-availability of other information that can be made by the server software module and would be apparent to those with ordinary skill of art.

The various embodiments of the present invention may be implemented using a computer based system. The computer based system may include a processing unit, an input device, a display unit, and a communication interface. The processing unit may include a microprocessor. The microprocessor may be connected to a data bus. The microprocessor may include any processor-based systems using microcontrollers, digital signal processors (DSP), reduced instruction set circuits (RISC), application specific integrated circuits (ASICs), logic circuits, and any other circuit or processor capable of executing the computer code (program) for performing the functions described herein. The computer based system may also include a memory. The memory may include Random Access Memory (RAM) and/or Read Only Memory (ROM). Alternatively or in addition, the memory may include one or more hard disks and/or one or more portable data storage devices such as floppy disk, compact disk, jump drive and the like. The memory can also be other similar means for storing computer programs, program data etc.

The computer code may include various commands that instruct the processing unit to perform specific operations such as the processes of the various embodiments of the present invention. The set of instructions may be in the form of a software program. The software may be in various forms such as system software or application software. Further, the software may be in the form of a collection of separate programs, a program module within a larger program, or a portion of a program module. The software also may include modular programming in the form of object-oriented programming. The processing of input data by the processing unit may be in response to user commands, or in response to results of previous processing, or in response to a request made by another processing unit.

Although specific embodiments of the present invention have been described, it will be understood by those of ordinary skill in the art that there are other embodiments that are equivalent to the described embodiments. Accordingly, it is to be understood that the invention is not to be limited by the specific illustrated embodiments, but only by the scope of the following claims.

## Claims

1. A Software-as-a-Service, SaaS, based method for providing wireless vulnerability management for local area computer networks, the method comprising:
providing a security server, the security server being hosted by a service provider entity, the security server being coupled to the Internet and having an address in the Internet, the security server being shared by a plurality of distinct customer entities and being adapted to provide analysis of data associated with wireless vulnerability management for a plurality of local area computer networks of the plurality of the customer entities, respectively;
creating a first workspace for wireless vulnerability management for a first customer entity and a second workspace for wireless vulnerability management for a second customer entity on the security server, the creating the workspace being responsive to a first request from the first customer entity and a second request from the second customer entity to subscribe to wireless vulnerability management, the first and the second customer entities being distinct from one another;
receiving configuration information associated with the first workspace for the first customer entity at the security server, the configuration information including identification of a first physical location hierarchy associated with premises of the first customer entity;
receiving configuration information associated with the second workspace for the second customer entity at the security server, the configuration information including identification of a second physical location hierarchy associated with premises of the second customer entity;
associating identities of a first one or more sniffers to be utilized for wireless vulnerability management for the first customer entity with the first workspace and identities of a second one or more sniffers to be utilized for wireless vulnerability management for the second customer entity with the second workspace;
supplying the first one or more sniffers to the first customer entity and the second one or more sniffers to the second customer entity;
receiving a plurality of connection requests at the security server over the Internet from the plurality of sniffers, the plurality of connection requests being initiated by the plurality of sniffers, respectively, subsequent to the plurality of sniffers being connected to local area networks at premises of their customer entities;
identifying automatically from the plurality of connection requests a first set of connection requests associated with the first customer entity based upon the identities of the first one or more sniffers associated with the first workspace and a second set of connection requests associated with the second customer entity based upon the identities of the second one or more sniffers associated with the second workspace;
displaying the first one or more sniffers as active within the first workspace for the first customer entity and the second one or more sniffers as active within the second workspace for the second customer entity, based upon the identified first and second set of connection requests;
receiving input for associating the first one or more sniffers with one or more locations, respectively, in the first physical location hierarchy associated with the first workspace for the first customer entity
receiving input for associating the second one or more sniffers with one or more locations, respectively, in the second physical location hierarchy associated with the second workspace for the second customer entity;
receiving at the security server a first information associated with wireless activity monitored by the first one or more sniffers at premises of the first customer entity, the receiving being receiving over the Internet;
processing the received first information associated with wireless activity within the first workspace for the first customer entity using the security server;
receiving at the security server a second information associated with wireless activity monitored by the second one or more sniffers at premises of the second customer entity, the receiving being receiving over the Internet;
processing the received second information associated with wireless activity within the second workspace for the second customer entity using the security server; and
metering usage of the first workspace and the second workspace for wireless vulnerability management for the first customer entity and the second customer entity.

2. The method of claim 1 wherein the service provider entity, the second customer entity, and the first customer entity being business entities separate from one another.

3. The method of claim 1 wherein the metering the usage of the workspace for the first customer entity and the second customer entity comprising:
tracking usage of the first and the second one or more sniffers at premises of the first customer entity and the second customer entity, respectively, for monitoring of wireless activity; and
charging the first customer entity and the second customer entity periodically based at least upon the usage of the first and the second one or more sniffersrespectively.

4. The method of claim 1 wherein the metering the usage of the workspace for the first customer entity and the second customer entity comprising:
tracking vulnerabilities detected duringa first selected period within the first workspace and a second selected period within the second workspace; and
charging the first customer entity and the second customer entity based at least upon the vulnerabilities detected during the first selected period and the second selected period, respectively.

5. The method of claim 1, and further comprising receiving a selection of one or more modules associated with the first workspace for the first customer entity at the security server.

6. The method of claim 5 wherein the metering the usage of the workspace for the first customer entity comprising charging the first customer entity based at least upon the selection of the one or more modules.

7. The method of claim 5 wherein the one or more modules comprise at least one module selected from the group consisting of scanning module, threat assessment module, remediation module, location tracking module, reporting module, RF visualization module, managed services module, client security management module, and trending and benchmarking module.

8. The method of claim 1 wherein the processing the received first information associated with wireless activity within the first workspace for the first customer entity using the security server comprising:
authenticating the received first information using a digital secret shared between the security server and the first customer entity;
accessing the configuration information associated with the workspace for the first customer entity;
accessing the module selection information associated with the workspace for the first customer entity;
processing the received information based at least upon the configuration information and the module selection information to generate a result information; and
triggering one or more actions based at least upon the result information.

9. The method of claim 1 wherein the receiving the configuration information associated with the first workspace for the first customer entity at the security server further comprising receiving identity information associated with one or more authorized wireless devices within the local area network of the first customer entity.

10. The method of claim 1 wherein the receiving the configuration information associated with the first workspace for the first customer entity at the security server further comprising receiving information associated with notification of one or more wireless vulnerabilities to the first customer entity.

11. The method of claim 1 wherein the first information associated with wireless activity monitored by the first one or more sniffers at premises of the first customer entity including one or more information selected from the group consisting of identities of one or more wirelessly active access points, identities of one or more wirelessly active clients, identities of one or more wireless connections among a plurality of wireless devices, and information associated with one or more radio signal strength parameters associated with [the] wireless activity at the premises of the first customer entity.

12. A Software-as-a-Service, SaaS, based method for availing wireless vulnerability management for local area computer network, the method comprising:
generating a request for wireless vulnerability management for a local area network of a first customer entity;
receiving login information associated with a first workspace for the first customer entity, the first workspace being created on a security server and being for wireless vulnerability management for the local area network of the first customer entity, the security server being hosted by a service provider entity, the security server being coupled to the Internet and having an address in the Internet, the security server being shared by a plurality of distinct customer entities and being adapted to provide analysis of data associated with wireless vulnerability management for a plurality of local area computer networks of the plurality of the customer entities, respectively;
providing configuration information associated with the first workspace for the first customer entity to the security server, the configuration information including identification of a first physical location hierarchy associated with premises of the first customer entity;
receiving first one or more sniffers at premises of the first customer entity;
connecting the first one or more sniffers to the local area network of the first customer entity;
initiating one or more connection requests to the security server over the Internet from the first one or more sniffers, respectively, subsequent to the first one or more sniffers being connected to the local area network of the first customer entity;
transferring identity information from the first one or more sniffers to the security server, the identity information being used to distinguish the one or more connection requests from connection requests received at the security server from a plurality of sets of sniffers at a plurality of customer premises, respectively, and to associate the first one or more sniffers with the first workspace for the first customer entity;
displaying the first one or more sniffers as active within the first workspace for the first customer entity, based at least upon the identified one or more connection requests;
receiving input for associating the first one or more sniffers with one or more locations, respectively, in the first physical location hierarchy associated with the first workspace for the first customer entity;
sending to the security server information associated with wireless activity monitored by the first one or more sniffers at the premises of the first customer entity, the sending being sending over the Internet;
receiving results from processing of the sent information associated with the wireless activity, the processing being using the security server and being performed within the first workspace for the first customer entity and while the security server processes information associated with wireless activity monitored by a second one or more sniffers at premises of a second customer entity, the second customer entity being distinct from the first customer entity, in a second workspace associated with the second customer entity at the security server; and
generating payment authorization based at least upon usage of the first workspace for the first customer entity.

13. The method of any of claims 1 to 12 wherein at least one of the first and/or at least one of the second one or more sniffers is provided using a device that also performs wireless access point functionality.

14. A server computer system adapted to provide wireless vulnerability management as Software-as-a-Service, SaaS, for a plurality of private computer networks of a plurality of customer entities, respectively, the server computer comprising:
a memory unit storing computer executable instructions;
a processor unit for executing the computer executable instructions; and
a communication interface for coupling the server computer system to a computer network and having an address in the Internet;
wherein the computer executable instructions are adapted to facilitate sharing of the server computer among a plurality of distinct customer entities, to provide analysis of data associated with wireless vulnerability management for a plurality of local area computer networks of the plurality of the customer entities, respectively, by performing the steps of:
creating a first workspace for wireless vulnerability management for a first customer entity in the server computer and a second workspace for wireless vulnerability management for a second customer entity in the server computer, the creating the workspace being responsive to a first request from the first customer entity and a second request from the second customer entity to subscribe to wireless vulnerability management, the first and the second customer entities being distinct from one another;
receiving configuration information associated with the first workspace for the first customer entity, the configuration information including identification of a first physical location hierarchy associated with premises of the first customer entity;
receiving configuration information associated with the second workspace for the second customer entity, the configuration information including identification of a second physical location hierarchy associated with premises of the second customer entity;
associating identities of a first one or more sniffers to be utilized for wireless vulnerability management for the first customer entity with the first workspace and identities of a second one or more sniffers to be utilized for wireless vulnerability management for the second customer entity with the second workspace;
receiving a plurality of connection requests at the server computer over the Internet from the plurality of sniffers, the plurality of connection requests being initiated by the plurality of sniffers, respectively, subsequent to the plurality of sniffers being connected to local area networks at premises of their respective customer entities;
identifying automatically from the plurality of connection requests a first set of connection requests associated with the first customer entity based upon the identities of the first one or more sniffers associated with the first workspace and a second set of connection requests associated with the second customer entity based upon the identities of the second one or more sniffers associated with the second workspace;
displaying the first one or more sniffers as active within the first workspace for the first customer entity and the second one or more sniffers as active within the second workspace for the second customer entity, based upon the identified first and second set of connection requests;
receiving input for associating the first one or more sniffers with one or more locations, respectively, in the first physical location hierarchy associated with the first workspace for the first customer entity;
receiving input for associating the second one or more sniffers with one or more locations, respectively, in the second physical location hierarchy associated with the second workspace for the second customer entity;
receiving at the server computer a first information associated with wireless activity monitored by the first one or more sniffers at premises of the first customer entity, the receiving being receiving over the Internet;
processing the received first information associated with wireless activity within the first workspace for the first customer entity;
receiving at the server computer a second information associated with wireless activity monitored by the second one or more sniffers at premises of the second customer entity, the receiving being receiving over the Internet;
processing the received second information associated with wireless activity within the second workspace for the second customer entity; and
metering usage of the first workspace and the second workspace for wireless vulnerability management for the first customer entity and the second customer entity.

15. The system of claim 14 wherein at least one of the first one or more sniffers and/or at least one of the second one or more sniffers is provided using a device that also performs wireless access point functionality.

## Patentansprüche

1. Verfahren, das auf Software-as-a-Service (SaaS) basiert, für die Bereitstellung einer Drahtlosschwachstellenverwaltung für lokale Computernetze, wobei das Verfahren Folgendes umfasst:
Bereitstellen eines Sicherheitsservers, wobei der Sicherheitsserver von einem Dienstleister gehostet wird, wobei der Sicherheitsserver mit dem Internet verbunden ist und über eine Adresse im Internet verfügt, wobei der Sicherheitsserver von einer Vielzahl von getrennten Kundenentitäten gemeinsam genutzt wird und dafür ausgelegt ist, eine Analyse von Daten im Zusammenhang mit der Drahtlosschwachstellenverwaltung für eine Vielzahl von lokalen Computernetzwerken jeweils der Vielzahl der Kundenentitäten bereitzustellen;
Erzeugen eines ersten Arbeitsbereichs für die Drahtlosschwachstellenverwaltung für eine erste Kundenentität und eines zweiten Arbeitsbereichs für die Drahtlosschwachstellenverwaltung für eine zweite Kundenentität auf dem Sicherheitsserver, wobei die Erzeugung des Arbeitsbereichs auf Folgendes reagiert: eine erste Anfrage von der ersten Kundenentität und eine zweite Anfrage von der zweiten Kundenentität, um die Drahtlosschwachstellenverwaltung zu abonnieren, wobei sich die erste und die zweite Kundenentität voneinander unterscheiden;
Empfangen von Konfigurationsinformationen, die dem ersten Arbeitsbereich für die erste Kundenentität am Sicherheitsserver zugeordnet sind; wobei die Konfigurationsinformationen eine Identifikation einer ersten physikalischen Standorthierarchie umfassen, die den Einrichtungen der ersten Kundenentität zugeordnet sind;
Empfangen von Konfigurationsinformationen, die dem zweiten Arbeitsbereich für die zweite Kundenentität am Sicherheitsserver zugeordnet sind; wobei die Konfigurationsinformationen eine Identifikation einer zweiten physikalischen Standorthierarchie umfassen, die den Einrichtungen der zweiten Kundenentität zugeordnet sind;
Zuordnen der Identitäten von einem oder mehreren ersten Schnüfflern, die für die Drahtlosschwachstellenverwaltung für die erste Kundenentität mit dem ersten Arbeitsbereich zu verwenden sind, und der Identitäten von einem oder mehreren zweiten Schnüfflern, die für die Drahtlosschwachstellenverwaltung für die zweite Kundenentität mit dem zweiten Arbeitsbereich zu verwenden sind,
Bereitstellen des oder der ersten Schnüffler für die erste Kundenentität und des oder der zweiten Schnüffler für die zweite Kundenentität,
Empfangen einer Vielzahl von Verbindungsanfragen am Sicherheitsserver über das Internet von der Vielzahl von Schnüfflern; wobei die Vielzahl von Verbindungsanfragen jeweils von der Vielzahl von Schnüfflern initiiert wird und zwar im Anschluss an die Verbindung der Vielzahl von Schnüfflern mit lokalen Netzwerken in den Einrichtungen der Kundenentitäten;
automatisches Identifizieren aus der Vielzahl von Verbindungsanfragen eines ersten Satzes von Verbindungsanfragen, der der ersten Kundenentität zugeordnet ist; und zwar basierend auf den Identitäten des einen oder der mehreren ersten Schnüffler, die dem ersten Arbeitsbereich zugeordnet sind; und eines zweiten Satzes von Verbindungsanfragen, der der zweiten Kundenentität zugeordnet ist; und zwar basierend auf den Identitäten des einen oder der mehreren zweiten Schnüffler, die dem zweiten Arbeitsbereich zugeordnet sind;
Anzeigen des einen oder der mehreren ersten Schnüffler als aktiv innerhalb des ersten Arbeitsbereichs für die erste Kundenentität und des einen oder der mehreren zweiten Schnüffler als aktiv innerhalb des zweiten Arbeitsbereichs für die zweite Kundenentität und zwar basierend auf dem identifizierten ersten und zweiten Satz von Verbindungsanfragen;
Empfangen einer Eingabe zum Zuordnen der einen oder der mehreren ersten Schnüffler jeweils zu einem oder mehreren Standorten in der ersten physischen Standorthierarchie, die dem ersten Arbeitsbereich für die ersten Kundenentität zugeordnet ist;
Empfangen einer Eingabe zum Zuordnen der einen oder der mehreren zweiten Schnüffler jeweils zu einem oder mehreren Standorten in der zweiten physischen Standorthierarchie, die dem zweiten Arbeitsbereich für die zweiten Kundenentität zugeordnet ist;
Empfangen einer ersten Information am Sicherheitsserver, die einer Drahtlosaktivität zugeordnet ist, die von dem einen oder den mehreren ersten Schnüfflern in den Einrichtungen der ersten Kundenentität überwacht wird; wobei der Empfang ein Empfang über das Internet ist;
Verarbeiten der empfangenen ersten Information, die einer Drahtlosaktivität zugeordnet ist, innerhalb des ersten Arbeitsbereichs für die erste Kundenentität unter Verwendung des Sicherheitsservers;
Empfangen einer zweiten Information am Sicherheitsserver, die einer Drahtlosaktivität zugeordnet ist, die von dem einen oder den mehreren zweiten Schnüfflern in den Einrichtungen der zweiten Kundenentität überwacht wird; wobei der Empfang ein Empfang über das Internet ist;
Verarbeiten der empfangenen zweiten Information, die einer Drahtlosaktivität zugeordnet ist, innerhalb des zweiten Arbeitsbereichs für die zweite Kundenentität unter Verwendung des Sicherheitsservers, und
Messen der Nutzung des ersten Arbeitsbereichs und des zweiten Arbeitsbereichs zur Drahtlosschwachstellenverwaltung für die erste Kundenentität und die zweite Kundenentität.

2. Verfahren nach Anspruch 1, wobei der Dienstanbieter, die zweite Kundenentität und die erste Kundenentität Geschäftsentitäten sind, die voneinander trennt sind.

3. Verfahren nach Anspruch 1, wobei die Messung der Nutzung des Arbeitsbereichs für die erste Kundenentität und die zweite Kundenentität Folgendes umfasst:
Verfolgen der Nutzung des einen oder der mehreren ersten und zweiten Schnüffler jeweils in den Einrichtungen der ersten Kundenentität und der zweiten Kundenentität zur Überwachung der Drahtlosaktivität und
regelmässige Gebührenberechnung jeweils für die erste Kundenentität und die zweite Kundenentität mindestens bei der Nutzung des einen oder der mehreren ersten und zweiten Schnüffler.

4. Verfahren nach Anspruch 1, wobei die Messung der Nutzung des Arbeitsbereichs für die erste Kundenentität und die zweite Kundenentität Folgendes umfasst:
Verfolgen von Schwachstellen, die während eines ersten ausgewählten Zeitraums innerhalb des ersten Arbeitsbereichs und eines zweiten ausgewählten Zeitraums innerhalb des zweiten Arbeitsbereichs erfasst werden, und
Gebührenberechnung jeweils für die erste Kundenentität und die zweite Kundenentität mindestens basierend auf den Schwachstellen, die während des ersten ausgewählten Zeitraums und des zweiten ausgewählten Zeitraums erfasst werden.

5. Verfahren nach Anspruch 1, das ferner den Empfang einer Auswahl eines oder mehrerer Module umfasst, die dem ersten Arbeitsbereich für die erste Kundenentität am Sicherheitsserver zugeordnet sind.

6. Verfahren nach Anspruch 5, wobei die Messung der Nutzung des Arbeitsbereichs für die erste Kundenentität die Gebührenberechnung für die erste Kundenentität basierend mindestens auf der Auswahl des einen oder der mehreren Module umfasst.

7. Verfahren nach Anspruch 5, wobei das eine oder die mehreren Module mindestens ein Modul aus der Gruppe umfassen, die aus Folgendem besteht: Scanmodul, Bedrohungsanalysemodul, Sanierungsmodul, Standortverfolgungsmodul, Berichterstattungsmodul, HF-Visualisierungsmodul, Modul für verwaltete Dienste, Client-Sicherheitsverwaltungsmodul und Trend- und Prozessvergleichsmodul.

8. Verfahren nach Anspruch 1, wobei die Verarbeitung der empfangenen ersten Information, die einer Drahtlosaktivität zugeordnet ist, innerhalb des ersten Arbeitsbereichs für die erste Kundenentität unter Verwendung des Sicherheitsservers Folgendes umfasst:
Authentisieren der empfangenen ersten Informationen unter Verwendung eines digitalen Geheimnisses, das von dem Sicherheitsserver und der ersten Kundenentität gemeinsam verwendet wird;
Zugreifen auf die Konfigurationsinformationen, die dem Arbeitsbereich für die erste Kundenentität zugeordnet sind;
Zugreifen auf die Modulauswahlinformationen, die dem Arbeitsbereich für die erste Kundenentität zugeordnet sind;
Verarbeiten der empfangenen Informationen basierend mindestens auf den Konfigurationsinformationen und den Modulauswahlinformationen, um Ergebnisinformationen zu erzeugen, und
Auslösen einer oder mehrerer Aktionen basierend mindestens auf den Ergebnisinformationen.

9. Verfahren nach Anspruch 1, wobei der Empfang der Konfigurationsinformationen, die dem ersten Arbeitsbereich für die erste Kundenentität am Sicherheitsserver zugeordnet sind, ferner den Empfang von Identitätsinformationen umfasst, die einem oder mehreren autorisierten drahtlosen Geräten in dem lokalen Netzwerk der ersten Kundenentität zugeordnet sind.

10. Verfahren nach Anspruch 1, wobei der Empfang der Konfigurationsinformationen, die dem ersten Arbeitsbereich für die erste Kundenentität am Sicherheitsserver zugeordnet sind, ferner den Empfang von Informationen umfasst, die einer Benachrichtigung einer oder mehrerer Drahtlosschwachstellen der ersten Kundenentität zugeordnet sind.

11. Verfahren nach Anspruch 1, wobei die erste Information, die der Drahtlosaktivität zugeordnet ist, die von dem oder den mehreren ersten Schnüfflern in den Einrichtungen der ersten Kundenentität überwacht wird, eine oder mehrere Informationen umfasst, die aus der Gruppe ausgewählt werden, die aus Folgendem besteht: Identitäten eines oder mehrerer drahtloser aktiver Zugriffspunkte, Identitäten eines oder mehrerer aktiver drahtloser Clienten, Identitäten einer oder mehrerer Drahtlosverbindungen zwischen einer Vielzahl von drahtlosen Geräten und Informationen über einen oder mehrere Funksignalstärkeparameter, die der Drahtlosaktivität in den Einrichtungen der ersten Kundenentität zugeordnet sind.

12. Verfahren, das auf Software-as-a-Service (SaaS) basiert, für die Nutzung einer Drahtlosschwachstellenverwaltung für lokale Computernetze, wobei das Verfahren Folgendes umfasst:
Erzeugen einer Anfrage für die Drahtlosschwachstellenverwaltung für ein lokales Netzwerk einer ersten Kundenentität;
Empfangen von Login-Informationen, die einem ersten Arbeitsbereich für die erste Kundenentität zugeordnet sind, wobei der erste Arbeitsbereich auf einem Sicherheitsserver erstellt wird und zur Drahtlosschwachstellenverwaltung für das lokale Netzwerk der ersten Kundenentität dient, wobei der Sicherheitsserver von einem Dienstleister gehostet wird, wobei der Sicherheitsserver mit dem Internet verbunden ist und über eine Adresse im Internet verfügt, wobei der Sicherheitsserver von einer Vielzahl von getrennten Kundenentitäten gemeinsam genutzt wird und dafür ausgelegt ist, eine Analyse von Daten im Zusammenhang mit der Drahtlosschwachstellenverwaltung für eine Vielzahl von lokalen Computernetzwerken jeweils der Vielzahl der Kundenentitäten bereitzustellen;
Bereitstellen von Konfigurationsinformationen, die dem ersten Arbeitsbereich für die erste Kundenentität am Sicherheitsserver zugeordnet sind; wobei die Konfigurationsinformationen eine Identifikation einer ersten physikalischen Standorthierarchie umfassen, die den Einrichtungen der ersten Kundenentität zugeordnet sind;
Empfangen eines oder mehrerer erster Schnüffler in den Einrichtungen der ersten Kundenentität;
Verbinden des einen oder der mehreren ersten Schnüffler mit dem lokalen Netzwerk der ersten Kundenentität;
Initiieren einer oder mehrerer Verbindungsanfragen an den Sicherheitsserver über das Internet jeweils von dem einen oder den mehreren ersten Schnüfflern, nachdem der eine oder die mehreren ersten Schnüffler mit dem lokalen Netzwerk der ersten Kundenentität verbunden wurden;
Übertragen von Identitätsinformationen von dem einen oder den mehreren ersten Schnüfflern zum Sicherheitsserver; wobei die Identitätsinformation dazu verwendet werden, die eine oder mehreren Verbindungsanfragen von Verbindungsanfragen zu unterscheiden, die an dem Sicherheitsserver von einer Vielzahl von Sätzen von Schnüfflern bei einer Vielzahl von Kundeneinrichtungen empfangen werden, und den einen oder die mehreren ersten Schnüffler dem ersten Arbeitsbereich für die erste Kundenentität zuzuordnen,
Anzeigen des einen oder der mehreren ersten Schnüffler als aktiv in dem ersten Arbeitsbereich für die erste Kundenentität, basierend mindestens auf der einen oder den mehreren identifizierten Verbindungsanfragen;
Empfangen einer Eingabe zum Zuordnen der einen oder der mehreren ersten Schnüffler jeweils zu einem oder mehreren Standorten in der ersten physischen Standorthierarchie, die dem ersten Arbeitsbereich für die ersten Kundenentität zugeordnet ist;
Senden von Informationen zum Sicherheitsserver, die einer Drahtlosaktivität zugeordnet sind, die von dem einen oder den mehreren ersten Schnüfflern in den Einrichtungen der ersten Kundenentität überwacht werden, wobei das Senden ein Senden über das Internet ist;
Empfangen von Ergebnissen von der Verarbeitung der gesendeten Informationen, die der Drahtlosaktivität zugeordnet sind, wobei die Verarbeitung unter Verwendung des Sicherheitsservers erfolgt und innerhalb des ersten Arbeitsbereichs für die erste Kundenentität durchgeführt wird, und während der Sicherheitsserver Informationen verarbeitet, die einer Drahtlosaktivität zugeordnet ist, die von dem einen oder den mehreren zweiten Schnüfflern in den Einrichtungen der zweiten Kundenentität überwacht wird; wobei sich die zweite Kundenentität von der ersten Kundenentität in einem zweiten Arbeitsbereich, der der zweiten Kundenentität am Sicherheitsserver zugeordnet ist, unterscheidet, und
Erzeugen einer Zahlungsautorisierung basierend mindestens auf der Nutzung des ersten Arbeitsbereichs für die erste Kundenentität.

13. Verfahren nach einem der Ansprüche 1 bis 12, wobei mindestens einer des ersten und/oder mindestens einer des zweiten des einen oder der mehreren Schnüffler unter Verwendung einer Vorrichtung bereitgestellt wird, die zudem Drahtloszugangspunktfunktionalität bereitstellt.

14. Servercomputersystem, das dafür ausgelegt ist, Drahtlosschwachstellenverwaltung als Software-as-a-Service (SaaS) jeweils für eine Vielzahl von privaten Computernetzwerken einer Vielzahl von Kundenentitäten bereitzustellen, wobei der Servercomputer Folgendes umfasst:
eine Speichereinheit, die computerausführbare Anweisungen speichert;
eine Prozessoreinheit zum Ausführen der computerausführbaren Anweisungen und
eine Kommunikationsschnittstelle zur Kopplung des Servercomputersystems mit einem Computernetzwerk, wobei das Servercomputersystem über eine Adresse im Internet verfügt;
wobei die computerausführbaren Anweisungen dafür ausgelegt sind, eine gemeinsame Nutzung des Servercomputers durch eine Vielzahl von unterschiedlichen Kundenentitäten zu ermöglichen, um eine Analyse der Daten bereitzustellen, die jeweils der Drahtlosschwachstellenverwaltung für eine Vielzahl von lokalen Computernetzwerken aus der Vielzahl der Kundenentitäten zugeordnet ist, indem Folgende Schritte ausgeführt werden:
Erzeugen eines ersten Arbeitsbereichs für die Drahtlosschwachstellenverwaltung für eine erste Kundenentität auf dem Servercomputer und eines zweiten Arbeitsbereichs für die Drahtlosschwachstellenverwaltung für eine zweite Kundenentität auf dem Servercomputer, wobei die Erzeugung des Arbeitsbereichs auf Folgendes reagiert: eine erste Anfrage von der ersten Kundenentität und eine zweite Anfrage von der zweiten Kundenentität, um die Drahtlosschwachstellenverwaltung zu abonnieren, wobei sich die erste und die zweite Kundenentität voneinander unterscheiden;
Empfangen von Konfigurationsinformationen, die dem ersten Arbeitsbereich für die erste Kundenentität zugeordnet sind; wobei die Konfigurationsinformationen eine Identifikation einer ersten physikalischen Standorthierarchie umfassen, die den Einrichtungen der ersten Kundenentität zugeordnet sind;
Empfangen von Konfigurationsinformationen, die dem zweiten Arbeitsbereich für die zweite Kundenentität zugeordnet sind; wobei die Konfigurationsinformationen eine Identifikation einer zweiten physikalischen Standorthierarchie umfassen, die den Einrichtungen der zweiten Kundenentität zugeordnet sind;
Zuordnen der Identitäten von einem oder mehreren ersten Schnüfflern, die für die Drahtlosschwachstellenverwaltung für die erste Kundenentität mit dem ersten Arbeitsbereich zu verwenden sind, und der Identitäten von einem oder mehreren zweiten Schnüfflern, die für die Drahtlosschwachstellenverwaltung für die zweite Kundenentität mit dem zweiten Arbeitsbereich zu verwenden sind;
Empfangen einer Vielzahl von Verbindungsanfragen am Servercomputer über das Internet von der Vielzahl von Schnüfflern; wobei die Vielzahl von Verbindungsanfragen jeweils durch die Vielzahl von Schnüfflers initiiert wird und zwar im Anschluss an die Verbindung der Vielzahl von Schnüfflern mit lokalen Netzwerken in den Einrichtungen der jeweiligen Kundenentitäten;
automatisches Identifizieren aus der Vielzahl von Verbindungsanfragen eines ersten Satzes von Verbindungsanfragen, die der ersten Kundenentität zugeordnet sind, basierend auf den Identitäten des einen oder der mehreren ersten Schnüffler, die dem ersten Arbeitsbereich zugeordnet sind, und eines zweiten Satzes von Verbindungsanfragen, die der zweiten Kundenentität zugeordnet sind, basierend auf den Identitäten des einen oder der mehreren zweiten Schnüffler, die dem zweiten Arbeitsbereich zugeordnet sind,
Anzeigen des einen oder der mehreren ersten Schnüffler als aktiv innerhalb des ersten Arbeitsbereichs für die erste Kundenentität und des einen oder der mehreren zweiten Schnüffler als aktiv innerhalb des zweiten Arbeitsbereichs für die zweite Kundenentität und zwar basierend auf dem identifizierten ersten und zweiten Satz von Verbindungsanfragen;
Empfangen einer Eingabe zum Zuordnen der einen oder der mehreren ersten Schnüffler jeweils zu einem oder mehreren Standorten in der ersten physischen Standorthierarchie, die dem ersten Arbeitsbereich für die ersten Kundenentität zugeordnet ist;
Empfangen einer Eingabe zum Zuordnen der einen oder der mehreren zweiten Schnüffler jeweils zu einem oder mehreren Standorten in der zweiten physischen Standorthierarchie, die dem zweiten Arbeitsbereich für die zweiten Kundenentität zugeordnet ist;
Empfangen am Servercomputer einer ersten Information, die einer Drahtlosaktivität zugeordnet ist, die von dem einen oder den mehreren ersten Schnüfflern in den Einrichtungen der ersten Kundenentität überwacht werden, wobei der Empfang ein Empfang über das Internet ist;
Verarbeiten der empfangenen ersten Information, die einer Drahtlosaktivität zugeordnet ist, innerhalb des ersten Arbeitsbereichs für die erste Kundenentität;
Empfangen am Servercomputer einer zweiten Information, die einer Drahtlosaktivität zugeordnet ist, die von dem einen oder den mehreren zweiten Schnüfflern in den Einrichtungen der zweiten Kundenentität überwacht werden, wobei der Empfang ein Empfang über das Internet ist;
Verarbeiten der empfangenen zweiten Information, die einer Drahtlosaktivität zugeordnet ist, innerhalb des zweiten Arbeitsbereichs für die zweite Kundenentität, und
Messen der Nutzung des ersten Arbeitsbereichs und des zweiten Arbeitsbereichs zur Drahtlosschwachstellenverwaltung für die erste Kundenentität und die zweite Kundenentität.

15. System nach Anspruch 14, wobei mindestens einer des einen oder der mehreren ersten Schnüffler und/oder mindestens einer des einen oder der mehreren zweiten Schnüffler unter Verwendung einer Vorrichtung bereitgestellt wird, die zudem Drahtloszugangspunktfunktionalität bereitstellt.

## Revendications

1. Procédé basé sur le SaaS (Software-as-a-Service ou logiciel sous la forme d'un service hébergé) destiné à la mise en oeuvre d'une gestion de la vulnérabilité sans fil pour des réseaux informatiques locaux, le procédé comportant :
l'étape consistant à mettre en oeuvre un serveur de sécurité, le serveur de sécurité étant hébergé par une entité de fourniture de service, le serveur de sécurité étant couplé sur Internet et ayant une adresse dans Internet, le serveur de sécurité étant partagé par une pluralité d'entités de client distinctes et étant adapté pour fournir une analyse de données associées à la gestion de la vulnérabilité sans fil pour une pluralité de réseaux informatiques locaux de la pluralité des entités de client, respectivement ;
l'étape consistant à créer un premier espace de travail à des fins de gestion de la vulnérabilité sans fil pour une première entité de client et un second espace de travail à des fins de gestion de la vulnérabilité sans fil pour une seconde entité de client sur le serveur de sécurité, l'étape consistant à créer l'espace de travail étant en réponse à une première demande, en provenance de la première entité de client, et à une seconde demande, en provenance de la seconde entité de client, à des fins d'abonnement à la gestion de la vulnérabilité sans fil, les première et seconde entités de client étant distinctes l'une de l'autre ;
l'étape consistant à recevoir des informations de configuration associées au premier espace de travail pour la première entité de client au niveau du serveur de sécurité, les informations de configuration comprenant l'identification d'une première hiérarchie d'emplacements physiques associée à des locaux de la première entité de client ;
l'étape consistant à recevoir des informations de configuration associées au second espace de travail pour la seconde entité de client au niveau du serveur de sécurité, les informations de configuration comprenant l'identification d'une seconde hiérarchie d'emplacements physiques associée à des locaux de la seconde entité de client ;
l'étape consistant à associer des identités d'un ou de plusieurs premiers programmes renifleurs destinés à être utilisés à des fins de gestion de la vulnérabilité sans fil pour la première entité de client avec le premier espace de travail et des identités d'un ou de plusieurs seconds programmes renifleurs destinés à être utilisés à des fins de gestion de la vulnérabilité sans fil pour la seconde entité de client avec le second espace de travail ;
l'étape consistant à fournir lesdits un ou plusieurs premiers programmes renifleurs à la première entité de client et lesdits un ou plusieurs seconds programmes renifleurs à la seconde entité de client ;
l'étape consistant à recevoir une pluralité de demandes de connexion au niveau du serveur de sécurité par Internet en provenance de la pluralité de programmes renifleurs, la pluralité de demandes de connexion étant initialisées par la pluralité de programmes renifleurs, respectivement, suite à la connexion de la pluralité de programmes renifleurs à des réseaux locaux au niveau de locaux de leurs entités de client ;
l'étape consistant à identifier automatiquement à partir de la pluralité de demandes de connexion un premier ensemble de demandes de connexion associées à la première entité de client en fonction des identités desdits un ou plusieurs premiers programmes renifleurs associés au premier espace de travail et un second ensemble de demandes de connexion associées à la seconde entité de client en fonction des identités desdits un ou plusieurs seconds programmes renifleurs associés au second espace de travail ;
l'étape consistant à afficher lesdits un ou plusieurs premiers programmes renifleurs comme étant actifs dans les limites du premier espace de travail pour la première entité de client et lesdits un ou plusieurs seconds programmes renifleurs comme étant actifs dans les limites du second espace de travail pour la seconde entité de client, en fonction des premier et second ensembles identifiés de demandes de connexion ;
l'étape consistant à recevoir une entrée pour l'étape consistant à associer lesdits un ou plusieurs premiers programmes renifleurs avec un ou plusieurs emplacements, respectivement, dans la première hiérarchie d'emplacements physiques associée au premier espace de travail pour la première entité de client ;
l'étape consistant à recevoir une entrée pour l'étape consistant à associer lesdits un ou plusieurs seconds programmes renifleurs avec un ou plusieurs emplacements, respectivement, dans la seconde hiérarchie d'emplacements physiques associée au second espace de travail pour la seconde entité de client ;
l'étape consistant à recevoir au niveau du serveur de sécurité des premières informations associées à l'activité sans fil surveillée par lesdits un ou plusieurs premiers programmes renifleurs au niveau de locaux de la première entité de client, l'étape consistant à recevoir étant l'étape consistant à recevoir par Internet ;
l'étape consistant à traiter les premières informations reçues associées à l'activité sans fil dans les limites du premier espace de travail pour la première entité de client en utilisant le serveur de sécurité ;
l'étape consistant à recevoir au niveau du serveur de sécurité des secondes informations associées à l'activité sans fil surveillée par lesdits un ou plusieurs seconds programmes renifleurs au niveau de locaux de la seconde entité de client, l'étape consistant à recevoir étant l'étape consistant à recevoir par Internet ;
l'étape consistant à traiter les secondes informations reçues associées à l'activité sans fil dans les limites du second espace de travail pour la seconde entité de client en utilisant le serveur de sécurité ; et
l'étape consistant à mesurer l'utilisation du premier espace de travail et du second espace de travail à des fins de gestion de la vulnérabilité sans fil pour la première entité de client et la seconde entité de client.

2. Procédé selon la revendication 1, dans lequel l'entité de fourniture de service, la seconde entité de client, et la première entité de client sont des entités commerciales séparées les unes des autres.

3. Procédé selon la revendication 1, dans lequel l'étape consistant à mesurer l'utilisation de l'espace de travail pour la première entité de client et la seconde entité de client comporte :
l'étape consistant à suivre l'utilisation desdits un ou plusieurs premiers et seconds programmes renifleurs au niveau de locaux de la première entité de client et de la seconde entité de client, respectivement, à des fins de surveillance de l'activité sans fil ; et
l'étape consistant à facturer la première entité de client et la seconde entité de client périodiquement en fonction au moins de l'utilisation desdits un ou plusieurs premiers et seconds programmes renifleurs, respectivement.

4. Procédé selon la revendication 1, dans lequel l'étape consistant à mesurer l'utilisation de l'espace de travail pour la première entité de client et la seconde entité de client comporte :
l'étape consistant à suivre des vulnérabilités détectées au cours d'une première période sélectionnée dans les limites du premier espace de travail et au cours d'une seconde période sélectionnée dans les limites du second espace de travail ; et
l'étape consistant à facturer la première entité de client et la seconde entité de client en fonction au moins des vulnérabilités détectées au cours de la première période sélectionnée et au cours de la seconde période sélectionnée, respectivement.

5. Procédé selon la revendication 1, et comportant par ailleurs l'étape consistant à recevoir une sélection d'un ou de plusieurs modules associés au premier espace de travail pour la première entité de client au niveau du serveur de sécurité.

6. Procédé selon la revendication 5, dans lequel l'étape consistant à mesurer l'utilisation de l'espace de travail pour la première entité de client comporte l'étape consistant à facturer la première entité de client en fonction au moins de la sélection desdits un ou plusieurs modules.

7. Procédé selon la revendication 5, dans lequel lesdits un ou plusieurs modules comportent au moins un module sélectionné dans le groupe constitué par un module de balayage, un module d'évaluation des menaces, un module de correction, un module de suivi de localisation, un module de compte rendu, un module de visualisation à radiofréquence, un module de services gérés, un module de gestion de sécurité client, et un module de tendance et de conduite de tests de performance.

8. Procédé selon la revendication 1, dans lequel l'étape consistant à traiter les premières informations reçues associées à l'activité sans fil dans les limites du premier espace de travail pour la première entité de client utilisant le serveur de sécurité comporte :
l'étape consistant à authentifier les premières informations reçues en utilisant un secret numérique partagé entre le serveur de sécurité et la première entité de client ;
l'étape consistant à accéder aux informations de configuration associées à l'espace de travail pour la première entité de client ;
l'étape consistant à accéder aux informations de sélection de module associées à l'espace de travail pour la première entité de client ;
l'étape consistant à traiter les informations reçues en fonction au moins des informations de configuration et des informations de sélection de module pour générer des informations de résultat ; et
l'étape consistant à déclencher une ou plusieurs actions en fonction au moins des informations de résultat.

9. Procédé selon la revendication 1, dans lequel l'étape consistant à recevoir les informations de configuration associées au premier espace de travail pour la première entité de client au niveau du serveur de sécurité comporte par ailleurs l'étape consistant à recevoir des informations d'identité associées à un ou plusieurs dispositifs sans fil autorisés dans les limites du réseau local de la première entité de client.

10. Procédé selon la revendication 1, dans lequel l'étape consistant à recevoir les informations de configuration associées au premier espace de travail pour la première entité de client au niveau du serveur de sécurité comporte par ailleurs l'étape consistant à recevoir des informations associées à la notification d'une ou de plusieurs vulnérabilités sans fil auprès de la première entité de client.

11. Procédé selon la revendication 1, dans lequel les premières informations associées à l'activité sans fil par lesdits un ou plusieurs premiers programmes renifleurs au niveau de locaux de la première entité de client comprennent une ou plusieurs informations sélectionnées dans le groupe constitué par des identités d'un ou de plusieurs points d'accès actifs sans fil, des identités d'un ou de plusieurs clients actifs sans fil, des identités d'une ou de plusieurs connexions sans fil parmi une pluralité de dispositifs sans fil, et des informations associées à un ou plusieurs paramètres de puissance de signal radio associés à l'activité sans fil au niveau des locaux de la première entité de client.

12. Procédé basé sur le SaaS (Software-as-a-service ou logiciel sous la forme d'un service hébergé) destiné à servir à des fins de gestion de la vulnérabilité sans fil pour un réseau informatique local, le procédé comportant :
l'étape consistant à générer une demande de gestion de la vulnérabilité sans fil pour un réseau local d'une première entité de client ;
l'étape consistant à recevoir des informations de connexion associées à un premier espace de travail pour la première entité de client, le premier espace de travail étant créé sur un serveur de sécurité et étant à des fins de gestion de la vulnérabilité sans fil pour le réseau local de la première entité de client, le serveur de sécurité étant hébergé par une entité de fourniture de service, le serveur de sécurité étant couplé sur Internet et ayant une adresse dans Internet, le serveur de sécurité étant partagé par une pluralité d'entités de client distinctes et étant adapté pour fournir une analyse des données associées à la gestion de la vulnérabilité sans fil pour une pluralité de réseaux informatiques locaux de la pluralité des entités de client, respectivement ;
l'étape consistant à fournir des informations de configuration associées au premier espace de travail pour la première entité de client au serveur de sécurité, les informations de configuration comprenant l'identification d'une première hiérarchie d'emplacements physiques associée à des locaux de la première entité de client ;
l'étape consistant à recevoir un ou plusieurs premiers programmes renifleurs au niveau de locaux de la première entité de client ;
l'étape consistant à connecter lesdits un ou plusieurs premiers programmes renifleurs au réseau local de la première entité de client ;
l'étape consistant à initialiser une ou plusieurs demandes de connexion au serveur de sécurité par Internet en provenance desdits un ou plusieurs premiers programmes renifleurs, respectivement, suite à la connexion desdits un ou plusieurs premiers programmes renifleurs au réseau local de la première entité de client ;
l'étape consistant à transférer des informations d'identité en provenance desdits un ou plusieurs premiers programmes renifleurs jusqu'au serveur de sécurité, les informations d'identité servant à distinguer lesdites une ou plusieurs demandes de connexion parmi les demandes de connexion reçues au niveau du serveur de sécurité en provenance d'une pluralité d'ensembles de programmes renifleurs au niveau d'une pluralité de locaux de client, respectivement, et servant à associer lesdits un ou plusieurs premiers programmes renifleurs au premier espace de travail pour la première entité de client ;
l'étape consistant à afficher lesdits un ou plusieurs premiers programmes renifleurs comme étant actifs dans les limites du premier espace de travail pour la première entité de client, en fonction au moins desdites une ou plusieurs demandes de connexion identifiées ;
l'étape consistant à recevoir une entrée pour l'étape consistant à associer lesdits un ou plusieurs premiers programmes renifleurs avec un ou plusieurs emplacements, respectivement, dans la première hiérarchie d'emplacements physiques associée au premier espace de travail pour la première entité de client ;
l'étape consistant à envoyer au serveur de sécurité des informations associées à l'activité sans fil surveillée par lesdits un ou plusieurs premiers programmes renifleurs au niveau des locaux de la première entité de client, l'étape consistant à envoyer étant l'étape consistant à envoyer par Internet ;
l'étape consistant à recevoir des résultats en provenance du traitement des informations envoyées associées à l'activité sans fil, l'étape consistant à traiter étant l'étape consistant à utiliser le serveur de sécurité et étant exécutée dans les limites du premier espace de travail pour la première entité de client et pendant que le serveur de sécurité traite des informations associées à l'activité sans fil surveillée par desdits un ou plusieurs seconds programmes renifleurs au niveau de locaux d'une seconde entité de client, la seconde entité de client étant distincte de la première entité de client, dans un second espace de travail associé à la seconde entité de client au niveau du serveur de sécurité ; et
l'étape consistant à générer une autorisation de paiement en fonction au moins de l'utilisation du premier espace de travail pour la première entité de client.

13. Procédé selon l'une quelconque des revendications 1 à 12, dans lequel au moins l'un desdits un ou plusieurs premiers programmes renifleurs et/ou au moins l'un desdits un ou plusieurs seconds programmes renifleurs comporte l'utilisation d'un dispositif qui effectue aussi une fonctionnalité de point d'accès sans fil.

14. Système d'ordinateur serveur adapté à des fins de mise en oeuvre d'une gestion de la vulnérabilité sans fil sous la forme d'un SaaS (Software-as-a-Service ou logiciel sous la forme d'un service hébergé), pour une pluralité de réseaux informatiques privés d'une pluralité d'entités de client, respectivement, l'ordinateur serveur comportant :
une unité de mémoire servant à stocker des instructions exécutables sur ordinateur ;
une unité de processeur servant à exécuter les instructions exécutables sur ordinateur ; et
une interface de communication servant à coupler le système d'ordinateur serveur à un réseau informatique et ayant une adresse dans Internet ;
dans lequel les instructions exécutables sur ordinateur sont adaptées pour faciliter le partage de l'ordinateur serveur parmi une pluralité d'entités de client distinctes, pour permettre une analyse des données associées à la gestion de la vulnérabilité sans fil pour une pluralité de réseaux informatiques locaux de la pluralité d'entités de client, respectivement, en effectuant les étapes consistant à :
créer un premier espace de travail à des fins de gestion de la vulnérabilité sans fil pour une première entité de client dans l'ordinateur serveur et un second espace de travail à des fins de gestion de la vulnérabilité sans fil pour une seconde entité de client dans l'ordinateur serveur, l'étape consistant à créer l'espace de travail étant en réponse à une première demande, en provenance de la première entité de client, et à une seconde demande, en provenance de la seconde entité de client, à des fins d'abonnement à la gestion de la vulnérabilité sans fil, les première et seconde entités de client étant distinctes l'une de l'autre ;
recevoir des informations de configuration associées au premier espace de travail pour la première entité de client, les informations de configuration comprenant l'identification d'une première hiérarchie d'emplacements physiques associée à des locaux de la première entité de client ;
recevoir des informations de configuration associées au second espace de travail pour la seconde entité de client, les informations de configuration comprenant l'identification d'une seconde hiérarchie d'emplacements physiques associée à des locaux de la seconde entité de client ;
associer des identités d'un ou de plusieurs premiers programmes renifleurs destinés à être utilisés à des fins de gestion de la vulnérabilité sans fil pour la première entité de client avec le premier espace de travail et des identités d'un ou de plusieurs seconds programmes renifleurs destinés à être utilisés à des fins de gestion de la vulnérabilité sans fil pour la seconde entité de client avec le second espace de travail ;
recevoir une pluralité de demandes de connexion au niveau de l'ordinateur serveur par Internet en provenance de la pluralité de programmes renifleurs, les demandes de connexion de la pluralité de demandes de connexion étant initialisées par la pluralité de programmes renifleurs, respectivement, suite à la connexion de la pluralité de programmes renifleurs à des réseaux locaux au niveau de locaux de leurs entités de client respectives ;
identifier automatiquement à partir de la pluralité de demandes de connexion un premier ensemble de demandes de connexion associées à la première entité de client en fonction des identités desdits un ou plusieurs premiers programmes renifleurs associés au premier espace de travail et un second ensemble de demandes de connexion associées à la seconde entité de client en fonction des identités desdits un ou plusieurs seconds programmes renifleurs associés au second espace de travail ;
afficher lesdits un ou plusieurs premiers programmes renifleurs comme étant actifs dans les limites du premier espace de travail pour la première entité de client et lesdits un ou plusieurs seconds programmes renifleurs comme étant actifs dans les limites du second espace de travail pour la seconde entité de client, en fonction des premier et second ensembles identifiés de demandes de connexion ;
recevoir une entrée pour l'étape consistant à associer lesdits un ou plusieurs premiers programmes renifleurs avec un ou plusieurs emplacements, respectivement, dans la première hiérarchie d'emplacements physiques associée au premier espace de travail pour la première entité de client ;
recevoir une entrée pour l'étape consistant à associer lesdits un ou plusieurs seconds programmes renifleurs avec un ou plusieurs emplacements, respectivement, dans la seconde hiérarchie d'emplacements physiques associée au second espace de travail pour la seconde entité de client ;
recevoir au niveau de l'ordinateur serveur des premières informations associées à l'activité sans fil surveillée par lesdits un ou plusieurs premiers programmes renifleurs au niveau de locaux de la première entité de client, l'étape consistant à recevoir étant l'étape consistant à recevoir par Internet ;
traiter les premières informations reçues associées à l'activité sans fil dans les limites du premier espace de travail pour la première entité de client ;
recevoir au niveau de l'ordinateur serveur des secondes informations associées à l'activité sans fil surveillée par lesdits un ou plusieurs seconds programmes renifleurs au niveau de locaux de la seconde entité de client, l'étape consistant à recevoir étant l'étape consistant à recevoir par Internet ;
traiter les secondes informations reçues associées à l'activité sans fil dans les limites du second espace de travail pour la seconde entité de client ; et
mesurer l'utilisation du premier espace de travail et du second espace de travail à des fins de gestion de la vulnérabilité sans fil pour la première entité de client et la seconde entité de client.

15. Système selon la revendication 14, dans lequel au moins l'un desdits un ou plusieurs premiers programmes renifleurs et/ou au moins l'un desdits un ou plusieurs seconds programmes renifleurs comporte l'utilisation d'un dispositif qui effectue aussi une fonctionnalité de point d'accès sans fil.
